# EUROPEAN PATENT SPECIFICATION

(11) **EP 4 533 393 B1**
(45) Date of publication and mention of the grant of the patent: **15.04.2026**
(21) Application number: 23731552.8
(22) Date of filing: 31.05.2023
(51) Int. Cl.: G06T 7/00, G06T 7/32

(54) **AUTOMATED IMAGE INFERENCE FROM WHOLE-BODY MEDICAL IMAGES**
AUTOMATISIERTE BILDABLEITUNG AUS MEDIZINISCHEN GANZKÖRPERBILDERN
INFÉRENCE AUTOMATISÉE D'IMAGE À PARTIR D'IMAGES MÉDICALES DE TOUT LE CORPS

(30) Priority: 02.06.2022 SE 2250662; 02.06.2022 SE 2250663; 02.06.2022 SE 2250664
(43) Date of publication of application: 09.04.2025
(73) Proprietor: CarcinoQuant AB, 431 53 Mölndal (SE)
(72) Inventor: KULLBERG, Joel, 75337 Uppsala (SE); JÖNSSON, Hanna, 16956 Solna (SE)
(74) Representative: AWA Sweden AB
(86) International application number: PCT/EP2023/064597
(87) International publication number: WO 2023/232897

(56) References cited:
- CA-A1- 3 085 441
- US-A1- 2018 144 472
- US-A1- 2019 122 364

## Description

### TECHNICAL FIELD

The present invention relates in general to methods and devices for processing of body images and in particular to automated image inference methods and devices based on whole-body PET and CT images.

### BACKGROUND

In modern health care, analysis using different imaging techniques, is often used. Common imaging techniques are e.g. Positron Emission Tomography (PET), which uses radioactive so-called radiotracers to identify and measure changes in metabolic processes or other physiological activities. Computed Tomography (CT) use rotating X-rays and detectors placed in a gantry to measure X-ray attenuations in different tissues inside the body. By using image analysis, such images may assist e.g., in diagnosis of different diseases.

However, after a diagnosis is made by a physician or in separate research studies, different types of images can also be used as tools for assisting in treatment planning, measuring of metabolic processes, segmentation of different types of tissues or other types of non-diagnostic inference. Such investigations are often based on comparisons between images of a specific subject with images of other subjects, the same subject but at another instant or some statistical information.

In "Anomaly detection for the individual analysis of brain PET images", by N. Burgos et al, Journal of Medical Imaging (Bellingham) 2021 Mar; 8(2): 024003subject-specific abnormality maps were created from PET images for different stages of Alzheimer's disease. The frame work was validated using the abnormality maps as inputs of a classifier and higher classification accuracies were obtained than when using the PET images themselves.

In "Improved Brain Lesion Segmentation with Anatomical Priors from Healthy Subjects", by C. Liu et al, Medical Image Computing and Computer Assisted Intervention, MICCAI 2021, Lecture Notes in Computer Science, 12901, pp. 186-195, 20921 convolutional neural networks were used for brain lesion segmentation. Information in scans of healthy subjects to improve brain lesion segmentation. A set of reference scans of healthy subjects was registered to each scan with lesions, and the registered reference scans provide reference intensity samples of normal tissue at each voxel. Anomaly score maps were computed for the scan with lesions, and these maps are used as auxiliary inputs to the segmentation network to aid brain lesion segmentation.

In "Tumor Segmentation and Feature Extraction from Whole-Body FDG-PET/CT Using Cascaded 2D and 3D Convolutional Neural Networks", by S. Jemaa et al, Journal of Digital Imaging (2020) 33:888-894, computer-assisted tumor segmentation in ¹⁸F-Fluorodeoxyglucose-positron emission tomography images is discussed. An end-to-end method leveraging 2D and 3D convolutional neural networks is presented to rapidly identify and segment tumors and to extract metabolic information in whole body FDG-PET/CT scans.

In "MRI white matter lesion segmentation using an ensemble of neural networks and overcomplete patch-based voting. Computerized Medical Imaging and Graphics", by M. Herrera, et al, (2018) 69:43-51 https://doi.org/ 10.1016/j.compmedimag.2018.05.001, quantification of white matter hyperintensities (WMH) from Magnetic Resonance Imaging (MRI) was considered as a valuable tool for the analysis of normal brain ageing or neurodegeneration. Automatic extraction of WMH lesions is challenging due to their heterogeneous spatial occurrence, their small size and their diffuse nature. A segmentation was provided based on an ensemble of overcomplete patch-based neural networks.

In "18F-FDG PET/CT Uptake Classification in Lymphoma and Lung Cancer by Using Deep Convolutional Neural Networks", by L. Sibille et al, Radiology: Volume 294: Number 2-February 2020 pp.445-452, Fluorine 18 (18F)2fluorodeoxyglucose (FDG) PET/CT was discussed in connection with configurations of deep convolutional neural networks (CNNs) to localize and classify uptake patterns in patients with lung cancer and lymphoma. A fully automated anatomic localization and classification of fluorine 18-fluorodeoxyglucose PET uptake patterns in foci suspicious and nonsuspicious for cancer in patients with lung cancer and lymphoma by using a convolutional neural network was considered to be feasible and achieves high diagnostic performance when both CT and PET images are used.

In "Just another "Clever Hans"? Neural networks and FDG PET-CT to predict the outcome of patients with breast cancer", by M. Weber et al, European Journal of Nuclear Medicine and Molecular Imaging (2021) 48:3141-3150, the accuracy of a neural network in a cancer form that was not used for its training was evaluated. Although trained on lymphoma and lung cancer, PARS showed good accuracy in the detection of PERCIST measurable lesions. Therefore, the neural network seems not prone to the clever Hans effect. However, the network has poor accuracy if all manually segmented lesions were used as reference standard. Both the whole body and organ-wise MTV were significant prognosticators of overall survival in advanced breast cancer.

One area to which particular care has to be taken is the ability to make reliable comparisons between images of different subjects or different instances. Reliable registration of images to a common space is often a necessity for being able to obtain trustworthy inferences.

The prior art methods of registration are mainly divided into rigid and non-rigid transformations. The rigid transformations include rotation, scaling, translation, and other affine transforms. The non-rigid transformations allow for local warping of a target image in order to find the best fit between for example a target image and a source image.

Generally, image registration may often result in misalignment between two images when aligning the two, an error that may increase with increased complexity of the images to register. Images depicting large areas and/or volumes, e.g. whole-body images or images containing large portions of a body often affect image registration negatively due to increased complexity of the images.

In medical imaging for example, the images may contain a lot of image information and features such as different areas or volumes depicting different tissue information. Typically, the image information is reduced to a few measured parameters subsequent to image processing.

In the published PCT-application, WO2016/072926 A1, a method for image registration and analysis of MRI images are disclosed.

In the published US patent application US 7.259.762 B2, a method for automatically transforming CT studies to a common reference frame to generate a statistical atlas is disclosed. Selected CT studies are transformed to a common reference frame and subsequently voxel-to-voxel correspondence is established between a CT and the statistical atlas.

US 2019/0122364 A1 discloses a system that facilitates image analysis using a deviation from normal data. The normal data can be age-matched normal patient image data from a plurality of pediatric patients that belong to a plurality of pediatric age groups. Both the normal patient image data and abnormal patient image data are registered to an atlas to form a standardized normal/abnormal patient grouping. A deviation map associated with the abnormal patient image data can be determined in the standardized abnormal patient grouping based on the standardized age-matched normal patient grouping to form a deviation image data collection. A neural network can be trained on the deviation image data collection to determine one or more clinical conditions in patient image data.

US 2018/0144472 A1 relates to a method for whole body image registration and a method for analyzing images. The image registration comprises articulated, piece-wise affine registration of bone sections, registration of water images with constraints on bone and registration of fat images with constraints on bone and water. The registration is performed based on a variational approach, which provides a deformation field by minimizing an energy metric.

However, there are requirements for improved registering methods.

Another aspect that may reduce the ability to make reliable comparisons is the limited amount of available comparison material. Since medical images e.g. PET and CT are radiation-based imaging methods, and require large and expensive equipment, PET and CT images are only recorded when being absolutely necessary. This means that the amount of available image comparison data is very limited, and is in general always associated with subjects having or being suspected to have different kinds of diseases. Statistical information deduced from such image data may be difficult to valuate in a proper way.

### SUMMARY

A general object is to improve image inference based on medical images.

The above object is achieved by methods and devices according to the independent claims. Preferred embodiments are defined in dependent claims.

In general words, in a first aspect, a method for preparing a tool for automated image inference comprises providing of a neural network to be trained. Multiple training subject data sets are obtained. Each training subject data set comprises at least one respective whole-body medical image of an associated subject and an assigned image inference of the associated subject. The method further comprises at least one of two part methods. In a first part method, the associated subject is a training subject in a respective set common image space of a common image, wherein each of the multiple training subject data sets further comprises at least one whole-body image of voxel-wise state of health, associated with the associated training subject, registered to the set common image space. The registered whole-body image(s) of voxel-wise state of health is(are) included into a respective training subject data set. The whole-body image(s) of voxel-wise state of health comprise(s) a whole-body divergence image that is based on a comparison between the whole-body medical image of the respective associated training subject and collective image information of a group of subjects. The step of obtaining multiple training subject data sets comprises obtaining of at least one whole-body image of voxel-wise state of health registered to the set common image space, in turn comprising obtaining whole-body medical images for the group of subjects. Whole-body medical images of the whole-body medical images for the group of subjects are registering to the set common image space by a common image registering routine. The whole-body divergence image is created by comparing the whole-body medical image of the respective associated training subject with registered whole-body medical images for the group of subjects. The common image registering routine comprises at least two part registering steps. In a second part method, the at least one respective whole-body medical image are whole-body medical images of at least two instances. The assigned image inference is an assigned image inference for at least one of the at least two instances. The second part method further comprises registering of whole-body medical images of the at least two instances and said assigned image inference for each subject to a set common image space of a set common image by use of a common image registering routine. In at least one of these part registering steps of any of the first and second part methods, images of different respective tissues in the whole-body medical images are obtained, and a part registering to the set common image space is performed by optimizing a weighted cost function. The cost function comprises a correlation of the images of respective tissues of the whole-body medical images to images of respective tissues of the set common image as well as a correlation of the whole-body medical image to a whole-body medical image of the set common image. Thereby, deformation parameters are obtained, defining the part registration for the whole-body medical image. The deformation parameters of one part registration step, except for a last part registration step, is used in a subsequent part registration step. The deformation parameters of the last part registration step is used for creating final registered whole-body medical images. Finally, the neural network is trained with the training subject data sets into a trained neural network.

In a second aspect, a method for automated image inference comprises providing of a trained neural network. The trained neural network is trained with training subject data sets. The training subject data sets comprises at least one respective whole-body medical image, and an assigned image inference of an associated subject. A subject data set of at least one whole-body medical image of an associated subject is obtained. The trained neural network is operated with the subject data set as input data, resulting in an image inference. The method further comprises at least one of two part methods. In the first part method, the training subject data sets further comprises at least one training whole-body image of voxel-wise state of health, all registered to a set common image space of a set common image. The training whole-body image(s) of voxel-wise state of health comprise(s) a whole-body divergence image based on a comparison between the whole-body medical image of the respective associated training subject and collective image information of a group of subjects. The obtained subject data set is a subject data set comprising at least one whole-body medical image of an associated subject registered to a common image space of a common image, and at least one whole-body image of whole-body image of voxel-wise state of health registered to the common image space. The whole-body image(s) of voxel-wise state of health comprise(s) a whole-body divergence image that is based on a comparison between the whole-body medical image of the respective associated training subject and collective image information of a group of subjects. The obtaining of the subject data set comprises obtaining of the whole-body image(s) of voxel-wise state of health registered to the common image space, in turn comprising obtaining of whole-body medical images for the group of subjects. Whole-body medical images of the whole-body medical images for the group of subjects are registered to the common image space by a common image registering routine. The whole-body divergence image is created by comparing the whole-body medical image of the associated subject with registered whole-body medical images for the group of subjects. In the second part method, the training subject data sets are training subject data sets of at least one respective whole-body medical image of at least two, non-simultaneous instances. The assigned image inference is an assigned image inference of an associated subject for at least one of said at least two instances for each training data set, registered to a respective set common image space. The subject data set is a subject data set of at least one whole-body medical image of at least two, non-simultaneous, instances of an associated subject. The second part method further comprises registering of whole-body medical images of the at least two instances to a common image space of a common image by use of a common image registering routine. The common image registering routine of any of the first and second part methods comprises at least two part registering steps. In at least one of these part registering steps images of different respective tissues in the whole-body medical images are obtained. A part registering to the common space is performed by optimizing a weighted cost function comprising a correlation of the images of respective tissues of the whole-body medical image to images of respective tissues of the common image as well as a correlation of the whole-body medical images to a whole-body medical image of the common image. Thereby deformation parameters are obtained, defining the part registration for the whole-body medical image. The deformation parameters of one part registration step, except for a last part registration step, is used in a subsequent part registration step and the deformation parameters of the last part registration step is used for creating final registered whole-body medical images.

In a third aspect, a tool for automated image inference comprises a processor, an input for subject data sets, an output for subject image inference and computer program instructions. The computer program instructions, when being executed by the processor, cause the processor to form a registered subject data set from a subject data set of at least one whole-body medical image. The computer program instructions, when being executed by the processor, further cause the processor to operate a trained neural network with the registered subject data set as input data, resulting in an image inference being provided to the output. The trained neural network is trained with registered training subject data sets of at least one respective whole-body medical image and an associated assigned image inference of an associated subject. The computer program instructions, when being executed by the processor, further cause the processor to operate a trained neural network with the registered subject data set as input data, resulting in an image inference being provided to the output. The computer program instructions, when being executed by the processor, further cause at least one of two part methods. In the first part method, the subject data set is a subject data set in a common space of a common image. The subject data set comprises at least one whole-body image of voxel-wise state of health obtained by the input, in a common space of a common image. The training subject data sets further comprises at least one training whole-body image of voxel-wise state of health, all registered to a set common image space of a set common image, where the at least one training whole-body image of voxel-wise state of health comprises a whole-body divergence image based on a comparison between the whole-body medical image of the respective associated training subject and collective image information of a group of subjects. The whole-body image(s) of voxel-wise state of health comprise(s) a whole-body divergence image that is based on a comparison between the whole-body medical image of the respective associated training subject and collective image information of a group of subjects. The computer program instructions, when being executed by the processor cause the processor to obtain whole-body medical images for the group of subjects, to register whole-body medical images of the whole-body medical images for the group of subjects to the common image space by a common image registering routine, and to create the whole-body divergence image by comparing the whole-body medical image of the associated subject with registered whole-body medical images for the group of subjects. In the second part method, the subject data set is a subject data set in a common space of a common image. The computer program instructions, when being executed by the processor, cause the processor to form a registered subject data set from at least one whole-body medical image, obtained by the input, of at least two, non-simultaneous, instances of an associated subject. The computer program instructions, when being executed by said processor, cause the processor to perform a registering of whole-body medical images of the at least two instances to a common image space of a common image by use of a common image registering routine. The trained neural network is trained with training subject data sets of at least one respective whole-body medical image of at least two, non-simultaneous, instances, and an assigned image inference of an associated subject for at least one of the at least two instances for each subject data set, registered to a respective set common image space. The common image registering routine of any of the first and second part methods comprises at least two part registering steps. In at least one of these part registering steps, images of different respective tissues in the whole-body medical images are obtained. A part registering to the common space is performed by optimizing a weighted cost function comprising a correlation of the images of respective tissues of the whole-body medical image to images of respective tissues of the common image as well as a correlation of the whole-body medical images to a whole-body medical image of the common image. Thereby deformation parameters are obtained, defining the part registration for the whole-body medical image. The deformation parameters of one part registration step, except for a last part registration step, is used in a subsequent part registration step and the deformation parameters of the last part registration step is used for creating final registered whole-body medical images. The computer program instructions, when being executed by the processor further cause the processor to operate a trained neural network with the registered subject data set as input data, resulting in an image inference being provided to the output. The trained neural network is trained with registered training subject data sets of at least one respective whole-body medical image, an associated assigned image inference of an associated subject and at least one training whole-body image of voxel-wise state of health, all registered to a set common image space of a set common image, where the at least one training whole-body image of voxel-wise state of health comprises a whole-body divergence image based on a comparison between the whole-body medical image of the respective associated training subject and collective image information of a group of subjects.

In a fourth aspect, computer program instructions, which when being executed by a processor, cause the processor to form a registered subject data set from an obtained subject data set of at least one whole-body medical image. whereby the computer program instructions, when being executed by the processor, further cause the processor to operate a trained neural network with the registered subject data set as input data, resulting in an image inference being provided to the output. The trained neural network is trained with registered training subject data sets of at least one respective whole-body medical image, an associated assigned image inference of an associated subject. The computer program instructions, when being executed by the processor, further cause the processor to operate a trained neural network with the registered subject data set as input data, resulting in an image inference being provided to the output. The computer program instructions, when being executed by the processor, further cause at least one of two part methods to occur. In the first part method, the subject data set is a subject data set in a common space of a common image. The subject data set comprises at least one whole-body image of voxel-wise state of health, in a common space of a common image. The training subject data sets further comprises at least one training whole-body image of voxel-wise state of health, all registered to a set common image space of a set common image, where the at least one training whole-body image of voxel-wise state of health comprises a whole-body divergence image based on a comparison between the whole-body medical image of the respective associated training subject and collective image information of a group of subjects. The whole-body image(s) of voxel-wise state of health comprise(s) a whole-body divergence image that is based on a comparison between the whole-body medical image of the respective associated training subject and collective image information of a group of subjects. The computer program instructions further cause the processor to obtain whole-body medical images for the group of subjects, to register whole-body medical images of the whole-body medical images for the group of subjects to the common image space by a common image registering routine, and to create the whole-body divergence image by comparing the whole-body medical image of the associated subject with registered whole-body medical images for the group of subjects. In the second part method, the subject data set (209) is a subject data set in a common space of a common image. The computer program instructions, when being executed by said processor, cause the processor to form a registered subject data set from at least one whole-body medical image, obtained by the input, of at least two, non-simultaneous, instances of an associated subject. The computer program instructions, when being executed by the processor, cause the processor to perform a registering of whole-body medical images of the at least two instances to a common image space of a common image by use of a common image registering routine. The trained neural network is trained with training subject data sets of at least one respective whole-body medical image of at least two, non-simultaneous, instances, and an assigned image inference of an associated subject for at least one of the at least two instances for each subject data set, registered to a respective set common image space. The common image registering routine of any of the first and second part methods comprises at least two part registering steps. In ate least one of these registering steps, images of different respective tissues in the whole-body medical images are obtained. A part registering to the common space is performed by optimizing a weighted cost function comprising a correlation of the images of respective tissues of the whole-body medical image to images of respective tissues of the common image as well as a correlation of the whole-body medical images to a whole-body medical image of the common image. Thereby deformation parameters are obtained, defining the part registration for the whole-body medical image. The deformation parameters of one part registration step, except for a last part registration step, is used in a subsequent part registration step and the deformation parameters of the last part registration step is used for creating final registered whole-body medical images. The computer program instructions further cause the processor to operate a trained neural network with the registered subject data set as input data, resulting in an image inference being provided. The trained neural network is trained with registered training subject data sets of at least one respective whole-body medical image, an associated assigned image inference of an associated subject and at least one training whole-body image of voxel-wise state of health, all registered to a set common image space of a set common image. The training whole-body image(s) of voxel-wise state of health comprise(s) a whole-body divergence image based on a comparison between the whole-body medical image of the respective associated training subject and collective image information of a group of subjects.

One advantage with the proposed technology is that the reliability of inferences based on medical images can be improved. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a flow diagram of steps of an embodiment of a method for creating a whole-body health statistical atlas;
FIG. 2 is a flow diagram of steps of an embodiment of a method for creating a whole-body divergence image;
FIG. 3 is schematic illustration of an embodiment of a tool for creating a whole-body health statistical atlas;
FIG. 4 is a flow diagram of steps illustrating the use of a neural network;
FIG. 5 is a schematic illustration of an example of training and operating a neural network for automated image inference based on only whole-body medical images;
FIG. 6 is a schematic illustration of an embodiment of training and operating a neural network for automated image inference based on whole-body medical images as well as whole-body image of voxel-wise state of health;
FIG. 7 is a flow diagram of steps of an embodiment of a method for preparing a tool for automated image inference;
FIG. 8 is a flow diagram of steps of an embodiment of a method for automated image inference;
FIG. 9 is a flow diagram of steps of another embodiment of a method for preparing a tool for automated image inference;
FIG. 10 is a flow diagram of steps of another embodiment of a method for automated image inference;
FIG. 11 is schematic illustration of an embodiment of a tool for tool for automated image inference;
FIG. 12 is a schematic illustration of an embodiment of training and operating a neural network for automated image inference based on whole-body medical images of a subject recorded at different instances;
FIG. 13 is a flow diagram of steps of yet another embodiment of a method for preparing a tool for automated image inference;
FIG. 14 is a flow diagram of steps of yet another embodiment of a method for automated image inference;
FIG. 15 schematically illustrates a method according to at least one embodiment;
FIG. 16 schematically illustrates a method according to at least one embodiment;
FIG. 17 schematically illustrates a method according to at least one embodiment;
FIG. 18 schematically illustrates the different images according to at least one embodiment;
FIG. 19 schematically illustrates a comparison of the first image to the second image after registration of the first image to the second image according to at least one embodiment;
FIG. 20 schematically illustrates a comparison of the first image to a set of second images after registration of the first image to the set of second images according at least one embodiment;
FIG. 21 schematically illustrates a registration of a plurality of first images to a second image according to at least one embodiment;
FIG. 22 schematically illustrates acquisition of an image in an x-ray study according to at least one embodiment; and
FIG. 23 is a combination of the examples of Figs. 5 and 12.

The figures are not necessarily to scale, and generally only show parts that are necessary in order to elucidate the inventive concept, wherein other parts may be omitted or merely suggested.

### DETAILED DESCRIPTION

Throughout the drawings, the same reference numbers are used for similar or corresponding elements.

One way, in modern technology, to improve analysis of complex sets of data is to use neural networks, also referred to as artificial intelligence or machine learning. A neural network structure, which may be rather general in its structure, is created. This neural network is then trained by a set of training data, where both intended input data as well as concluded results are comprised. The operation quality of the neural network when being used may to some part depend on the selected network structure, but the main contribution to the quality of the result when it is used depends on the selection of input data and the quality of the conclusions used during training. In general, the more training data that is used, the better results will be achieved.

Attempts to use neural networks for analyzing medical images, e.g. PET and CT images, have been performed. The standard solution is to use deep learning of a neural network with a training set of registered medical images associated with assigned image inference, e.g. a lesion segmentation. Medical images of a subject are then used as input data to the trained neural network, resulting in a suggested image inference. However, the results, although usually relatively useful, are still not extremely impressive.

The challenges are many. In cancer segmentation, small tumors give rise to sparse signals, which may disappear into the surrounding signals. Different standardized uptake values for contrast substances in different parts may cause differing signal levels. Biological intra or inter tumor heterogeneity concerning location, structure, perfusion, or metabolism may also influence the results. Brown fat and brain and heart constitutes high uptake regions and may be overvaluated. Time dependent activities in e.g., blood, liver, kidneys or bladder may disturb. Furthermore, different scanning details, varying from scanner to scanner may influence the results, and in particular if e.g., CT scans were performed with or without contrast. Also, implants may disturb the analysis.

One important factor for this partial failure is probably the above-mentioned limitation of available data that may be used as training input data and training inference. In order to improve the neural network results, the quality of the training input data and/or the amount of contributing input data has to be improved.

One factor that might improve the quality of a trained image-based neural network is to provide statistical information that may improve the ability for the neural network to become well-trained. Such statistical information, connected to the state of health can be provided for all parts of a body. In a medical image, each voxel can be associated to such statistical information. In the present disclosure, the term "whole-body image of voxel-wise state of health" is used as a common term of different such image-associated statistical information. Such whole-body image of voxel-wise state of health may be possible for the neural network to obtain on its own, by use of the image input data. However, if the amount of input data is limited, the optimization of the neural network both considering such whole-body image of voxel-wise state of health as well as the basic image information may be difficult to achieve. By instead supply the neural network with such explicit whole-body image of voxel-wise state of health, the training of the neural network regarding the basic image analysis may be facilitated. In the present disclosure, such whole-body image of voxel-wise state of health comprises information about health and/or diseases and in order to fit into the use together with whole-body medical images, e.g., CT and PET images.

Medical images may be of different types. Computed Tomography (CT) generates a tomographic image of x-ray attenuation of body tissues. CT is useful for many medical examinations and the backbone in cancer diagnostics and follow up. Photon counting CT scanners have recently been introduced allowing improved image resolution, reduced exposure to ionising radiation as well as more detailed analysis of x-ray attenuation properties, i.e. as multispectral or multi-channel images.

PET imaging allows both static and dynamic imaging of PET tracer concentrations. Many different PET tracers are available. FDG allows studies of tissue glucose metabolism and is very useful in oncology for primary diagnosis and treatment response assessment. One limitation of FDG is that it is unspecific to cancer and increased FDG uptake on PET image might indicate other physiological processes (for example inflammation). PET imaging allows molecular visualisation of specific receptors or antigens. PSMA is a more recently developed tracer that allows good sensitivity in prostate cancer diagnosis. PSMA accumulates specifically in tumor, as it binds to antigens expressed on the cancer cells. F18-FES is a PET tracer that specifically target oestrogen receptors which allows visualisation of oestrogen-positive lesions. Recent advances in PET scanner development have improved detector sensitivity and time of flight performance. Whole-body or large coverage PET scanners further allow improved PET imaging efficiency.

MRI uses strong magnetic fields and radio waves to generate tomographic images of the body in a non-invasive manner without the use of ionising radiation. A wide range of image contrast mechanisms can be used including water-fat MRI, T1- and T2-weighting and diffusion. MRI with both relative and quantitative image information is possible.

Imaging systems can also be integrated for example in PET-CT and PET-MR scanners allowing simultaneous multimodal imaging. Images from these systems can be considered to acquire images with good spatial alignment. They can therefore be considered registered. The image alignments might also for some scans and/or body regions and/or applications need improvement. In this case a limited deformation or registration of one image can be applied to make them more spatially aligned.

Multi-modal images can in proceeding processing be handled as to different signal channels. It is also possible to combine them into a synthetic combined image. This might be very complex to interpret for a human observer. A combined image might however be analysed in an efficient manner by for example a machine learning approach.

The quality of the whole-body image of voxel-wise state of health as well as for whole-body medical images also depends on the registration thereof. Registration approaches according to the background art presented further above may be sufficient in many cases. However, improved registration quality may together with the use of whole-body image of voxel-wise state of health give a synergetic effect.

Image registration can be used to achieve point-to-point correspondence between images. This can be used to standardize and merge information from groups of subjects and datasets. This can for example be used to create image atlases with voxel-wise statistical information on image properties or image derived properties and a subject's state of health.

One preferred routine for performing a whole-body image registering, and therefore also indirectly for whole-body image of voxel-wise state of health is presented in Appendix A. In short, this whole-body image registering routine comprises at least two part registering steps. In at least one of the part registering steps, images of different respective tissues in the whole-body medical images are obtained. A part registering to a common image space is performed. This part registration is performed by optimizing a weighted cost function: The cost function comprises a correlation of the images of respective tissues of the whole-body medical images to images of respective tissues of the common image as well as a correlation of the whole-body medical image to a whole-body medical image of the common image. Thereby deformation parameters are obtained, defining the part registration for the whole-body medical image.

In particular embodiments, the whole-body medical images are CT whole-body images or alternatively both CT and PET whole-body images. When both CT and PET whole-body images are used, the deformation parameters obtained by the CT whole-body images can be used for defining the whole-body PET image as well.

The deformation parameters of one part registration step are used in a subsequent part registration step. This is of course not valid for the very last part registration step. Instead, the deformation parameters of the last part registration step are used for creating final registered whole-body medical images.

More details and preferred embodiments of registration routines, exemplified by the particular application to CT and PET images, are presented in Appendix A, together with drawings supporting this appendix.

Image registration according to these principles can also be performed using a deep learning approach where a neural network is trained using example image data or through reinforcement learning using a loss function similar to the cost functions and/or optimization criterions used in the method described in Appendix A.

One approach to boost the learning efficiency of the neural network is to add prior knowledge of what healthy bodies look like. Such information may be extracted beforehand, and the learning process of the neural network does thereby gain a direct reference to what is "normal" and does not need to waste learning efforts to find such information through the provided training medical images. The health information can easily be provided as a whole-body health statistical atlas. Such a whole-body health statistical atlas may also be useful in other situations as well.

One problem with obtaining a whole-body health statistical atlas is that there are very few medical images, e.g. CT and PET images, of fully healthy subjects. A large majority of the available images comprises some "non-normal" parts. Therefore, a pure averaging of available medical images, regardless of if they are images of perfect healthy subjects or not, will introduce some false information into the whole-body health statistical atlas.

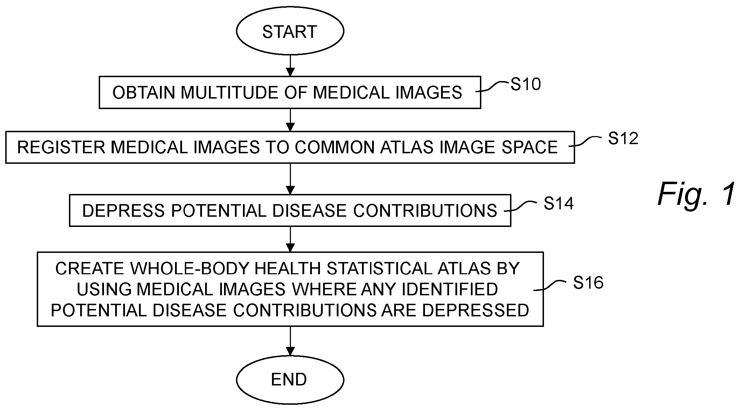

Figure 1 illustrates a flow diagram of steps of an embodiment of a method for creating a whole-body health statistical atlas. In step S10, at least one whole-body medical image of a multitude of subjects are obtained. These whole-body medical images may or may not comprise disease-influenced parts. In step S12, whole-body medical images of the whole-body medical images of the multitude of subjects are registered to a common atlas image space of a common atlas image. All whole-body medical images of the multitude of subjects that are not already in the common atlas image space are registered. In a particular embodiment, all whole-body medical images of the multitude of subjects or all except one of whole-body medical images of the multitude of subjects are registered. The latter option is the case when the image space of one of the whole-body medical images in fact is the common atlas image space. Preferably, the step of registering is performed with the image registering routine presented here above and in Appendix A, where the common image space is the common atlas image space. Such a registration thus creates modified images that are aligned to each other. This makes it possible to compare the different subject images in a more objective manner. In step S14, any potential disease contributions are depressed from the whole-body medical images of the multitude of subjects. In such a way, non-normal contributions are excluded. In step S16 the whole-body health statistical atlas is created in the common atlas image space. This is performed by using the registered and potential-disease-contribution depressed whole-body medical images of the multitude of subjects. This creation does therefore not include potential disease information.

In the flow diagram, the step S14 is illustrated as following on the registration step S12. However, the opposite relation may also be feasible, i.e. where step S12 occurs after step S 14.

In one embodiment, the at least one whole-body medical image comprises a whole-body CT image and optionally an additional whole-body PET image.

In one embodiment, the common atlas image space is the image space of a whole-body medical image of one of the multitude of subjects.

In one embodiment, in step S14, the potential disease contributions are identified by human intervention. A skilled physician may point out abnormalities in the images, and these parts may then be assumed to involve some non-normal image information. Preferably, the potential disease contributions in the whole-body medical image of the multitude of subjects are identified, as a part of step S14, by defining of an envelope image volume of the whole-body medical image enclosing a volume that is identified by human intervention as a potential disease volume. The depressing of any identified potential disease contributions from the whole-body medical image information of the multitude of subjects then comprises removing of the envelope image volume not to be used during the step of creating the whole-body health statistical atlas. The information within this volume is thus requested not to be entered into the whole-body health statistical atlas.

Preferably, the envelope image volume encloses the volume that is identified by a human as a potential disease volume with a margin of at least one voxel in each direction, and preferably with at least two voxels in each direction. This gives a safety margin in order to securely remove any disease image contributions.

The action of "removing" a part of an image should be interpreted as excluding these voxels to be included in any following averaging or other statistical procedure.

In one embodiment, in step S14, the potential disease contributions are identified by statistical ways. Any potential disease contributions in the whole-body medical image of the multitude of subjects may be found in a more automated manner. To this end, step S14 is performed in the potential disease contributions in the whole-body medical image of the multitude of subjects are identified by comparing voxels of single whole-body medical images with mean, median, mode, or other nonparametric measures in view of distribution or variance measures of the whole-body medical image of the multitude of subjects. By this, voxels that differs considerably compared to what is usual, in the light of a normal uncertainty distribution, may be excluded from being used in the creation step. Instead, they may be treated to assume values according to the normal distributions. In other words, in the step S14, the depressing of any identified potential disease contributions from the whole-body medical image of the multitude of subjects preferably comprises treating of identified voxels according to distributions for a healthy synthetic subject.

Preferably, a z-score approach can be used in the above scenario. In other words, in one embodiment, the identifying of any potential disease contributions in the whole-body medical image of the multitude of subjects comprises determination of z-scores of the whole-body medical image. The z-scores comprise subject image intensity differences from an average-type measure for the group of subjects, scaled typically by a standard divergence of intensities for the group of subjects. The step S14 of depressing any identified potential disease contributions from the whole-body medical image of the multitude of subjects comprises removing of voxels having a z-score falling outside a predetermined range.

As mentioned above, the whole-body health statistical atlas can be useful in many applications, e.g. for image segmentation, image classification, image regression or for visual image evaluation. A useful tool that is often requested is an image that visualize parts of a whole body that is distinguished from normal conditions. In other words, a whole-body divergence image may often be of benefit. The creation of such a whole-body divergence image can be based on the whole-body health statistical atlas described above.

A whole-body divergence image may also be referred to as a whole-body deviation image.

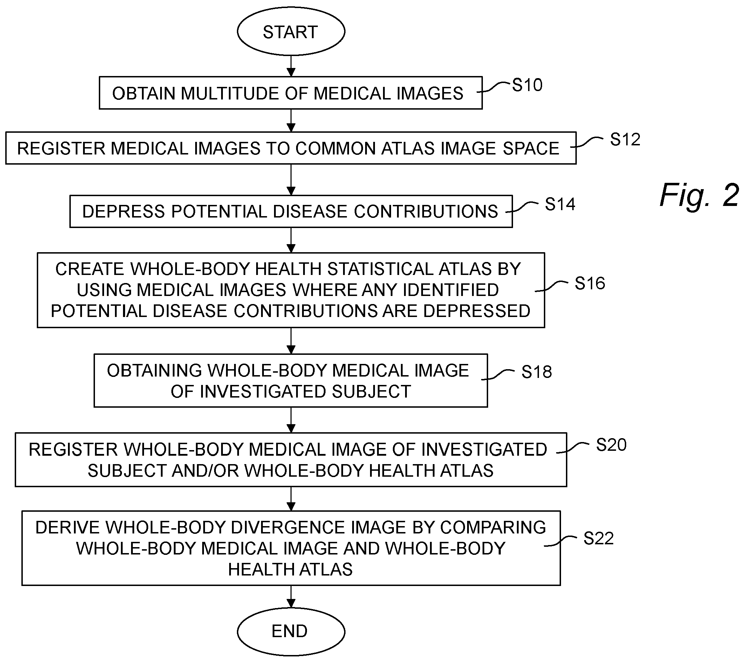

Figure 2 is a flow diagram of steps of an embodiment of a method for creating a whole-body divergence image. Steps S10 to S16 are similar to the steps illustrated and described in connection with Figure 1. These steps together create a whole-body health statistical atlas. In step S18, a whole-body medical image of an investigated subject is obtained. In step S20, at least one of the whole-body health statistical atlas and the whole-body medical image is registered to a common image space. This is performed using the image registering routine described further above and in Appendix A. In step S22, a whole-body divergence image is derived as a comparison between the whole-body medical image of the investigated subject and the whole-body health statistical atlas.

In a preferred embodiment, the common image space is the common atlas image space or an image space of the whole-body medical image of the investigated subject.

The resulting whole-body divergence image may be of use for highlighting parts of a whole body, where conditions considerably different from what is normally expected will be emphasized.

In one particular example, PET and CT images are registered to the image space of each individual PET-CT scan. An all-to-all image registration setup would require N*(N-1) registrations. However, if one would use image data in the validation fold one would risk bias the results. Therefore, only images from training folds are used and registered to respective validation fold. To reduce the number of registrations needed intermediate image spaces are also used in the form of explicitly selected scans. These consist of three scans of different body shapes and sizes in each fold (denoted: small, medium and large). These three are sampled targeting the 25, 50 and 75 percentiles of volumes of body fat as measured from the CT images. All images in respective fold are registered to its three intermediate images generating three intermediate atlases with the image data from all images in each fold. For each scan in the validation fold only the intermediate images are then registered to it, i.e. in total nine registrations (3 intermediate images x 3 folds). All intermediate atlases are then combined into a full subject specific atlas.

A synthetic healthy atlas may then be created. As the PET-CT scans are from patients with varying amounts of lesions and other anomalies it is important to suppress the data from the anomalies. For this a statistical approach was applied voxel-wise. This was done by calculating Intensity percentiles at 25 and 75 percent (P25 and P75 respectively). Inter quartile range, IQR is calculated as P75-P25. Outlier intensities were identified as >P75+1.5xIQR or <P25-1.5xIQR and excluded from the atlas generating the final synthetic atlas.

Optionally reference segmentations created by for example a can be used to mask out the image data in those regions. Before masking reference segmentation can also be dilated by for example (one iteration, using a 3D structuring element of 26 connected component).

This atlas can be created from selected groups of subjects with specific properties like sex, age, body shape and size of other characteristics that might be of importance for the image registration accuracy.

An atlas can similarly be created from tissue volume information by use of for example the Jacobian determinant of the deformation fields from the image registrations.

A divergence image was calculated as a z-score image where the difference between the individual PET image intensity is scaled by the standard divergence of the synthetic healthy atlas image data. Other methods are also possible to use, e.g. nonparametric. The methods or assumptions made could also vary over the body.

The whole-body health statistical atlas and/or the whole-body divergence image is particularly useful in providing means for automated image inference. In particular, the image inference may comprise at least one of lesion segmentation, disease status identification, disease prognosis, and disease risk estimation.

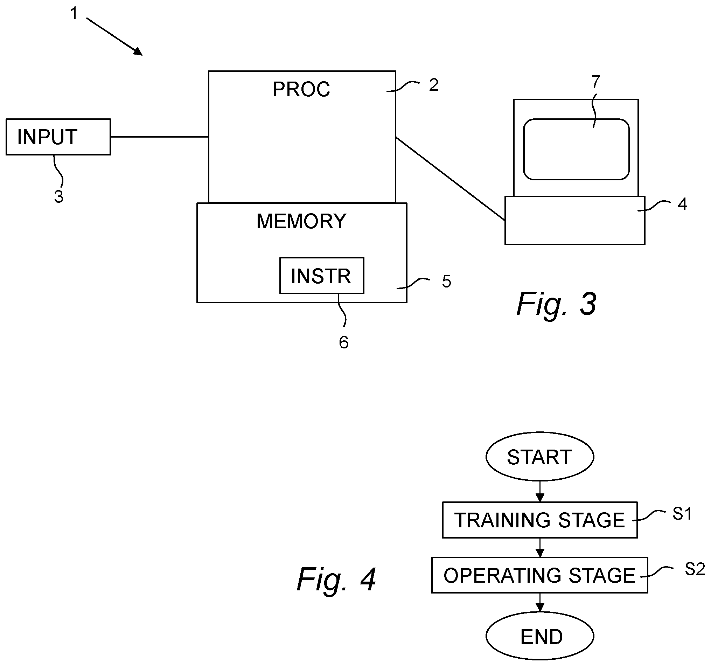

Figure 3 illustrates schematically an embodiment of a tool 1 for creating a whole-body health statistical atlas. A processor 2 has an input 3 for subject data sets. This input can e.g. be a memory comprising whole-body medical image of a multitude of subjects or a communication device for receiving data representing whole-body medical image of a multitude of subjects. The tool 1 further comprises an output 4 for a whole-body health statistical atlas. This output 4 may e.g. comprise a memory in which representations of resulting images can be stored. The output 4 may alternatively, or in combination, comprise a display device 7 for presenting resulting images. The tool 1 also comprises computer program instructions 6, e.g. stored in a memory 5. This memory 5 may be the same memory that may be comprised in the input 3 and/or output 4 or the memory 5 could be a separate memory.

The computer program instructions 6, when being executed by the processor 2, causes the processor 2 to obtain at least one whole-body medical image of a multitude of subjects by the input 3. At least all except one of the whole-body medical images of the multitude of subjects are registered to a common atlas image space of a common atlas image. The registering is performed with an image registering routine that comprises at least two part registering steps. In at least one of these part registering steps, images of different respective tissues in the whole-body medical images are obtained, and a part registering to the common atlas space is performed by optimizing a weighted cost function comprising a correlation of the images of respective tissues of the whole-body medical image to images of respective tissues of the common atlas image as well as a correlation of the whole-body medical images to a whole-body medical image of the common atlas image. Thereby deformation parameters are obtained, defining the part registration for the whole-body medical image. The computer program instructions 6, when being executed by the processor 2, further causes the processor 2 to depress any identified potential disease contributions from the whole-body medical images of the multitude of subjects. The computer program instructions 6, when being executed by the processor 2, further causes the processor 2 to create a whole-body health statistical atlas in the common atlas image space by using the registered and potential-disease-contribution depressed whole-body medical images of the multitude of subjects.

It is thus understood that in the above described embodiment, the processor 2 is given properties enabling a creation of a whole-body health statistical atlas by the computer program instructions 6.

In other words, in one embodiment, computer program instructions, when being executed by a processor, cause the processor to obtain at least one whole-body medical image of a multitude of subjects. At least all except one of the whole-body medical images of the multitude of subjects are registered to a common atlas image space of a common atlas image. The registering is performed with an image registering routine that comprises at least two part registering steps. In at least one of these part registering steps, images of different respective tissues in the whole-body medical images are obtained, and a part registering to the common atlas space is performed by optimizing a weighted cost function comprising a correlation of the images of respective tissues of said whole-body medical image to images of respective tissues of the common atlas image as well as a correlation of the whole-body medical images to a whole-body medical image of the common atlas image. Thereby deformation parameters are obtained, defining the part registration for the whole-body medical image. The computer program instructions, when being executed by a processor, further cause the processor to depress any identified potential disease contributions from the whole-body medical images of the multitude of subjects. The computer program instructions, when being executed by a processor, further cause the processor to create a whole-body health statistical atlas in the common atlas image space by using the registered and potential-disease-contribution depressed whole-body medical images of the multitude of subjects.

As mentioned further above, whole-body images of voxel-wise state of health can advantageously be used together with neural network approaches. Two examples of such whole-body images of voxel-wise state of health are the above-mentioned whole-body health statistical atlas and the whole-body divergence image. Figure 4 illustrates schematically a general type of method for obtaining an automated image inference. In a training stage S1, training data sets are provided to a neural network. The training data sets comprises at least medical images of a multitude of subjects, together with associated assigned image inference. The neural network will thereby become trained on such types of data. In an operating stage S2, the trained neural network will be fed by at least one medical images of a subject. The output from the trained neural network will then be an automated image inference of that subject, for instance a non-diagnostic image inference.

In one embodiment, a neural network can be trained by optimizing its output to be as similar as possible to a ground truth or reference inference dataset possible. In segmentation tasks this can be reference segmentations performed by an expert. These references can be performed using a fully manual approach or by different degrees of computerized support. Also fully automated segmentations are possible. The outputs from fully automated approaches are then preferably quality controlled by an export.

The open-source software 3DSlicer (www.slicer.org, version 3.8.1) was used for visual assessments and for the reference segmentations. Tumour lesions were manually segmented on fused FDG PET/CT imaging series. All suspicious high FDG uptake regions were segmented. Window settings and FDG uptake intensity level were adjusted specifically for each case and for each lesion or group of lesions. All detected lesions were segmented including FDG negative, when visible on CT. Manual and semi-automated tools were used for lesion contouring. In case of manual delineation, lesions were delineated on each axial slice and adjusted in coronal and sagittal slices. Semi-automated thresholding tools were used to segment scans with large lesion burden whereafter and all lesions were subsequently corrected manually if needed.

To not fully rely on the typical freehand contouring of the lesions a semi-automated minor adjustment was implemented. It uses lesion-wise PET signal thresholding, but only allows an update of maximum of 1 voxel layer from the first manual reference segmentation.

The method starts from the manual reference segmentation (M). For each lesion the first segmentation mask is dilated and eroded in 3D to create two new masks, respectively. One larger (L) and one smaller (S). The difference between the two new masks is a volume in 3D (R) that covers the manually segmented lesion border (A peal or a "ring" in 3D). PET intensities are then sampled inside (I-inside) and outside (I-outside) the lesion respectively. A threshold value is then determined that separates the high vs low SUV values. The I-inside is sampled as the mean SUV value inside S. The I-outside is sampled as the median intensity in the background in the distance 2-3 voxel layers outside M. The eventual adjustment of M is only allowed inside R. The SUV threshold used was T-SUV = 0.5 * (I-outside + 0.92*I-inside). This was determined heuristically aiming at minimizing the change in segmented lesion volumes and at the same time optimize the intra operator repeatability between two repeated reference segmentations.

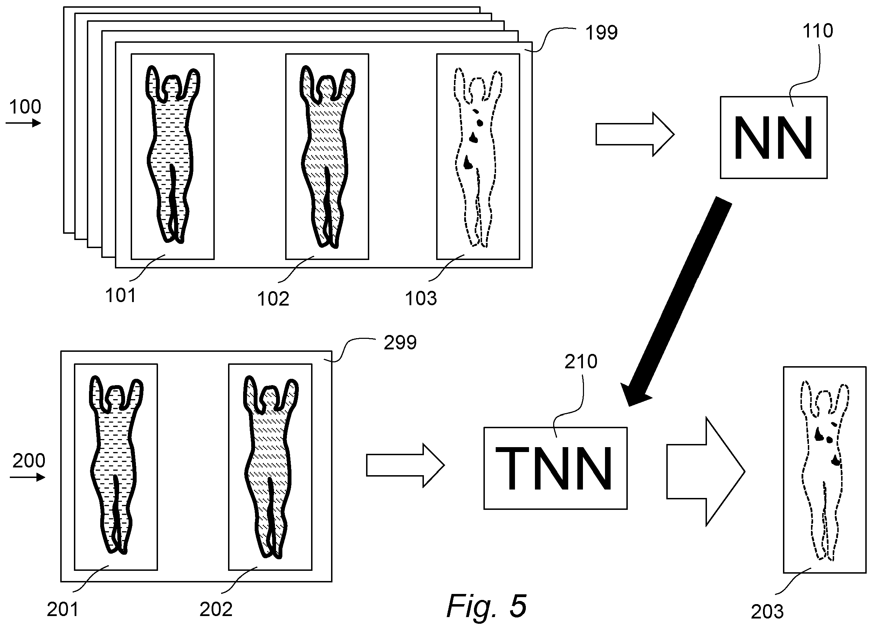

In some prior art, as schematically illustrated by Figure 5, medical images, e.g. PET 101 and CT 102 images, of a multitude of subjects 100, and the associated assigned image inference 103 was the only content in the training subject data sets 199 provided, as indicated by an unfilled arrow, to the neural network (NN) to be trained 110, thereby resulting, as indicated by a filled arrow, in a trained neural network (TNN) 210. Therefore, only medical images, in this embodiment PET 201 and CT 202 images, of the subject 200 to be analyzed by the trained neural network (TNN) 210 was the only necessary inputted subject data set 299 for performing the automated image inference 203 as an output, as indicated by a wide arrow.

The medical images 101, 102 may in some embodiments be recorded at different times, providing longitudinal information. This is discussed further below.

One of the medical images 101, 102 may also be an image inference, as will be discussed further below.

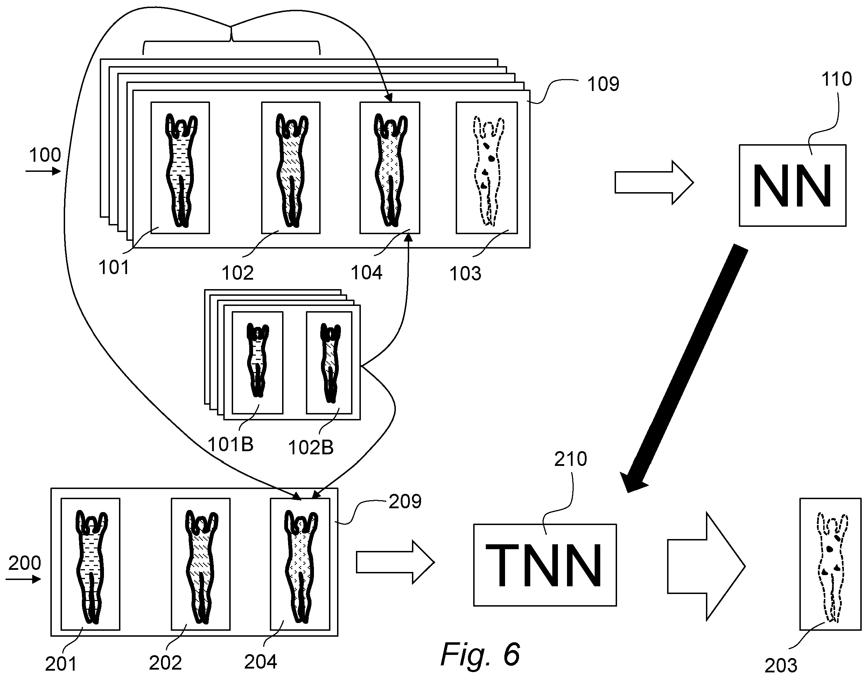

In Figure 6, another approach is schematically illustrated. Here, in this embodiment, whole-body image of voxel-wise state of health 104 is additionally used in the training subject data sets 109, i.e. the training subject data sets 109 comprises the medical images 101, 102 of a multitude of subjects and the associated assigned image inference 103 as well as the whole-body image of voxel-wise state of health 104. This whole-body image of voxel-wise state of health 104 may be deduced from at least a subset of the medical images, e.g. PET 101 and CT 102 images, of a multitude of subjects 100 actually used in the training subject data sets 109, or they may be deduced from other whole-body medical images, e.g. PET 101B and CT 102B images, or a combination thereof.

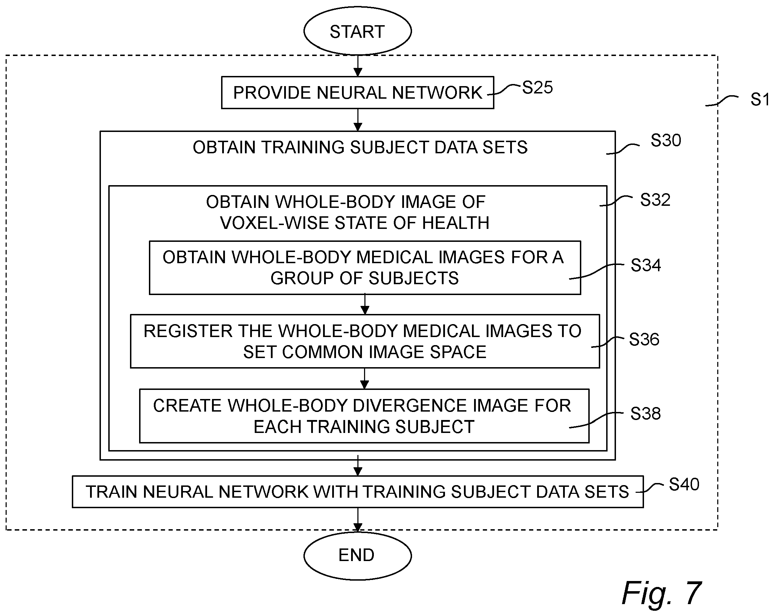

One type of whole-body image of health and/or disease statistical information that has proved to highly improve the quality of the automated image inference is the above-mentioned whole-body health statistical atlas. In Figure 7, a flow diagram of steps of an embodiment of a method for preparing a tool for automated image inference is illustrated. This method corresponds to a training stage, c.f. S1 of Figure 4. In step S25, a neural network to be trained is provided. The neural network may be of different kinds, e.g. convolutional neural networks or so called transformer networks. A person skilled in the art is capable of selecting a neural network suitable to be used for image analysis. In a preferred embodiment, the neural network is one of a 3D neural network,
a 2.5D neural network, and a 2D neural network.

In one embodiment, the neural network is trained and evaluated using 4-fold cross validation. In this setup the data in three of the folds are used for training and the remaining fold for validation. This is repeated over all folds and results are averaged.

Segmentations of additional organs and tissues can be added as an additional task for the network that can potentially benefit the training and performance also on other inference tasks (like lesion segmentation).

Convolutional neural networks (CNNs) are often used in image inference applications. Transformer networks or combinations of CNNs and transformers can also be used. Multiple architectures are available and can be used for image inference. Common architectures include e.g. U-Net and V-Net and variants of these. Common frameworks and libraries used are for example Tensorflow, pyTorch, nn_UNet, and MONAI.

Networks can also be so called pre-trained to both increase performance and training speed-up. Networks can be implemented with different dimensionality. Common networks include 2D, where the network is trained to analyse the images slice-by slice. 2D networks that are also fed with neighbouring or orthogonal slices as addition input channels are sometimes described as 2.5D networks. 3D networks are also commonly used. These can also analyse multi-image channel inputs. These can both be of different same types or dynamic 3D data over time as in longitudinal imaging visits.

We have for example inputted a divergence image as an additional input channel and used this to improve a lesion segmentation task. Other inputs an atlas of lesion probabilities in different locations throughout the body or probabilities of also normal appearing tissues is also possible and might improve accuracy or reduce the need for training data.

Ensembling strategies can be used to combine inferences of neural networks with slight variations in training data, hyper parameters, or network models. Networks can be trained to perform multiple inference tasks, like multi class segmentations of for example lesions and one or more normal appearing organs or tissue. Inclusion of more prior knowledge in the training like from example normal appearing organ or tissue shapes might be beneficial also for the lesion segmentation task.

Cascade approaches where inputs to and outputs from multiple networks are connected can also be used to increase performance of the target inference.

Deep learning approaches can be used to perform image segmentation or image registrations. Image segmentations and image registration can also benefit each other. Combined approaches can also be setup where the inference consists of image segmentations and image registration task that are jointly optimised and where the inferences benefit each other.

In step S30, multiple training subject data sets are obtained. Each training subject data set comprises at least one respective whole-body medical image in a respective set common image space of a set common image. Each training subject data set also comprises an associated assigned image inference of an associated subject. This associated assigned image inference is preferably assigned by a skilled person, such as a physician. Each training subject data set also comprises at least one whole-body image of voxel-wise state of health for each training subject data set registered to the set common image space.

In step S32, the at least one whole-body image of voxel-wise state of health for each training subject data set registered to the set common image space is obtained. The whole-body image(s) of voxel-wise state of health comprise(s) a whole-body divergence image that is based on a comparison between the whole-body medical image of the respective associated training subject and collective image information of a group of subjects.

The step S32 of obtaining at least one whole-body image of voxel-wise state of health registered to the set common image space comprises a number of part steps. In step S34, whole-body medical images for the group of subjects are obtained.

In a preferred embodiment, all subjects of the group of subjects are selected to belong to a specific gender and/or a specific age range and/or a specific body shape class. These whole-body images are thus used for creating the whole-body divergence image. The body shape classes could e.g. be based on the medical image data or BMI measures or other types of measurable geometrical and/or weight data.

In step S36, whole-body medical images of the whole-body medical images for the group of subjects are registered to the set common image space by a common image registering routine. All whole-body medical images of the whole-body medical images for the group of subjects that are not already in the common atlas image space are registered. In a particular embodiment, all whole-body medical images of the whole-body medical images for the group of subjects or all except one of whole-body medical images of the whole-body medical images for the group of subjects are registered. The latter option is the case when the image space of one of the whole-body medical images in fact is the common image space. This common image registration routine is preferably the one described further above and in connection with Appendix A. In step S38, the whole-body divergence image is created by comparing the whole-body medical image of the respective associated training subject with registered the whole-body medical images for said group of subjects. In step S32, the registered whole-body image(s) of voxel-wise state of health is(are) also included into a respective training subject data set.

In step S40, the neural network is trained with the training subject data sets into a trained neural network.

The set common image space is, as the name indicates, an image space to which all images in the set are registered. This is common practice in order to be able to compare different parts of the original images of one set to each other. However, the way to select this set common image space may differ. One alternative is to start from the subject itself. In other words, the set common image space is selected to be equal to a respective training subject image space. This means that all other types of images that are used within one particular set are registered to the image space of the subject, as being available as the whole-body medical image of the subject. The images used in obtaining the whole-body image of voxel-wise state of health are then registered to this whole-body medical image of the subject.

However, the set common image space may also be different from the subject image space. For instance, set common image space may be selected as a specific training subject image space, e.g. associated with another set. This opens up for using the same set common image space for all sets. The set common image space can also be selected as an image space assigned to a specific gender and/or an image space assigned to a specific age group and/or an image space assigned to a specific body shape group. These assigned image spaces may be pre-provided in order to be an image space particularly well suited for the subject in question to be compared to.

If a set common image space different from the subject image space is selected, there has to be a registration of the images of the subject. The step S30 of obtaining multiple training subject data sets in turn comprises substeps. At least one respective whole-body medical image of an associated training subject registered to a respective subject image space is obtained. This at least one whole-body medical image of the training subject data sets is(are) registered to the set common image space, preferably by use of the common image registering routine discussed above, if the image space of the whole-body medical image is different from the set common image space. If the image space of the whole-body medical image already is the set common image space, the registering is obviously unnecessary to perform.

As mentioned above, more than one set may share the same image space. In other words, at least two of the training subject data sets have the same set common image space.

In step S40, the neural network is trained with the registered training subject data sets.

In one embodiment, to not fully rely on the typical freehand contouring of the lesions, a semi-automated minor adjustment was implemented. It uses lesion-wise PET signal thresholding, but only allows an update of maximum of 1 voxel layer from the first manual reference segmentation.

The method starts from the manual reference segmentation (M). For each lesion the first segmentation mask is dilated and eroded in 3D to create two new masks, respectively. One larger (L) and one smaller (S). The difference between the two new masks is a volume in 3D (R) that covers the manually segmented lesion border (A peal or a "ring" in 3D). PET intensities are then sampled inside (I-inside) and outside (I-outside) the lesion respectively. A threshold value is then determined that separates the high vs low SUV values. The I-inside is sampled as the mean SUV value inside S. The I-outside is sampled as the median intensity in the background in the distance 2-3 voxel layers outside M. The eventual adjustment of M is only allowed inside R. The SUV threshold used was T-SUV = 0.5 * (I-outside + 0.92*I-inside). This was determined heuristically aiming at minimizing the change in segmented lesion volumes and at the same time optimize the intra operator repeatability between two repeated reference segmentations.

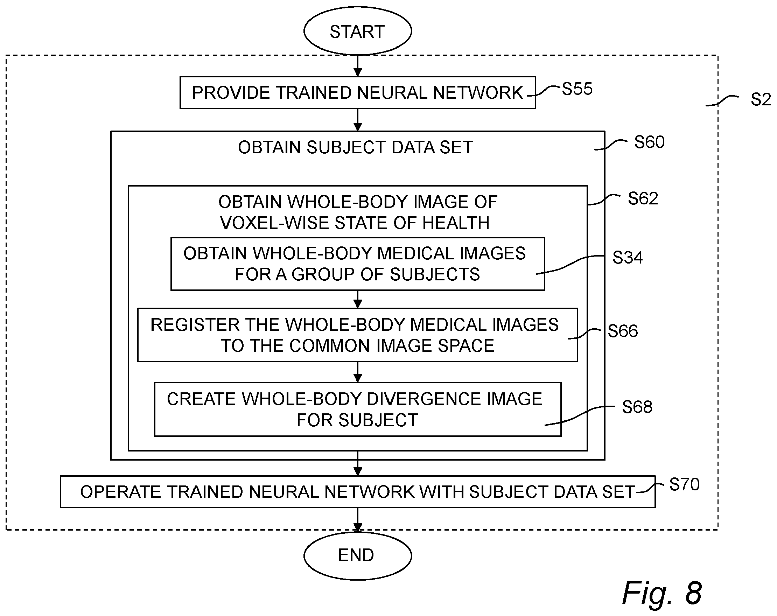

In Figure 8, a flow diagram of steps of an embodiment of a method for automated image inference is illustrated. This method corresponds to a training stage, c.f. S2 of Figure 4. In step S55, a trained neural network is provided. This neural network in this step is thus a trained neural network. In a preferred embodiment, the trained neural network is one of a 3D neural network, a 2.5D neural network, and a 2D neural network. The trained neural network is trained with training subject data sets of at least one respective whole-body medical image, an assigned image inference of an associated subject and at least one training whole-body image of voxel-wise state of health, all registered to a set common image space of a set common image. The training whole-body image(s) of voxel-wise state of health comprise(s) a whole-body divergence image based on a comparison between the whole-body medical image of the respective associated training subject and collective image information of a group of subjects. Preferably, the trained neural network is trained by a method according to Figure 7.

In step S60, a subject data set of at least one whole-body medical image of an associated subject in a common image space of a common image and at least one whole-body image of voxel-wise state of health registered to said common image space is obtained.

In step S62, the at least one whole-body image of voxel-wise state of health registered to said common image space is obtained. This registered at least one training whole-body image of voxel-wise state of health is thus a part of the subject data set. In this embodiment, the at least one whole-body image of voxel-wise state of health comprises a whole-body divergence image that is based on a comparison between the whole-body medical image of the respective associated training subject and collective image information of a group of subjects.

In this embodiment, the step S62 of obtaining at least one whole-body image of voxel-wise state of health registered to the common image space comprises a number of part steps. In step S34, whole-body medical images for the group of subjects are obtained.

In a preferred embodiment, all subjects of the group of subjects are selected to belong to a specific gender and/or a specific age range and/or a specific body shape class, in agreement with a gender and age and body shape class of the associated subject. The whole-body images of these subjects are used for creating the whole-body divergence image,

In step S66, the whole-body medical images for the group of subjects are registering to the common image space by a common image registering routine. This common image registering routine is preferably the one discussed further above and in Appendix A. In step S68, the whole-body divergence image is created by comparing the whole-body medical image of the associated subject with registered whole-body medical images for the group of subjects.

In step S70, the trained neural network is operated with the subject data set as input data, resulting in an image inference.

In analogy with the discussion above, the common image space may be selected in different ways. In one embodiment, the common image space is equal to the subject image space. In such a case, there is obviously no need for any further registration of the whole-body medical image(s) of the associated subject.

In another embodiment, the common image space is different from the subject image space. In such a case, the step S60 of obtaining a subject data set comprises part steps. At least one respective whole-body medical image of the associated subject is obtained in a subject image space. The at least one whole-body medical image of the subject data set is registered to the common image space if the at least one whole-body medical image of the subject data set is in an image space different from the common image space. Preferably, this registration is performed by use of the common image registering routine mentioned above and in connection with Appendix A. If the image space of the whole-body medical image already is the common image space, the registering is obviously unnecessary to perform.

In these cases where a common image space different from the subject image space is selected, different alternatives are available. One possibility is to select another specific subject image space. Alternatively, or in combination, the common image space may be selected an image space assigned to a specific gender and/or an image space assigned to a specific age group and/or an image space assigned to a specific body shape group.

Throughout the procedures of Figures 1, 2, 7 and 8, registration of images to a certain image space is performed. In the methods for obtaining the whole-body image of voxel-wise state of health, e.g. the whole-body health statistical atlas, any available whole-body registration method may be useful. However, preferably, the registrations are performed according to the approach exemplified in Appendix A. In the training and operating of the neural network described in connection with Figures 7 and 8, the use of the whole-body image of voxel-wise state of health does give an improved result, using many different types of whole-body registration. However, also here, the registration approach exemplified in Appendix A is particularly well suited to cooperate with use of whole-body image of voxel-wise state of health, both for achieving the whole-body health statistical atlases as well as for registering whole-body images during the actual training or operation of the neural network.

The above ideas may be implemented using any type of medical image. However, the types of medical images that so far have given the most promising results are CT images or PET images, or a combination thereof. CT images are also the preferred object for the registration method as discussed in Appendix A. In other words, in one embodiment, the at least one whole-body medical image comprises a whole-body CT image and optionally an additional whole-body PET image.

In one embodiment of the different whole-body image processing schemes described herein, the processed whole-body images are three-dimensional (3D) images. In other words, the whole-body images comprise voxels in three dimensions representing imaging signals from different parts of a three-dimensional subject. In such embodiments, the processed amount of data is very large and the processing of the neural network, both in training and operation stages, requires high computational resources. However, the results are in general very accurate.

Also so-called 4D images, where a "fourth dimension" e.g. in the form of different radiation wavelengths or similar additional parameters, can be used for the purposes of this technology. In other words, in one embodiment, the processed whole-body images may be four-dimensional (4D) images.

In alternative embodiments, the whole-body images are aggregates of parallel two-dimensional (2D) image slices of a 3D image. The 2D image slices may be sagittal image slices. The 2D image slices may also be coronal image slices. Directly recorded 2D images may also be used.

Processing of 2D whole-body images requires in general less computational efforts compared to 3D images. However, the final result using 2D images may be somewhat less accurate than for the 3D cases.

One possibility to improve the 2D image processes is to use additional whole-body image of voxel-wise state of health in the process. It has been found that whole-body maximum intensity projection (MIP) images may assist in improving the final result. The MIP information is the 2D intensity averaged perpendicular to the 2D image slices. To that end, the at least one whole-body image of of voxel-wise state of health in the training stage as well as in the operation stage additionally comprises whole-body MIP.

The whole-body MIP may also be used in 3D image cases, but has so far not improved the results significantly.

The produced image inference and the image inference used in the training phase can be of different kinds. In one embodiment, the image inference is non-diagnostic. The image inference may also target certain features that may give a practitioner additional information for making any kind of health-related decisions, diagnostic as well as non-diagnostic. In different embodiments, the image inference may comprise one or more of segmentation, classification, regression and image registration in combination with image segmentation. Some examples may be e.g. lesion segmentation, disease status identification, disease prognosis, and disease risk estimation.

In the embodiments of Figures 6 and 7, a whole-body divergence image is used as "additional" data to the neural network, either in the training data sets or in the subject data set, respectively. Such whole-body divergence image may be formed according to different rules, but is typically based on some kind of typical value, e.g. average, median or type values associated to a set of subjects. Any divergence in the medical image of the subject under consideration is then compared in some way to this typical value, preferably in the view of some distribution measures, such as standard divergence, variance etc. In one embodiment, the whole-body divergence image comprises a whole-body medical image of z-scores of a whole-body medical image of a particular subject. This whole-body medical image of z-scores is presented in relation to average and divergence data of whole-body medical image information of a group of subjects.

Preferably, the z-scores comprises subject image intensity difference from an average for the group of subjects, scaled by a standard divergence of intensities for the group of subjects.

As mentioned above, another type of whole-body image of voxel-wise state of health that has proved to highly improve the quality of the automated image inference is a whole-body image based on average data of health statistical whole-body medical image information of a group subjects where any disease contributions are depressed. A typical such whole-body image is the above discussed whole-body health atlas.

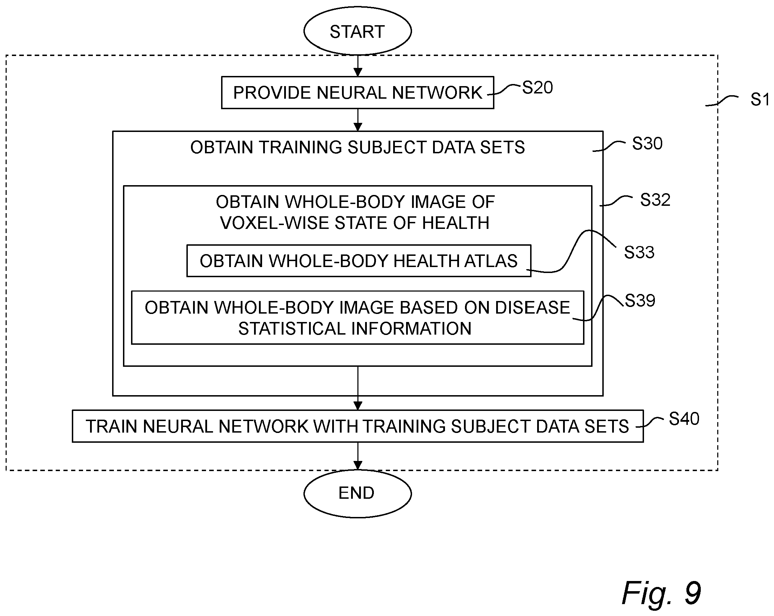

In Figure 9, a flow diagram of steps of an embodiment of a method for preparing a tool for automated image inference is illustrated. Most steps are the same as in Figure 7 and are not further discussed. In step S33, a whole-body health atlas, or other whole-body image based on average data of health statistical whole-body medical image information of a group subjects where any disease contributions are depressed, is obtained. The whole-body health atlas is registered to the set common image space and is included in each training subject data set. This type of information is thus used during the subsequent training of the neural network.

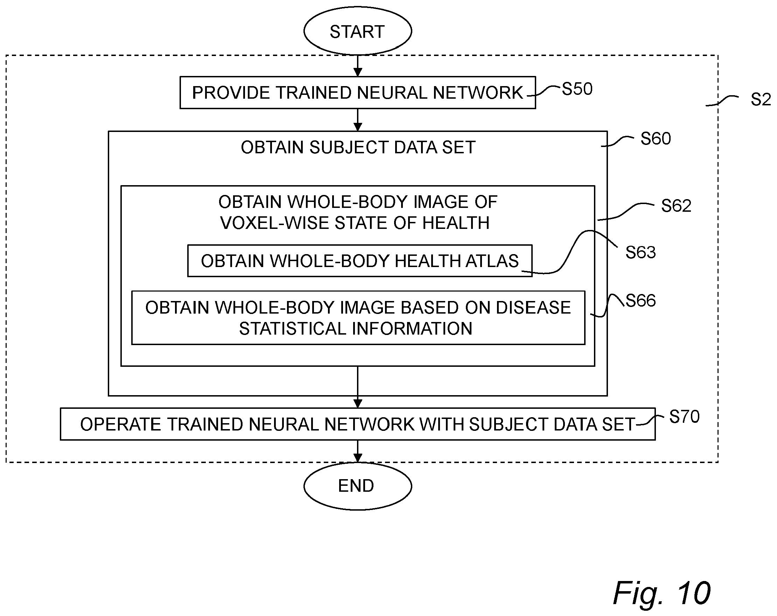

In Figure 10, a flow diagram of steps of an embodiment of a method for automated image inference is illustrated. Most steps are the same as in Figure 8 and are not further discussed. In step S63, a whole-body health atlas, or other whole-body image based on average data of health statistical whole-body medical image information of a group subjects where any disease contributions are depressed, is obtained. The whole-body health atlas is registered to the common image space and is included in the subject data set. This type of information is thus used during the subsequent operation of the neural network.

Another type of whole-body image of voxel-wise state of health that has proved to highly improve the quality of the automated image inference is a whole-body image based on disease statistical information. In such a way, information about typical behaviors of certain diseases can explicitly be provided to the neural network for improving its abilities to adapt, also in cases where the amount of training data in general is low. Preferably, the whole-body image based on disease statistical information is a lesion probability image of a group of subjects.

In Figure 9, where the flow diagram of steps of an embodiment of a method for preparing a tool for automated image inference is illustrated, in step S39, a whole-body image based on disease statistical information is obtained. The whole-body image based on disease statistical information is registered to the set common image space and is included in each training subject data set. This type of information is thus used during the subsequent training of the neural network.

In Figure 10, where the flow diagram of steps of an embodiment of a method for automated image inference is illustrated, in step S69, a whole-body image based on disease statistical information is obtained. The whole-body image based on disease statistical information is registered to the common image space and is included in the subject data set. This type of information is thus used during the subsequent operation of the neural network.

In Figure 9, the steps S33 and S39 can be performed as alternatives, or as a combination. The steps S33 and S39 may also be performed as alternatives or combinations with steps S34, S36 and S38 of Figure 7. In general, the more additional information that is made available for the neural network by means of the whole-body image of voxel-wise state of health, the better the performance of the neural network will be. However, an increased amount of input information will also increase the complexity of the neural network and will therefore need more powerful processing.

Similarly, in Figure 10, the steps S63 and S69 can be performed as alternatives, or as a combination. The steps S63 and S69 may also be performed as alternatives or combinations with steps S34, S66 and S68 of Figure 8. The additional information that is made available for the neural network by means of the whole-body image of voxel-wise state of health should of course correspond to the additional information used during training of the neural network.

Tests on segmentation results obtained by deep learning were performed. FDG PET CT scans from n=87 female subjects with metastatic breast cancer from one imaging center were analyzed. 18-FDG PET-CT scans were performed on a Siemens Biograph64 system. All PET scans have been performed in whole body mode, using low dose CT for attenuation correction and localization purposes. CT slice thickness of 3mm were imaged and 120 kVp were used. All PET scans comprise of 8 bed positions. Total acquisition time per scan was less than 45 min.

The image segmentation was evaluated using different metrics. The main one used was the so-called Dice score that measures the overlap between the reference and the automated segmentation results (metric ranging from 0 to 1).

The image segmentation results from different are shown in Table 1.

**Table 1: Image segmentation results from a 4-fold cross validation analysis**

| Method | Mean Dice | Median Dice |
|---|---|---|
| DL | 0.631 | 0.711 |
| DL+Z | 0.652 | 0.753 |
| DL+Z+Ring | 0.659 | 0.750 |
| DL+Z+MIP | 0.662 | 0.743 |
| DL+Z+MIP+Ring | 0.682 | 0.790 |
| DL+Z+MIP+Ring+LP | 0.680 | 0.793 |

| | | |
|---|---|---|
| DL - Deep learning method (Neural network) Z - a divergence image in the form of a PET SUV z-score is given as additional input Ring - Reference segmentations are slightly adjusted to be more objective with the "ring" method MIP - Maximum intensity projection of the PET image is given as an extra input channel LP - Lesion probability image is given as additional input channel | | |

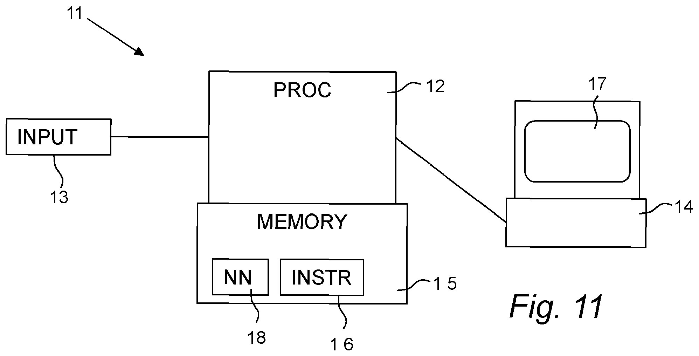

Figure 11 illustrates schematically an embodiment of a tool 11 for automated image inference. A processor 12 has an input 13 for subject data sets. This input can e.g. be a memory comprising whole-body medical image of a subject or a communication device for receiving data representing whole-body medical image of a subject. The tool 11 further comprises an output 14 for subject image inference. This output 14 may e.g. comprise a memory in which representations of resulting images can be stored. The output 14 may alternatively, or in combination, comprise a display device 17 for presenting resulting images. The tool 11 also comprises computer program instructions 16, e.g. stored in a memory 15. This memory 15 may be the same memory that may be comprised in the input 13 and/or output 14 or the memory 15 could be a separate memory. The memory 15 further comprises a trained neural network 18.

The neural network 18 is a trained neural network. The trained neural network is trained with registered training subject data sets of at least one respective whole-body medical image, an associated assigned image inference of an associated subject and at least one training whole-body image of voxel-wise state of health, all registered to a set common image space of a set common image. In one embodiment, the at least one training whole-body image of voxel-wise state of health comprises a whole-body divergence image based on a comparison between said whole-body medical image of said respective associated training subject and collective image information of a group of subjects. In another embodiment, the at least one training whole-body image of voxel-wise state of health comprises a whole-body image based on average data of health statistical whole-body medical image information of a group subjects where any disease contributions are depressed, typically a whole-body health atlas. In yet another embodiment, the at least one training whole-body image of voxel-wise state of health comprises a whole-body image based on disease statistical information.

The computer program instructions 16, when being executed by the processor 12, causes the processor 12 to form a registered subject data set from a subject data set, obtained by the input 13, of at least one whole-body medical image and at least one whole-body image of voxel-wise state of health. The at least one whole-body medical image and the at least one whole-body image of voxel-wise state of health are in a common space of a common image.

In one embodiment, the at least one whole-body image of voxel-wise state of health comprises a whole-body divergence image that is based on a comparison between the whole-body medical image of the respective associated training subject and collective image information of a group of subjects. The computer program instructions 16, when being executed by the processor 12 causes the processor 12 to obtain whole-body medical images for the group of subjects. The whole-body medical images for the group of subjects are registered to the common image space by a common image registering routine. The whole-body divergence image is created by comparing the whole-body medical image of the associated subject with registered the whole-body medical images for the group of subjects. The common image registering routine is preferably the one discussed further above and in Appendix A.

The computer program instructions 16, when being executed by the processor 12- further causes the processor 12 to operate the trained neural network 18 with the registered subject data set as input data. This results in an image inference that is provided to the output 14.

It is thus understood that in the above-described embodiment, the processor 12 is given properties enabling automated image inference by the computer program instructions 16 and by the trained neural network 18.

In other words, in one embodiment, computer program instructions, when being executed by a processor, cause the processor to form a registered subject data set from an obtained subject data set of at least one whole-body medical image and at least one whole-body image of voxel-wise state of health, in a common space of a common image. The at least one whole-body image of voxel-wise state of health comprises in one embodiment a whole-body divergence image that is based on a comparison between the whole-body medical image of the respective associated training subject and collective image information of a group of subjects. In another embodiment, the at least one training whole-body image of voxel-wise state of health comprises a whole-body image based on average data of health statistical whole-body medical image information of a group subjects where any disease contributions are depressed, typically a whole-body health atlas. In yet another embodiment, the at least one training whole-body image of voxel-wise state of health comprises a whole-body image based on disease statistical information.

In one embodiment, the computer program instructions further cause the processor to obtain whole-body medical images for the group of subjects. The whole-body medical images for the group of subjects are registered to the common image space by a common image registering routine. The whole-body divergence image is created by comparing the whole-body medical image of the associated subject with registered the whole-body medical images for the group of subjects. The common image registering routine is preferably the one discussed further above and in Appendix A.

The computer program instructions further cause the processor to operate a trained neural network with the registered subject data set as input data, resulting in an image inference being provided.

The trained neural network used by the computer program instructions is trained with registered training subject data sets of at least one respective whole-body medical image, an associated assigned image inference of an associated subject and at least one training whole-body image of voxel-wise state of health, all registered to a set common image space of a set common image. The at least one training whole-body image of voxel-wise state of health comprises in one embodiment a whole-body divergence image based on a comparison between the whole-body medical image of the respective associated training subject and collective image information of a group of subjects.

In many cases, when a subject being diagnosed having a disease, a treatment process is started. It is then often requested to follow up the treatment results. If medical images have been taken at the instant in connection with the diagnosis, corresponding images taken after part or full treatment are often useful for evaluating the results. There may thus be sets of medical images associated with a same subject, but recorded at different instances, typically together with image inference at one or both occasions. This enhanced amount of data can also be used within the framework of neural networks.

Longitudinal imaging of a patient can utilise the image data from multiple visits. This also includes eventual segmentations (e.g. lesion segmentation from a baseline visit) to improve the performance of automated segmentation approaches. Deformable image registration can be used to improve the spatial alignment on the longitudinal image information.

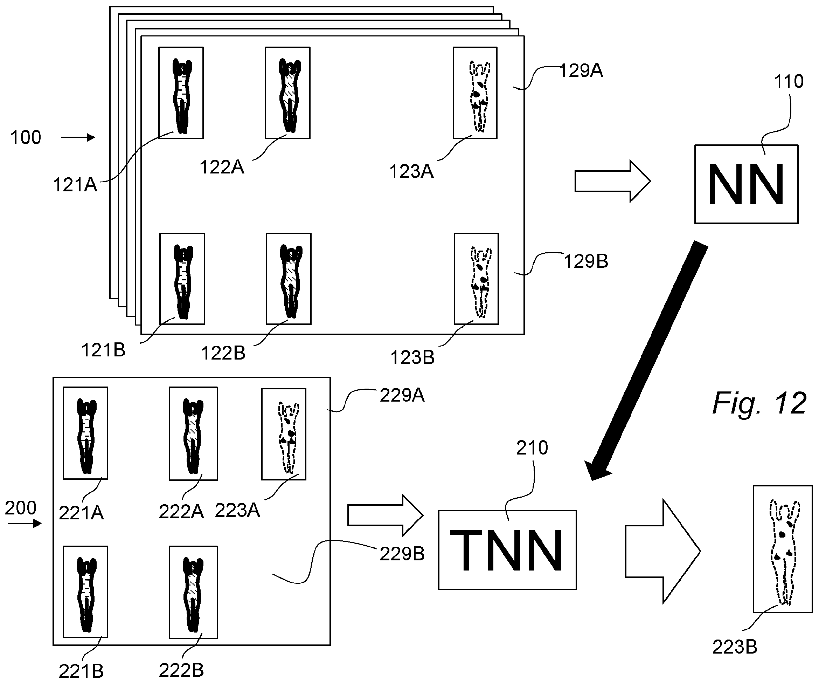

Figure 12 illustrates schematically an approach based on temporal information of whole-body medical images. Medical images, e.g. PET 121A, 121B and CT 122A, 122B images, of a multitude of subjects 100 are obtained for at least to different occasion. Associated assigned image inferences 123A, 123B where available for at least one of the occasions. For each subject, one training subject data set 129A comprises the medical images 121A, 122A and the associated assigned image inference 123A, if any, of a first instance. Another training subject data set 129B for the same subject comprises the medical images 121B, 122B and the associated assigned image inference 123B, if any, of a second instance, separated in time from the first instance. Such multi-instance training subject data sets are provided to the neural network 110, for training purposes.

When operating the trained neural network 210, similar sets of medical images 221A, 221B, 222A, 222B for the target subject are obtained, and optionally also an associated assigned image inference 223A of one of the instances. This data is provided to be analyzed by the trained neural network 210. The result will be an automated image inference 223B of the instant not having an image inference from before.

The procedure is illustrated for two instances. However, these principles can be extended to incorporate also more than two instances.

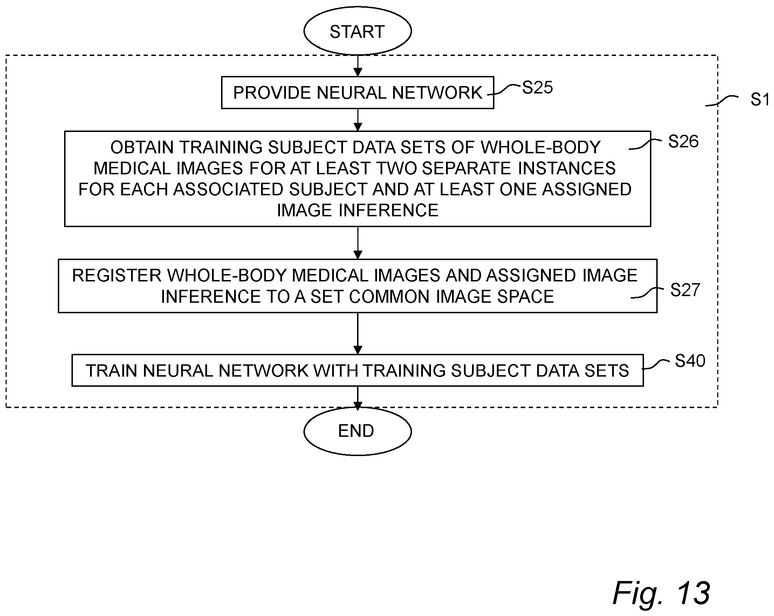

Figure 13 is a flow diagram of steps of an embodiment of a method for preparing a tool for automated image inference. In step S25, a neural network to be trained is provided. In step S26, multiple training subject data sets are obtained. Each training subject data set comprises at least one respective whole-body medical image of at least two, non-simultaneous, instances of an associated subject and an assigned image inference of the associated subject for at least one of the at least two instances. Preferably, there is an assigned image inference of the associated subject for all instances.

The assigned image inference could be provided in different ways. In one embodiment, the assigned image inference is obtained by human intervention. In an alternative embodiment, the assigned image inference is obtained in statistical ways based on the whole-body medical image of the at least one of the at least two instances.

The assign image inference could also be a result of a previous automatic image inference. This could be provided in addition or as an alternative in one of the instances. In other words, in one embodiment, each of the multiple training subject data sets comprises an assigned image inference of the associated subject for at least another one of the at least two instances being based on an assigned automatic image inference deduced from whole-body medical images of the respective subject.

In a preferred embodiment, at least one of said assigned image inference and the assigned automatic image inference comprises lesion segmentation.

In step S27, the whole-body medical image for at least all except one of the at least two instances and he assigned image inference for each subject are registered to a set common image space of a set common image by use of a common image registering routine. In case the whole-body medical image for one instance is selected as set common image space, that particular image does not have to be registered. In other words, in one embodiment, for each training subject data set, the set common image space is selected to be an image space of the whole-body medical image of one of the at least two instances. In case any other image spaces are selected as the set common image space, all instances have to be registered. The common image registering routine is preferably the one discussed further above and in Appendix A.

In step S40, the neural network is trained with the training subject data sets into a trained neural network.

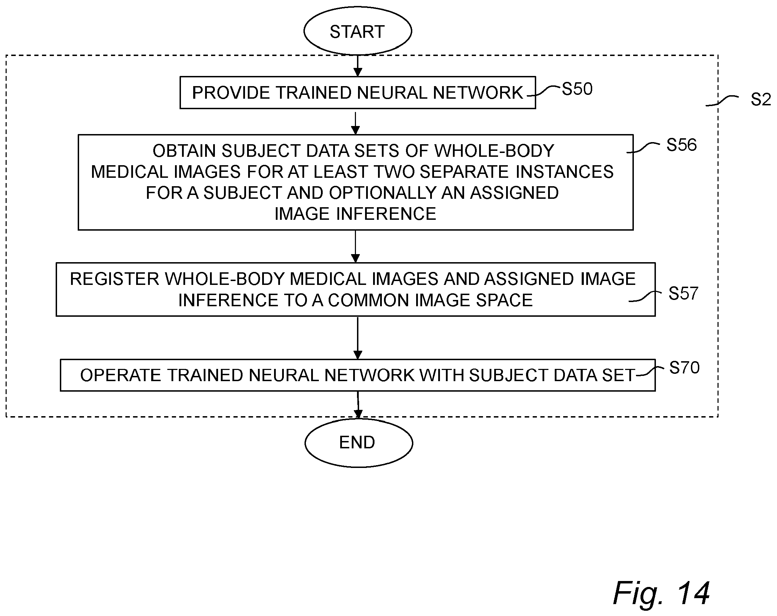

Figure 14 is a flow diagram of steps of an embodiment of a method for automated image inference. In step S50, a trained neural network is provided. The trained neural network is trained with training subject data sets of at least one respective whole-body medical image of at least two, non-simultaneous, instances, and an assigned image inference of an associated subject for at least one of the at least two instances for each training subject data set, registered to a respective set common image space.

In step S56,-a subject data set of at least one whole-body medical image of at least two, non-simultaneous, instances of an associated subject is obtained. In step S57, the whole-body medical image for at least all except one of the at least two instances is registered to a common image space of a common image by use of a common image registering routine. The common image registering routine is preferably the one discussed further above and in Appendix A.

In step S70, the trained neural network is operated with the subject data set as input data, resulting in an image inference of said associated subject at one of the at least two instances.

In a preferred embodiment, at least one of the assigned image inference and an assigned automatic image inference, if any, comprises lesion segmentation, whereby the neural network is trained with at least one of the assigned image inference and an assigned automatic image inference, if any, comprising lesion segmentation.

In a preferred embodiment, the common image space is selected to be an image space of the whole-body medical image one of the at least two instances.

The approach of using whole-body medical images of more than one instance of a subject can also be enhanced further by also applying the ideas of enhancing the neural network performance by provision of additional information in the form of at least one whole-body image of voxel-wise state of health. Thus, in a preferred embodiment, the method comprises the further step of obtaining at least one whole-body image of voxel-wise state of health registered to the common image space. The training of the neural network then also has to be performed also with the registered at least one whole-body image of voxel-wise state of health as a part of the registered training subject data sets.

In analogy with what has been discussed above, in one embodiment, the at least one whole-body medical image comprises a whole-body CT image and optionally an additional whole-body PET image.

The Figure 11 may also illustrate a tool for automated image inference based on multi-instance subject data. The important differences compared to previous arrangements are the software and the way in which the neural network has been trained. Figure 11 thus schematically illustrates an embodiment of a tool 11 for automated image inference. A processor 12 has an input 13 for subject data sets. This input can e.g. be a memory comprising whole-body medical image of a subject or a communication device for receiving data representing whole-body medical image of a subject. The tool 11 further comprises an output 14 for subject image inference. This output 14 may e.g. comprise a memory in which representations of resulting images can be stored. The output 14 may alternatively, or in combination, comprise a display device 17 for presenting resulting images. The tool 11 also comprises computer program instructions 16, e.g. stored in a memory 15. This memory 15 may be the same memory that may be comprised in the input 13 and/or output 14 or the memory 15 could be a separate memory. The memory 15 further comprises a trained neural network 18.

The neural network 18 is a trained neural network. The trained neural network is trained with training subject data sets of at least one respective whole-body medical image of at least two, non-simultaneous, instances, and an assigned image inference of an associated subject for at least one of the at least two instances for each subject data set, registered to a respective set common image space.

The computer program instructions 16, when being executed by the processor 12, causes the processor 12 to form a registered subject data set from at least one whole-body medical image, obtained by the input 13, of at least two, non-simultaneous, instances of an associated subject;

The computer program instructions 16, when being executed by the processor 12, cause the processor 12 to perform a registering of the whole-body medical image for at least all except one of the at least two instances to a common image space of a common image by use of a common image registering routine. The common image registering routine is preferably the one discussed further above and in Appendix A.

The computer program instructions 16, when being executed by the processor 12- further causes the processor 12 to operate the neural network 18 with the registered subject data set as input data. This results in a present image inference of the subject. The present image inference is provided to the output 14.

It is thus understood that in the above-described embodiment, the processor 12 is given properties enabling automated image inference by the computer program instructions 16 and by the trained neural network 18.

In other words, in one embodiment, computer program instructions, when being executed by a processor, cause the processor to form a registered subject data set from at least one whole-body medical image of at least two, non-simultaneous, instances of an associated subject. The computer program instructions further cause the processor to perform a registering of the whole-body medical image for at least all except one of the at least two instances to a common image space of a common image by use of a common mage registering routine. The common image registering routine is preferably the one discussed further above and in Appendix A.

The computer program instructions further cause the processor to operate a trained neural network with the registered subject data set as input data, resulting in a present image inference of the associated subject being provided to the output. The trained neural network is trained with training subject data sets of at least one respective whole-body medical image of at least two, non-simultaneous, instances, and an assigned image inference of an associated subject for at least one of the at least two instances for each subject data set, registered to a respective set common image space.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### Appendix A: Method and system for Medical image registration

By registering a first image and a second image it is meant transforming the first image to align with the second image such that features within the first image are aligned to corresponding features in the second image. Such features may be different tissue classes such as bone, lean soft tissue and/or fat. In other words, the first image may be transformed into the coordinate system of the second image. It should be understood that both the first and the second image may simultaneously be transformed to align in a coordinate system of an intermediate space. Hence, the first image may be arranged in a first space, and the second image may be arranged in a second space and both the first and second images may be transformed in the registration to align in a common intermediate space not identical to the first or second spaces.

By a set of deformation parameters it is meant a set of parameters indicating deformation of at least part of the image of which the set of deformation parameters is associated with. In other words, by a set of deformation parameters it is meant a set of parameters indicating transformation of the first image in order to have at least part of the features in the first image to align with corresponding features of the second image.

By x-ray study it is meant an x-ray examination of an object. The object may typically be a human or an animal and thus the study may typically result in an image of the object, i.e. the imaged object. The imaged object may be any part of the object, such as the body or parts thereof. This should be understood as torso or at least parts thereof head, arm(s), leg(s) or any part of the object that are analyzed. Parts of torso may be for example the chest and the abdomen.

By data significant for x-ray attenuation (i.e. absorption) from a first and second medical imaging study it is meant data comprising x-ray attenuation from different measurements, wherein the measurements may be performed at different points in time on the same or different objects.

The present registration approach is based on the understanding that correlation of two images by optimizing a weighted cost function, having both a specific tissue class from the first image, such as bone together with the first image, provides a correlation that is at least partly based on holistic image information together with information from a specific tissue class. This has shown to be advantageous by providing improved accuracy in the registration of two images. Furthermore, the method is advantageous by providing a stepwise registration of the first image to the second image, wherein the stepwise registration comprises at least a two-step registration where the correlation of the first image to the second image is improved in each step by using the information from previous step(s), i.e. minimizing the error and improving the alignment of the first and the second image and thus providing an improved set of deformation parameters. This may improve image registration and facilitate detection of anomalies in the first and/or second image. The anomalies may be tumors, calcifications, cysts, and/or any other anomaly that may be of interest to detect such as benign and/or malignant changes occurring in tissues. The anomalies may be detected by changes in image intensity value and/or local tissue volume expansion/compression derived from the registration. Generally, the method has shown to be advantageous in aligning any two images acquired by the method depicting features of an object (for example when aligning images from the same object at different points in time) or objects (for example when aligning images from different objects). The method has shown to be especially advantageous for images containing large imaged volumes, for example images containing at least the abdomen and/or at least the torso of an object. Typically, with increased depicted areas and/or volumes the complexity of the images and thus the registration thereof are increased. However, the method has shown to overcome the increased complexity and provide a facilitated registration for images containing large image volumes. Hence, the image of the object from the x-ray study may typically comprise at least the abdomen, at least the torso of the object and/or the image of the object from the x-ray study may comprise the whole body of the object. Alternatively, the image of the object from the x-ray study may typically comprise at least 50% of the whole body of the object. Further, preferred versions of the registration approach are based on utilizing image data acquired by X-ray studies facilitating the segmentation of the different tissue classes. Images based on X-ray studies are particularly beneficial for segmenting bone tissue as bone tissue is detected with great contrast in X-ray imaging compared to for example MRI imaging.

The images may be for example three-dimensional (3D) images, i.e. volume images, or two-dimensional (2D) images.

A weighted cost function should be understood as a function to be optimized comprising more than one parameter, wherein each parameter is associated with a corresponding weight factor. The parameters may typically be a correlation of at least part of the first image to at least parts of the second image.

The second registration is preferably based on the first set of deformation parameters obtained from the first registration, this means that the second registration may use the deformation parameters from the first registration directly or the second registration may use a set of deformation parameters from any registration step between the first and second registration that in turn is based on the deformation parameters form the first registration and outputs a new set of deformation parameters that may be used in the second registration. This way of stepwise improving the deformation parameters in each step of registration will even further improve the alignment of the first image to the second image. In other words, when performing the second registration the deformation parameters from a preceding registration step, which may be the first set of deformation parameters, further improve the second registration providing an improved alignment of the first image to the second image. In yet other words, the deformation parameters from a preceding registration step may be used when performing the second registration and may be the deformation parameters from the first registration, i.e. first set of deformation parameters, or any intermediate step of registration that may be performed after the first registration and before the second registration. Analogously, the deformation parameters from the first registration, i.e. the first set of deformation parameters may be used in any subsequent steps of deformation and/or registration, such as the second registration or any intermediate step of registration that may be performed after the first registration. Alternatives thereof will be more apparent in the examples disclosed below.

The deformation parameters may be referred to as a deformation field, where the deformation field may comprise vectors for each voxel or pixel in the image. The set of deformation parameters may be used as an initial guess of deformation (or transformation if you will) for the whole or at least part of the first image to align to the second image. In other words, the set of deformation parameters may comprise voxelwise or pixelwise transformation information for all or part of the voxels or pixels in the first image.

The first registration preferably takes into account bone tissue which has shown to be favorable as the first tissue class to use when performing the first registration, since bone is relatively ridgid compared to other tissue classes within an object and when bone tissue is registered the surrounding tissue tends to keep a relative distance from the bones that is fairly similar between objects. By bone tissue it is hereby meant tissue within an object comprising substantially bone having Hounsfield values of more than 150, preferably more than 200. Hounsfield values of 150 - 350 may typically be associated with low density bone tissue.

The first registration may provide a first set of constraint parameters defining a set of image voxels in the first image associated with the first tissue class and the second registration may take the first set of constraint parameters into account by the first set of constraint parameters defining a set of voxels in the first image having a predefined limitation of registering when preforming the second registration.

Generally, the constraint parameters may define voxels where transformation thereof may be limited or not needed according to the predefined limitation when performing a subsequent step of registration, since a transformation thereof has already been performed, which may provide even further improved accuracy of the registration since tissue classes already used when registering, may be registered according to the predefined limitation when performing subsequent registration steps. Accordingly, the predefined limitation of registering may be defined as number of voxels allowed for the voxels to be transformed when performing a subsequent registration step. This may reduce the risk of having image voxels to be misplaced during a subsequent registration step, since registration may be performed for different tissue class(es) than the tissue class used to obtain the actual constraint parameters. The voxels defined by the constraint parameters may hence depict parts of an object allowed to have a limited transformation or be locked into position, i.e. not allowed to be transformed at all in order to align the first image in any of the subsequent steps. For example, the voxels defined by the constraint parameters from the first registration may define voxels to be locked into position or voxels allowed to transform within a defined number of voxels, such that these voxels during subsequent registration steps, such as the second registration, will be less affected by the registration than other voxels in the first image. Accordingly, the amount of data to process when performing the second registration may be reduced or limited by applying the set of constraint parameters since voxels defined by the set of constraint parameters may in at least some embodiments be excluded from the second registration.

According to a preferred example the registration method comprises obtaining a second tissue class first subimage associated with the first image and comprising information of a second tissue class in the first image, and obtaining a second tissue class second subimage associated with the second image and comprising information of the second tissue class in the second image, wherein the second tissue class is selected from a group comprising lean soft tissue and fat tissue. The correlation of at least part of the first image to at least part of the second image in the second registration comprises optimization of a second weighted cost function, the second weighted cost function comprising the sum of a correlation of the first image to the second image with a first weight factor of the second registration and a correlation of the second tissue class first subimage to the second tissue class second subimage with a second weight factor of the second registration, the first and second weight factors of the second registration are nonzero. The second registration may provide a second set of constraint parameters defining a set of image voxels in the first image associated with the second tissue class. The second set of deformation parameters are obtained from the optimization.

This registration approach is advantageous in providing an improved registration of the first image to the second image, by providing the second set of deformation parameters, since a correlation is performed of both the holistic information of first image to the second image and the specific information of the first image to the second image, i.e. by registering the images with respect to lean soft tissue or fat tissue. In other words, the second set of deformation parameters further defines translation of first image voxels in order to align with the second image. This has shown to further increase the accuracy of the registration and reduce the error of alignment between the first and second image. Further, by the second registration providing a second set of deformation parameters this may further define voxels in the first image where transformation thereof may be limited or not needed according to the predefined limitation when performing a subsequent registration step.

The registration method may further comprise obtaining a third tissue class first subimage of the second registration associated with the first image and comprising information of a third tissue class in the first image and obtaining a third tissue class second subimage of the second registration associated with the first image and comprising information of a third tissue class in the second image, wherein the second tissue class is lean soft tissue and the third tissue class is fat tissue. The second weighted cost function may comprise the sum of a correlation of the first image to the second image with a first weight factor of the second registration, a correlation of the second tissue class first subimage to the second tissue class second subimage with a second weight factor of the second registration and a correlation of the third tissue class first subimage to the third tissue class second subimage with a third weight factor of the second registration, the first, second and third weight factors of the second registration are nonzero. The second registration further provides constraint parameters to the second set of constraint parameters defining a set of image voxels in the first image associated with the third tissue class. By lean soft tissue it is hereby meant tissue within an object comprising body organs, muscle tissue etc. having Hounsfield values of -29 to 150. By fat tissue it is hereby mean tissue within an object having a composition substantially fat, having a Hounsfield values between -190 to -30.

By registering the first image by optimizing the weighted cost function comprising both fat tissue information and lean soft tissue information a further improved registration of the first image to the second image may be provided, since the second weighted cost function comprises correlation of both the holistic information of first image to the second image and the correlation of both fat and lean soft tissue in the first image and the second image, thus providing even further improved deformation parameters from the second registration.

According to an example the registration method comprises obtaining a fourth tissue class first subimage associated with the first image and comprising information of composed tissues in the first image and obtaining a fourth tissue second subimage associated with the second image and comprising information of composed tissues in the second image. The composed tissues are defined as tissues enclosed by subcutaneous fat in the first and second image respectively. The method further comprises obtaining a fifth tissue class first subimage associated with the first image and comprising information of fat tissue in the first image and obtaining a fifth tissue class second subimage associated with the second image and comprising information of fat tissue in the second image. The method further comprises an intermediate registration of the first image to the second image based on the first set of deformation parameters, wherein the intermediate registration comprises optimization of a third weighted cost function comprising the sum of a correlation of the first image to the second image with a first weight factor of the intermediate registration, a correlation of the fourth tissue class first subimage to the fourth tissue class second subimage with a second weight factor of the intermediate registration, and a correlation of the fifth tissue class first subimage to the fifth tissue class second subimage with a third weight factor of the intermediate registration, the first, second and third weight factors of the intermediate registration are nonzero. An intermediate set of deformation parameters associated with a transformation of the first image to the second image are obtained from the optimization and the second registration is based on the intermediate set of deformation parameters. By tissues enclosed by subcutaneous fat should be understood as any tissue or air allocated in the object excluding the subcutaneous fat, i.e. tissues or air defined in the first image and second image, respectively, after the subcutaneous fat and possibly the contour of the object has each been removed.

This registration method example is advantageous by further improving the accuracy of the registration by adding a step to the stepwise registering. As explained above the second registration may use a set of deformation parameter from any registration step between the first and second registration that in turn is based on the deformation parameters form the first registration. Hence, the second registration may use the set of intermediate deformation parameters from the intermediate registration, accordingly, the second step of registration may use an even improved set of deformation parameters further improving the accuracy of the registration.

The intermediate registration may take the first set of constraint parameters into account by the first set of constraint parameters defining at least one set of voxels in the first image having a predefined limitation of registering when preforming the intermediate registration.

Further, the intermediate registration may provide a third set of constraint parameters defining at least one set of image voxels in the first image associated with the composed tissues, and the second registration may further take the third set of constraint parameters into account by the third set of constraint parameters defining at least one set of voxels in the first image having a predefined limitation of registering when preforming the second registration.

The third set of constraint parameters may define voxels on the border between the tissues enclosed by the subcutaneous fat and the subcutaneous fat in the first image. The third set of constraint parameters may further restrict voxels enclosed by the subcutaneous fat from being registered outside the border between the tissues enclosed by the subcutaneous fat and the subcutaneous fat in any subsequent step of registration.

According to an example the registration method further comprises obtaining a sixth tissue class first subimage associated with the first image and comprising information of a sixth tissue class in the first image, and obtaining a sixth tissue class second subimage associated with the second image and comprising information of the sixth tissue class in the second image, wherein the sixth tissue class is subcutaneous fat. The method further comprises a third registration of the first image to the second image, wherein the third registration comprises optimization of a fourth weighted cost function comprising the sum of a correlation of the first image to the second image with a first weight factor of the third registration and a correlation of the sixth tissue class first subimage to the sixth tissue class second subimage with a second weight factor of the third registration, the first and second weight factors of the third registration are nonzero. A third set of deformation parameters associated with a transformation of the first image to the second image are obtained from the optimization.

This registration example is advantageous in further improving the registration of the first image to the second image wherein the registration is further based on subcutaneous fat and thus obtaining improved deformation parameters providing an increased accuracy of the registration and/or any deformation based on the deformation parameters.

The third registration may take at least the first set of constraint parameters into account, by the first set of constraint parameters defining a set of voxels in the first image having a predefined limitation of registering when preforming the third registration.

The third registration may take at least the first and second sets of constraint parameters into account when the first and second sets of constraint parameters are respectively present, by the first and second set of constraint parameters defining a respective set of voxels in the first image having a predefined limitation of registering when preforming the third registration. The third registration may take at least the first, second and third set of constraint parameters into account when the first, second and third sets of constraint parameters are respectively present, by the first, second and third set of constraint parameters defining a respective set of voxels in the first image having a predefined limitation of registering when preforming the third registration.

It should be understood that the first, second and third constraint parameters may all comprise different limitations to the voxels defined by the respective set of constraint parameters. In other words, constraint parameters from the first registration may define a first predefined limitation of registering. Constraint parameters from the second registration may define a predefined limitation of registering, e.g. a second predefined limitation of registering. Constraint parameters from the intermediate registration may define a predefined limitation of registering, e.g. a third predefined limitation of registering.

By further using the constraint parameters from all or at least part of the preceding steps of image registration when performing the third registration an improved registration of the first image to the second image may be provided since the tissue classes already registered in the preceding steps are limited in the third registration according to a predefined limitation of registering. In other words, this may be advantageous by minimizing the error of the alignment of the first and the second image and thus providing an improved set of deformation parameters as the previously registered tissue classes may be locked into position and may not be allowed to be altered during the third registration step. This may in turn provide improved registration and/or deformation of at least one of the first and second image in possible subsequent steps.

According to a preferred example each step of obtaining a respective tissue class subimage associated with the first image comprises identifying based on the data in the first image a first set of first image voxels associated with the respective tissue class in the first image and wherein the first set of first image voxels represents the respective tissue class based on the data in the first image, and creating a subimage associated with the first image from the identified first set of first image voxels in the first image. Each step of obtaining a respective tissue class subimage associated with the second image comprises identifying based on the data in the second image a second set of second image voxels associated with the respective tissue class in the second image and the second set of second image voxels represents the respective tissue class based on the data in the second image, and creating a subimage associated with the second image from the identified second set of second image voxels in the second image.

This example is advantageous in providing facilitated segmentation of the first and second image and thus provides a facilitated registration of the first image to the second image.

Each respective correlation of the first image to the second image may be selected from a group comprising normalized cross correlation, sum of squared differences and mutual information and wherein each correlation of each first subimage to each respective second subimage may be selected from a group comprising normalized cross correlation, sum of squared differences and mutual information.

The registration method may comprise affine registration of the first tissue class first subimage to the first tissue class second subimage, wherein an initial set of deformation parameters associated with a transformation of the first image to the second image are obtained from the affine registration. The first registration may be based on the initial set of deformation parameters.

Performing an affine registration prior to the first registration may be advantageous by providing the initial set of deformation parameter that may be used an initial guess for the first registration, thus facilitating the subsequent steps of image registration.

The registration method may also comprise image cropping of the first tissue class first subimage and the first tissue class second subimage according to a predetermined cropping region.

By cropping the respective first tissue class first subimage and the first tissue class second subimage, a facilitated registration may be provided having less data to register. Further, by registering a predefined cropping region the registering may be facilitated by limiting data and ensuring the right data is included in the subsequent step of registering. For example, the images may be cropped such that a known ROI is used when performing the image registration.

The registration method may comprise initial image adjustment of a first pre-image of the first image and of a second pre-image of the second image, wherein the initial image adjustment outputs the first and second image, respectively, and comprises at least one of intensity scaling comprising linear or non-linear intensity scaling of the first and second pre-image, respectively and image filtering comprising applying at least one of a mean filter, a median filter and a Sobel filter to the first and second pre-image, respectively.

Intensity scaling may be advantageous in providing a first and second image with intensities therein being scaled and adapted to further facilitate distinguishing the different tissue classes in at least one of the subsequent registration steps. Further, by applying an image filter, a facilitated distinguishing of the different tissue classes in at least one of the subsequent registration steps may be provided. For example, applying a Sobel filter to the first and second pre-image edge detection of the images is facilitated which may further facilitate distinguishing the different tissue classes, particularly bone tissue. By pre-image it is hereby meant a pre-stage image of the respective first and second image, wherein the output of the initial image adjustment may be the first and second image respectively.

The registration method may comprise deforming the first image based on any of the sets of deformation parameters.

Deforming the first image based on any the sets of deformation parameters may be advantageous in achieving a deformed first image being aligned, i.e. registered with, the second image and thus facilitate comparison of the first image to the second image.

The registration method may also comprise obtaining a third image captured in a Positron Emission Tomography, PET, study, wherein the third image has a known spatial and temporal relationship to the first image. The registration method may further comprise deforming the third image based on any of the sets of deformation parameters.

Deforming the third image based on any of the sets of deformation parameters may be advantageous in achieving a deformed third image captured in a PET study and align this third image to the second image. For example, the first image comprising data significant from x-ray attenuation from a first medical imaging study may be obtained from a PET-CT scan, wherein the temporal and spatial relationship to the third image is known.

According to one aspect, a system for processing image information comprises a processing unit, wherein the processing unit is configured to perform the registration method according to any one of the preceding examples here above is provided.

This aspect has corresponding advantages as for the first aspect provided above.

A feature described in relation to one aspect may also be incorporated in other aspects, and the advantage of the feature is applicable to all aspects in which it is incorporated.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

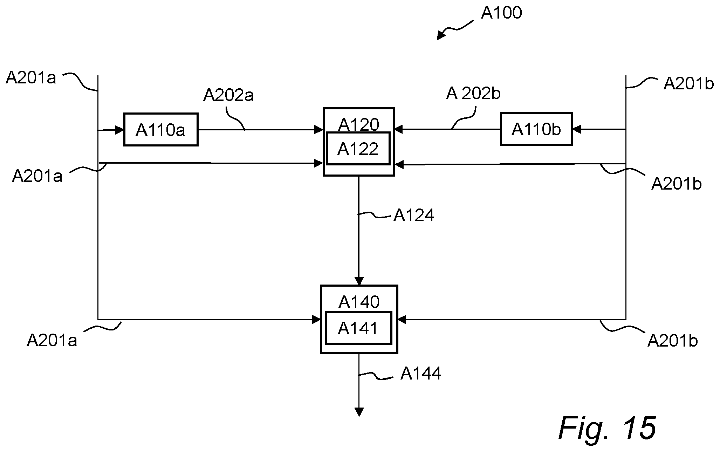

Figure 15 schematically illustrates a method A100 for registering a first image and a second image. For clarity and simplicity, the registration method will be described in terms of 'steps'. It is emphasized that steps are not necessarily processes that are delimited in time or separate from each other, and more than one 'step' may be performed at the same time in a parallel fashion. The first image A201a comprise data significant for x-ray attenuation from a first medical imaging study and the second image A202b comprise data significant for x-ray attenuation from a second medical imaging study. The method comprises obtaining A110a a first tissue class first subimage A202a associated with the first image and comprising information of a first tissue class in the first image A201a. The method further comprises obtaining A110b a first tissue class second subimage A202b associated with the second image A201b and comprising information of the first tissue class in the second image. The first tissue class is bone tissue.

The first tissue class first subimage A202a and the first tissue class second subimage A202b may be obtained in different ways. For example, at least one of the first tissue class first subimage A202a and the first tissue class second subimage A202b may be obtained from a pre-processing of the first and second image A201a, A202b, respectively. Additionally or alternatively, at least one of the first tissue class first subimage A202a and the first tissue class second subimage A202b may be obtained by identifying the first tissue class within the first and/or second image A201a, A202b, respectively. The first tissue class first subimage A202a and/or the first tissue class second subimage A202b may be created from the identified first tissue class in the first and/or second image A201a, A201b, respectively.

The method further comprises a first registration A120 of the first image A201a to the second image A201b, wherein the first registration A120 comprises optimization A122 of a first weighted cost function. The first weighted cost function comprising the sum of a correlation of the first image to the second image with a first weight factor of the first registration and a correlation of the first tissue class first subimage to the first tissue class second subimage with a second weight factor of the first registration. The first and second weight factors of the first registration are nonzero. Hence, the first weighted cost function may take the form: Σ(W11*correlation(first image A201a, second image A201b), W12*correlation(first tissue class first subimage A202a, first tissue class second subimage A202b)), wherein W11 and W12 are the first and second weight factors of the first registration, respectively. A first set of deformation parameters A124 from the first registration A120 associated with a transformation of the first image A201a to the second image A201b are obtained from the optimization A122.

The method further comprises a second registration A140 of the first image A201a to the second image A201b, the second registration A140 comprises correlation A141 of at least part of the first image A201a to at least part of the second image A201b based on the first set of deformation parameters A124, wherein a second set of deformation parameters A144 associated with a transformation of the first image A201a to the second image A201b are obtained from the correlation A141. Accordingly, the correlation A141 may use the first set of deformation parameters directly or indirectly, i.e. when used directly it is hereby meant that the set of deformation parameters may be used as initial guess when performing the correlation A141.

The first and second medical imaging study may be studies performed in a CT scanner (computed tomography scanner). Accordingly, the first and second image may be a respective first and second CT image.

The correlation A141 of at least part of the first image A201a to at least part of the second image A201b may be any type of image correlation where at least part of the first image A201a is registered to at least part of the second image A201b.

It should hence be understood that the method A100 comprises a stepwise registering of the first image A201a to the second image A201b in order to provide improved registering of the first image A201a to the second image A201b. Further, the use of both the first and second image A201a, A201b with respective subimages in the first registration and/or in any succeeding registration steps of the method according to embodiments which will be discussed further down, will provide a registration based on both the image information from the whole image in the respective image which are registered (first and second image) and specific tissue information provided therein. This has shown to increase the accuracy of the registration (of the first and second image) in each respective step where information from the respective first and second image A201a, A201b are used together with the subimages obtained for each respective first and second image A201a, A201b. Additional embodiments with additional steps in the method and a provided system will be discussed to the following drawings.

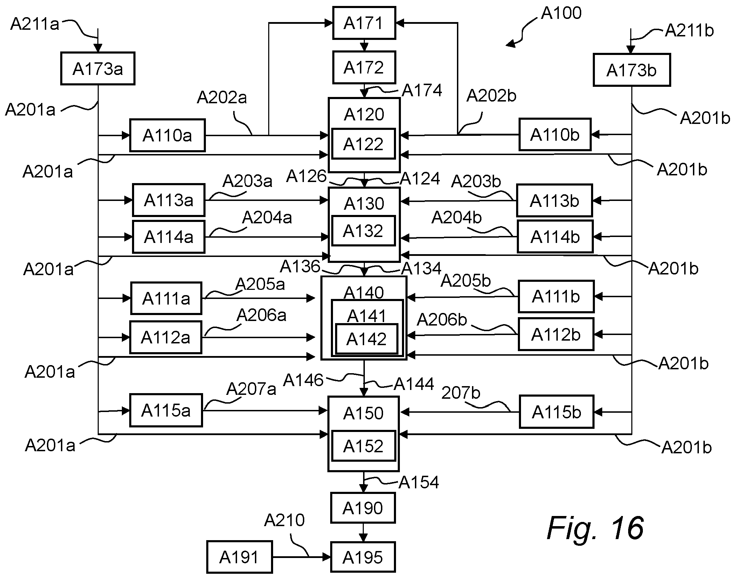

The registration method will now be discussed with reference to Figure 16 schematically illustrating the registration method A100 according to at least one implementation. The registration method shown in Figure 16 is similar to the one shown with reference to Figure 15, for example the first registration is performed identical to what was previously discussed to Figure 15. However, in Figure 16 the method A100 is disclosed comprising additional steps, such as an intermediate registration A130 performed after the first registration A120 and before the second registration A140. Further, Figure 16 shows that the correlation A141 of at least part of the first image to at least part of the second image in the second registration A140 may comprise optimization A142 of a second weighted cost function. In general, each step provides deformation parameters A124, A134, A144, A154 for use in a direct subsequent step of registration and/or a deformation step. The deformation parameters A124, A134, A144, A154 may define a field of vectors for each voxel of at least part of the voxels in the first image indicating the transformation for each respective voxel in order to register the first image to the second image. It should be understood that not all voxels in the image are necessarily defined by the deformation parameters, accordingly at least part of the voxels in the first image may be defined by the deformation parameters. However, it should be understood that all the voxels in the first image may be defined by the deformation parameters. For 3D images, i.e. volume images, these images may be defined in three orthogonal directions, x-direction, y-direction and z-direction. The field of vectors for each voxel of at least part of the voxels in the first image may comprise a vector defined in each respective direction, i.e. in the x-direction, y-direction and z-direction.

The registration method may comprise the intermediate registration A130 of the first image to the second image based on the first set of deformation parameters A124. Hence, the first set of deformation parameters A124 obtained from the first registration A120 may be used as initial guess when performing the initial registration A130.

The method may further comprise obtaining A113a a fourth tissue class first subimage A203a associated with the first image and comprising information of composed tissues in the first image. Further the method may comprise obtaining A113b a fourth tissue second subimage A203b associated with the second image and comprising information of composed tissues in the second image. The composed tissues are defined as tissues enclosed by subcutaneous fat in the first and second image A201a, A201b, respectively.

The composed tissues are defined as tissues enclosed by subcutaneous fat in the first and second image respectively. Preferably, the composed tissues are obtained by subtraction of skin tissue and the subcutaneous fat from the imaged object in the first image. The tissues within the imaged object in the first and second image, respectively, may be detected according to their Hounsfield values (HU). The skin tissue may be detected as soft tissue with HU between -29 and 150 within 5 mm from a contour of the object, such as a body contour. The contour of the object is defined as the outer border of the imaged object. Subcutaneous fat may be identified as HU between 190 and - 30 directly underneath the skin tissue by either manual segmentation or automatic image processing algorithms. Bone tissue may be defined as HU above 150, preferably above 200, soft tissue has HU between -29 and 150, and fat has HU between -190 and -30. The tissues within the imaged object in the first and second image, respectively, may comprise tissue with lower HU values than the listed values such as low density tissue. Low density tissue may typically be tissue within the imaged object having a HU of below -190, preferably lower than -300 or lower than -500. The low density tissue may typically be tissues within the object comprising significantly more air. Air within the object may be defined as HU below -500. Subsequently, the subcutaneous fat and the skin tissue may be subtracted from the detected tissues and low density tissue within the object in order to provide the fourth tissue class first subimage A203a and the fourth tissue second subimage A203b. In other words, the subcutaneous fat and skin tissue may be subtracted from the imaged object in order to provide the fourth tissue class first subimage A203a and the fourth tissue second subimage A203b.

The method may further comprise obtaining A114a a fifth tissue class first subimage A204a associated with the first image and comprising information of fat tissue in the first image. The method may comprise obtaining A114b a fifth tissue class second subimage A204b associated with the second image and comprising information of fat tissue in the second image. In some embodiments, when the third tissue class first subimage A206a and the third tissue class second subimage A206b comprise information of fat tissue in the first and second image respectively, these images may be used as the fifth tissue class first subimage A204a and the fifth tissue class second subimage A204b, respectively.

The intermediate registration A130 may comprise optimization A132 of a third weighted cost function comprising the sum of a correlation of the first image to the second image with a first weight factor of the intermediate registration, a correlation of the fourth tissue class first subimage A203a to the fourth tissue class second subimage A203b with a second weight factor of the intermediate registration, and a correlation of the fifth tissue class first subimage A204a to the fifth tissue class second subimage A204b with a third weight factor of the intermediate registration A130. The first, second and third weight factors of the intermediate registration may be nonzero. Accordingly, the third weighted cost function may take the form: Σ(W31*correlation(first image A201a, second image A201b), W32*correlation(fourth tissue class first subimage A203a, fourth tissue class second subimage A203b), W33*correlation(fifth tissue class first subimage A204a, fifth tissue class second subimage A204b)), wherein W31, W32 and W33 are the first, second and third weight factors of the intermediate registration, respectively.

An intermediate set of deformation parameters A134 associated with a transformation of the first image A201a to the second image A201b may be obtained from the optimization A132 and the second registration A140 may be based on the intermediate set of deformation parameters A134. Accordingly, the intermediate set of deformation parameters A134 may be used as initial guess when performing the second registration A140. The second registration A140 is based on the first set of deformation parameters A124 by using the intermediate deformation parameters A134 which has been deduced by the intermediate registration directly using the first set of deformation parameters A124. In other words, since the intermediate registration A130 directly uses the first set of deformation parameters A124 from the first registration A120, the second registration A140 which uses the intermediate deformation parameters A134 is also based on the first set of deformation parameters A124.

Further, constraint parameters may be provided by each registration step for use in subsequent step(s) of registration. Hence, the constraint parameters may be used in all subsequent steps of registration if more than one is present. The constraint parameters define voxels or pixels in the first image where registration in subsequent step(s) should be limited. Accordingly, the constraint parameters restrict, i.e. limit, the amount of allowed transformation for the defined voxels. The voxels defined by the constraint parameters may be locked into position such that transformation thereof is prohibited. The voxels defined by the constraint parameters may be allowed to move according to a predetermined limitation in subsequent registration steps, which may be defined as number of voxels in each direction in the image, i.e. x-direction, y-direction, and z-direction, for volume images. The predefined limitation may be within 10 voxels, preferably, within 5 voxels, more preferably within 2 voxels, most preferably within 0 voxels. By 0 voxels it should be understood that the voxels defined by the constraint parameters will not be allowed to be transformed when registering, i.e. they may be locked into position. By more than one voxels, such as within 10 voxels, within 5 voxels, and/or within 2 voxels it should be understood that the voxels defined by the constraint parameters will be allowed to transform within the respectively defined voxels in at least one of the x-direction, y-direction and z-direction. Accordingly, constraint parameters may be defined in each registration step of the registration method and subsequent steps of each respective registration step may take the constraint parameters from each respective registration step into account by limiting the registration, i.e. transformation, of voxels in the first image defined by the constraint parameter according to the predetermined limitation. The constraint parameters that may be defined in each registration step of the registration may define voxels based on the tissue class used when registering the first image to the second image in each respective registration step. The respective at least one set of voxels in the first image defined by each respective set of constraint parameters may be associated with voxels comprising the respective tissue class used in each respective registration step.

The correlation A141 of at least part of the first image to at least part of the second image in the second registration A140 may comprise optimization A142 of a second weighted cost function.

The method may also comprise obtaining A111a a second tissue class first subimage A205a associated with the first image and comprising information of a second tissue class in the first image, and obtaining A111b a second tissue class second subimage A205b associated with the second image and comprising information of the second tissue class in the second image. The second tissue class may be selected from a group comprising lean soft tissue and fat tissue. The second weighted cost function may comprise the sum of a correlation of the first image to the second image with a first weight factor of the second registration and a correlation of the second tissue class first subimage to the second tissue class second subimage with a second weight factor of the second registration, the first and second weight factors of the second registration are nonzero. The second set of deformation parameters A144 may be obtained from the optimization A142. Accordingly, the second weighted cost function may take the form: Σ(W21*correlation(first image A201a, second image A201b), W22*correlation(second tissue class first subimage A205a, second tissue class second subimage A205b)), wherein W21 and W22 are the first and second weight factors of the second registration, respectively.

The method may further comprise obtaining A112a a third tissue class first subimage A206a of the second registration associated with the first image and comprising information of a third tissue class in the first image and obtaining A112b a third tissue class second subimage A206b of the second registration associated with the first image and comprising information of a third tissue class in the second image A201b. The second tissue class may be lean soft tissue and the third tissue class may be fat tissue. The second weighted cost function may comprise the sum of a correlation of the first image to the second image with a first weight factor of the second registration, a correlation of the second tissue class first subimage A205a to the second tissue class second subimage A205b with a second weight factor of the second registration and a correlation of the third tissue class first subimage A206a to the third tissue class second subimage A206b with a third weight factor of the second registration, the first, second and third weight factors of the second registration are nonzero. Accordingly, the second weighted cost function may take the form: Σ(W21*correlation(first image A201a, second image A201b), W22*correlation(second tissue class first subimage A205a, second tissue class second subimage A205b), W23*correlation (third tissue class first subimage A206a, third tissue class second subimage A206b)), wherein W21, W22, W23 are the first, second and third weight factors of the second registration, respectively. By lean soft tissue it is hereby meant tissue within an object comprising at least one of body organs, muscle tissue, body water, skin tissue, tendons, connective tissues etc., having Hounsfield values of -29 to 150. The lean soft tissue may typically be fat-free and bone mineral-free components of the object. By fat tissue it is hereby mean tissue within an object having a composition comprising substantially fat, having a Hounsfield values between -190 to -30.

The first registration A120 may provide a first set of constraint parameters 126 defining a set of image voxels in the first image associated with the first tissue class and the second registration A140 may take the first set of constraint parameters A126 into account by the first set of constraint parameters A126 defining a set of voxels in the first image having a predefined limitation of registering when preforming the second registration A140.

The set of image voxels in the first image associated with the first tissue class defined by the first set of constraint parameters A126 may hence have a limited registration when performing subsequent registration steps, such as the second registration and the intermediate registration when the respective registration steps are present.

The second registration may provide a second set of constraint parameters A146 defining a set of image voxels in the first image associated with the second tissue class. The second registration may further provide constraint parameters to the second set of constraint parameters A146 defining a set of image voxels in the first image associated with the third tissue class. Accordingly, the second set of constraint parameters A146 may be defining a set of image voxels in the first image associated with the second tissue class and third tissue class. Any subsequent step of image registration may thus limit the registration of the voxels defined by the second set of constraint parameters A146.

Further, the predefined limitation of registering in each respective set of deformation parameters may be the same for each respective set of deformation parameters. Alternatively or optionally, the predefined limitation of registering in each respective set of deformation parameters for at least two sets of deformation parameters of the sets of deformation parameters may be different, i.e. the voxels defined in the first registration may be limited according to a first predefined limitation that allows for less transformation in subsequent steps than for example voxels defined by the intermediate deformation parameters, i.e. the intermediate predefined limitation.

The intermediate registration A130 may take the first set of constraint parameters A126) into account by the first set of constraint parameters A126 defining at least one set of voxels in the first image having a predefined limitation of registering when preforming the intermediate registration A130.

The at least one set of voxels in the first image may be associated with voxels comprising the first tissue class, i.e. bone tissue.

Further, the intermediate registration may provide a third set of constraint parameters A136 defining at least one set of image voxels in the first image associated with the composed tissues, and the second registration A140 may further take the third set of constraint parameters into account by the third set of constraint parameters defining at least one set of voxels in the first image having a predefined limitation of registering when preforming the second registration A 140.

The at least one set of image voxels in the first image associated with the composed tissues may be voxels on the border between the tissues enclosed by the subcutaneous fat and the subcutaneous fat in the first image. The tissues enclosed by the subcutaneous fat should be understood as tissues and/or organs within an object. For humans and/or animals the tissues enclosed by the subcutaneous fat are typically all the organs and tissues within the body of the object. No further elaboration of the organs or tissues enclosed by the subcutaneous fat will hereby be discussed as the organs and/or different tissues present is well known in the art and the organs and/or tissues per se is not the object of the present method with respect to the intermediate registration.

Accordingly, the third set of constraint parameters A136 may define voxels on the border between the tissues enclosed by the subcutaneous fat and the subcutaneous fat in the first image.

The method further comprises a third registration A150 of the first image to the second image.

The method may comprise obtaining A115a a sixth tissue class first subimage A207a associated with the first image and comprising information of a sixth tissue class in the first image, and obtaining A115b a sixth tissue class second subimage A207b associated with the second image and comprising information of the sixth tissue class in the second image, wherein the sixth tissue class is subcutaneous fat. The third registration A150 may comprise optimization A152 of a fourth weighted cost function comprising the sum of a correlation of the first image A201a to the second image A201b with a first weight factor of the third registration A150 and a correlation of the sixth tissue class first subimage A207a to the sixth tissue class second subimage A207b with a second weight factor of the third registration, the first and second weight factors of the third registration are nonzero. A third set of deformation parameters A154 associated with a transformation of the first image A201a to the second image A201b are obtained from the optimization A152. Hence, the fourth weighted cost function may take the form: Σ(W41*correlation(first image A201a, second image A201b), W42*correlation(sixth tissue class first subimage A207a, sixth tissue class second subimage A207b)), wherein W41 and W42 are the first and second weight factors of the third registration, respectively.

Alternatively, the third registration A150 may comprise optimization A152 of a cost function comprising a correlation of the sixth tissue class first subimage A207a to the sixth tissue class second subimage A207b.

The third registration A150 may take any set of deformation parameters present into account, by the present set of deformation parameters defining a set of voxels in the first image A201a having a predefined limitation of registering when preforming the third registration A150.

Accordingly, the third registration A150 may take at least the first set of constraint parameters A126 into account, by the first set of constraint parameters A126 defining a set of voxels in the first image A201a having a predefined limitation of registering when preforming the third registration A150.

Further, the third registration A150 may take the second set of constraint parameters A146 into account, by the second set of constraint parameters A146 defining a set of voxels in the first image A201a having a predefined limitation of registering when preforming the third registration.

Even further, the third registration A150 may the third set of constraint parameters A136 into account, by the third set of constraint parameters A136 defining set of voxels in the first image A201a having a predefined limitation of registering when preforming the third registration.

Accordingly, the first, second and third set of constraint parameters A126, A146, A136, when respectively present, may define a respective set of voxels, which may be superimposed into a combined set of voxels used as constraint parameters in the third registration A150.

Each respective correlation of the first image A201a to the second image A201b may be selected from a group comprising normalized cross correlation, sum of squared differences and mutual information. Each correlation of each first subimage A202a, A203a, A204a, A205a, A206a, A207a to each respective second subimage A202b, A203b, A204b, A205b, A206b, A207b may be selected from a group comprising normalized cross correlation, sum of squared differences and mutual information.

The method may comprise affine registration A172 of the first tissue class first subimage A202a to the first tissue class second subimage A202b, wherein an initial set of deformation parameters A174 associated with a transformation of the first image A201a to the second image A201b are obtained from the affine registration A172. The first registration A120 may be based on the initial set of deformation parameters A174.

The initial set of deformation parameters may be used as an initial guess of registration for the first registration A120.

The method may also comprise image cropping A171 of the first tissue class first subimage A202a and the first tissue class second subimage A202b according to a predetermined cropping region.

Typically, the predetermined cropping region defines a predetermined volume of the object. This may for example be a specific volume of the body comprising anatomical sections of the body such as the torso, the head, the chest, the abdomen, the arms and/or the legs.

The affine registration A172 in combination with image cropping A171 may provide piecewise affine registration of the first tissue class first subimage A202a to the first tissue class second subimage A202b, wherein each cropped and affine registered part of the respective image may be merged into a respective complete first tissue class first subimage A202a and first tissue class second subimage A202b, respectively, of the object after the affine registration step A172. Hence it should be understood that the affine registration may be performed on different cropped regions of the first tissue class first subimage A202a and the first tissue class second subimage A202b, respectively. Accordingly, a facilitated affine registration A172 of first tissue class first subimage A202a to the first tissue class second subimage A202b may be provided.

The method may comprise initial image adjustment A173a, A173b of a first pre-image A211a of the first image and of a second pre-image A211b of the second image, wherein the initial image adjustment A173a, A173b outputs the first and second image A201a, A201b, respectively, and comprises at least one of intensity scaling comprising linear or non-linear intensity scaling of the first and second pre-image, respectively and image filtering comprising applying at least one of a mean filter, a median filter and a Sobel filter to the first and second pre-image, respectively A211a, A211b.

The method may further comprise deforming A190 the first image based on any of the sets of deformation parameters A124, A134, A144, A154. Each registration step may hence calculate the deformation parameters indicating a deformation of the first image to align or register with the second image. The deforming A190 may result in a registered image, wherein the registered image may be the deformed first image after deforming A190 the first image using any the sets of deformation parameters A124, A134, A144, A154. Any one of the deformation parameters may be used when deforming the first image to the second image. Preferably, the deforming A190 of the first image may be based on the deformation parameters from the directly preceding registration step.

In at least one implementation, the method may also comprise obtaining A191 a third image A210 captured in a Positron Emission Tomography, PET, study, wherein the third image has a known spatial and temporal relationship to the first image. The method may further comprise deforming A195 the third image based on any of the sets of deformation parameters A124, A134, A144, A154.

For example, the third image and the first image may both be captured in the same study, i.e. in the same apparatus, wherein the first and third images may be captured in a PET-CT scan. This may facilitate deducing the spatial and temporal relationship between the third and the first image.

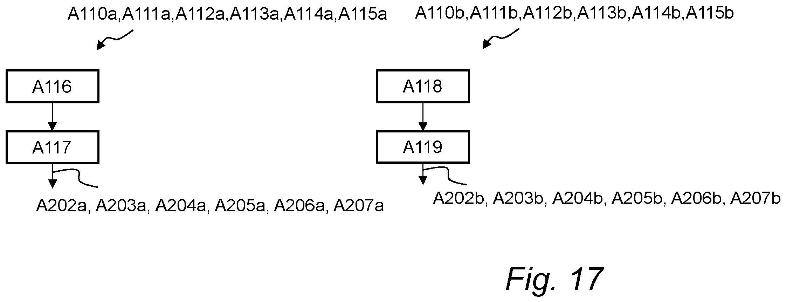

With reference to Figure 17 the respective step of obtaining A110a, A111a, A112a, A113a, A114a, A115a a respective tissue class subimage associated with the first image and the respective step of obtaining A110b, A111b, A112b, A113b, A114b, A115b a respective tissue class subimage associated with the second image will be discussed. The steps of obtaining may be performed in one step where the first and second image are segmented such that each respective subimage is obtained or the steps may each be separate steps where each step of obtaining A110a, A111a, A112a, A113a, A114a, A115a a respective tissue class subimage associated with the first image may comprise identifying A116 based on the data in the first image a first set of first image voxels associated with the respective tissue class in the first image. The first set of first image voxels may represent the respective tissue class based on the data in the first image. Each step of obtaining A110a, A111a, A112a, A113a, A114a, A115a may further comprise creating A117 a subimage associated with the first image from the identified first set of first image voxels in the first image.

Further, each step of obtaining A110b, A111b, A112b, A113b, A114b, A115b a respective tissue class subimage associated with the second image comprises identifying A118 based on the data in the second image a second set of second image voxels associated with the respective tissue class in the second image and the second set of second image voxels represents the respective tissue class based on the data in the second image, and creating A119 a subimage associated with the second image from the identified second set of second image voxels in the second image.

Since not all of the steps of obtaining may be present, at least one of the steps of obtaining A110a, A111a, A112a, A113a, A114a, A115a the respective first tissue class first subimage A202a, fourth tissue class first subimage A203a, fifth tissue class first subimage A204a, second tissue class first subimage A205a, third tissue class first subimage A206a, sixth tissue class first subimage A207a, each being associated with the first image A201a may comprise identifying A116 based on the data in the first image A201a a respective first set of first image voxels associated with the respective tissue class in the first image A201a. The respective first set of first image voxels may represent the respective tissue class based on the data in the first image A201a. The at least one step of obtaining A110a, A111a, A112a, A113a, A114a, A115a may further comprise creating A117 at least one of the first tissue class first subimage A202a, fourth tissue class first subimage A203a, fifth tissue class first subimage A204a, second tissue class first subimage A205a, third tissue class first subimage A206a, sixth tissue class first subimage A207a, each being associated with the first image A201a, from the identified respective first set of first image voxels associated with the respective tissue class in the first image.

Further, at least one of the steps of obtaining A110b, A111b, A112b, A113b, A114b, A115b the respective the first tissue class second subimage A202b, fourth tissue second subimage A203b, fifth tissue class second subimage A204b, second tissue class second subimage A205b, third tissue class second subimage A206b, sixth tissue class second subimage A207b each being associated with the second image A201b may comprise identifying A118 based on the data in the second image A201b a respective second set of second image voxels associated with the respective tissue class in the second image A201b. The respective second set of second image voxels may represent the respective tissue class based on the data in the second image A201b. The at least one step of obtaining A110b, A111b, A112b, A113b, A114b, A115b may further comprise creating A119 at least one of the first tissue class second subimage A202b, fourth tissue second subimage A203b, fifth tissue class second subimage A204b, second tissue class second subimage A205b, third tissue class second subimage A206b, sixth tissue class second subimage A207b, each being associated with the second image A201b, from the identified respective second set of second image voxels associated with the respective tissue class in the second image.

It should be understood that the subimages may be obtained in various ways such as a joint step wherein all subimages or part of the subimages are created in the same step or the subimages may be created outside the method. For example, the subimages may be obtained from a preprocessing step where the images may be segmented, i.e. each tissue class being identified and separated.

Each cost function in at least one of the steps of registration A120, A130, A140, A150 may each further comprise applying at least one regularization term with corresponding regularization weight factor, RW, wherein the regularization weight factor may be applied voxelwise in each respective registration step. The regularization weight factor may have a value depending on the tissue class in the first and second images A201a, A201b used in the respective registration step. In other words, the corresponding regularization weight factor, RW, may be specific for the tissue class in each respective voxel.

By corresponding regularization weight factor it is meant a weight defining the amount of deformation allowable for the specific tissue class. E.g. more dense tissue, such as bone, may not be allowed to deform as much as less dense tissue, such as lean soft tissue or fat tissue. Hence, a higher corresponding regularization weight factor may be applied on bone tissue than in for example lean soft tissue, fat tissue and/or subcutaneous fat. Applying the regularization term with corresponding regularization weight factor may be advantageous in improving the accuracy of the registration where the registration takes into account the tissue class in each respective voxel.

It should be understood that the regularization term in each registration step may further facilitate restricting neighboring voxels defined in each respective constrain parameters associated with the respective tissue class from being registered in a complete opposite direction relative to the voxels defined by the constraint parameters, i.e. voxels not defined in the constraint parameters and significant for tissues arranged in a positive x- y- or z-direction relative to voxels defined by the constraint parameters may not be transformed to have a negative z- y- or z-direction relative to the voxels defined by the constraint parameters.

Accordingly, each voxel comprising bone tissue in each respective registration step may have a first regularization weight factor, RW1, of between 0.6 and 0.8, preferably 0.7. Each voxel comprising fat, subcutaneous fat and/or lean soft tissue in each respective registration step may have a second regularization weight factor, RW2, of between 0.15 and 0.25, preferably 0.20. For example, in the first registration A120 when bone tissue is used in the optimization A122, the first registation may apply a regularization term with a corresponing first regularization weight factor, RW1, to bone voxels during the optimization A122 of the first weighted cost function. In other words, the first registation may apply a regularization term with a corresponing first regularization weight factor, RW1, when correlating the first tissue class first subimage A202a to the first tissue class second subimage A202b. Further, in the first registration step the first image is registered to the second image and hence, RW2 may be applied for voxels comprising fat, subcutaneous fat and/or lean soft tissue.

As another example, in the second registration A140 when fat and/or lean soft tissue is used in the optimization A142, the second registration may apply a regularization term with a corresponding second regularization weight factor, RW2, to fat and/or lean soft tissue during the optimization A142 of the second weighted cost function. In other words, the second registration may apply a regularization term with corresponding second regularization weight factor, RW2, when correlating the second tissue class first subimage A205a to the second tissue class second subimage A205b. Further, in the second registration step the first image is registered to the second image and hence, the first regularization weight factor, RW1, may be applied for voxels comprising bone tissue.

For voxels containing air a regularization weight factor of 0.1 may be applied in each corresponding registration step where a cost function is applied.

Generally, each registration step applies the regularization term with corresponding regularization weight factor by
(1-RW)* the respective weighted cost function +RW*regularization term, wherein the respective weighted cost function is the cost function of each respective registration step.

It should be understood that the regularization term may comprise the first derivative of the deformation parameters squared, i.e. the first derivative of the deformation field squared. Alternatively, the regularization term may comprise the second derivative of the deformation parameters squared, i.e. the second derivative of the deformation field squared.

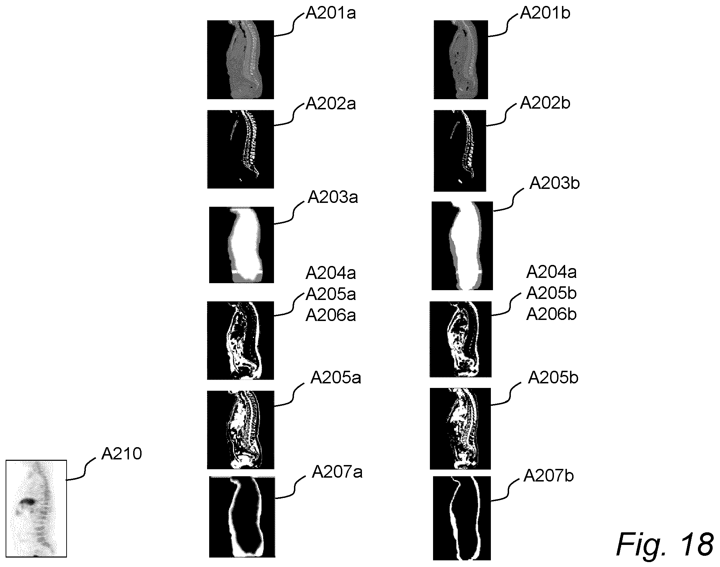

With reference to Figure 18 the images in the method are exemplified.

Each subimage may be a binary image. The subimages may comprise a value of 0 for voxels outside the respective tissue class of which the subimage is associated. The subimages may comprise a value of 1 for voxels significant for the respective tissue class of which the subimage is associated.

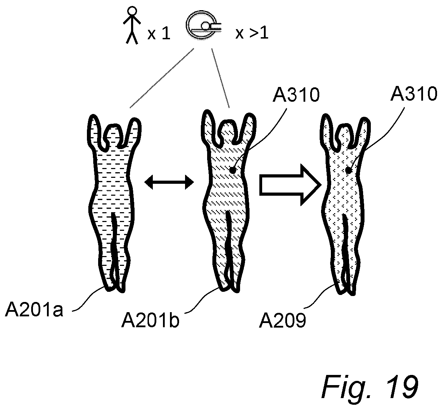

With reference to Figure 19 registration of images according to at least one implementation will be discussed. The registration of images in Figure 19 is identical to the method of registration according to anyone of the previous implementations previously discussed. The first image A201a may be registered to the second image A201b into a registered first image A209. After the registration the registered first image A209 may be compared to the second image A201b. Accordingly, the first image A201a may be registered to the second image A201b, wherein the first and second images A201a, A201b may be captured at two different points in time for the same object. In other words, the first image A201a registered to the second image A201b may result in a registered image A209 that may be compared to at least one image captured at a previous point in time such as the the second image A201b. It should be understood that a plurality of second images A201b may be used, wherein the plurality of second images A201b may be captured at different points in time, wherein the plurality of second images A201b are captured prior to the first image A201a. The plurality of second images A201b may all be registered to align with each other and the first image A201a may be registered to the plurality of second images A201b. Registration of the first image A201a to the second image A201b may facilitate detecting anomalies A310 in an object that occurs over time. The anomalies may be tumors, calcifications, cysts, and/or any other anomaly that may be of interest to detect such as benign and/or malignant changes occurring in healthy tissues. The anomalies may be detected by changes in image intensity value and/or local tissue volume expansion/compression derived from the registration. Accordingly, this may facilitate tracking the progress of the health status of an object over time. It should be understood that registration according the registration in Figure 19 may equally be applied to any images with a known spatial and temporal relationship to the first and second images A201a, A201b. The images with a known relationship to first and second images may comprise data from CT studies and/or Positron Emission Tomography, PET, studies.

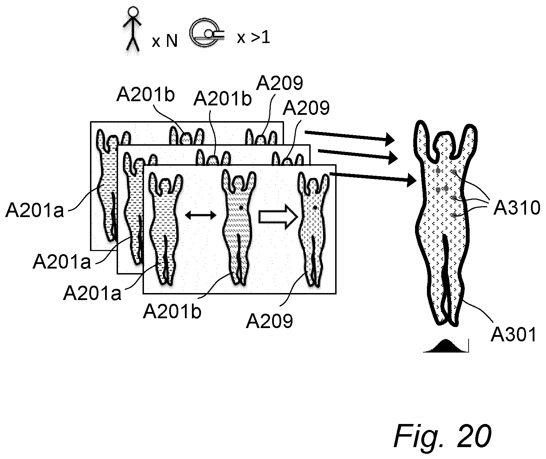

With reference to Figure 20 registration of images according to at least one implementation will be discussed. The registration of images in Figure 20 is identical to the registration according to anyone of the previous implementations previously discussed. A respective set of first and second images A201a, A201b may each be registered resulting in a respective registered first image A209. The registration of each set of first and second images A201a, A201b is identical to what was discussed in Figure 19. However, the respective set of first and second images may each be associated with different objects, e.g. different humans. Each registered first image A209 may subsequently be registered to each other forming a statistical first registered image A301 comprising information from each registered first image A209. One of the registered first images A209 may form the first image according to the method wherein another of the registered first images A209 may form the second image according to the method. Accordingly, a first registered image of the registered first images may be registered to a second registered image of the registered first images. Hence, each registered image may be iteratively registered to each other forming the statistical first registered image A301. In other words, a set of images of the registered first images may each be registered to the second registered image of the registered first images according to the method. Each registered first image A209 may comprise information on anomalies of each object from the respective first image A201a. Accordingly, the statistical first registered image A301 may comprise information on anomalies A310 from each respective registered first image A209, where the anomalies and the detection thereof are identical to the anomalies and the detection thereof as discussed to Figure 19. This may facilitate comparisons between the detected anomalies in the different imaged objects. Comparisons may similarly be made between subgroups of different imaged objects, thus providing statistical parameters describing their difference. The registration of images in Figure 6 may equally be applied to any images with a known spatial and temporal relationship to the first and second images. The images with a known relationship to first and second images may comprise data from CT studies and/or Positron Emission Tomography, PET, studies.

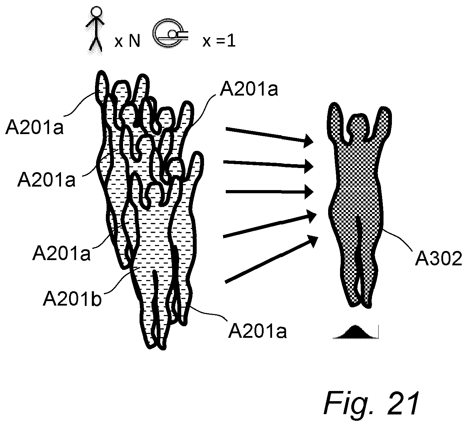

With reference to Figure 21 registration of images according to at least one implementation will be discussed. A plurality of first images A201a may be registered to a common space. For example, one of the images in the plurality of first images A201a may form the second image A201b according to the method. Each of the plurality of first images A201a may hence be deformed according to the registration of each first image A201a to the second image A201b. Subsequently, each one of the plurality of first images A201a and the second image A201b may be superimposed into a statistical image A302. The statistical image A302 may further comprise information from the plurality of first images A201a and the second image A201b. This may be advantageous in providing a statistical distribution of for example healthy objects. The statistical image A302 may form the second image A201b according to the method such that another image of a human and/or animal, forming the first image A201a, may be registered to the statistical image A302. This may further facilitate diagnosing the human and/or animal by comparing the first image A201a of the human and/or animal to the statistical image A302. By performing this comparison, the statistical distribution from the plurality of first images A201a may be utilized to detect anomalies in the first image A201a. The anomalies and the detection thereof are identical to the anomalies and the detection thereof as discussed to Figures 19 and 20. The statistical image A302 may also comprise information on the spatial distribution of subfeatures already identified in the plurality of first images A201a. The subfeatures may comprise tumors or subsets of healthy tissues. Accordingly, this may facilitate the interpretation of the spatial distribution of such subfeatures in the registered images. As discussed in Figures 19 and 20, registration according to the description in Figure 21 may equally be applied to any images with a known spatial and temporal relationship to the first and second images. The images with a known relationship to first and second images may comprise data from CT studies and/or Positron Emission Tomography, PET, studies.

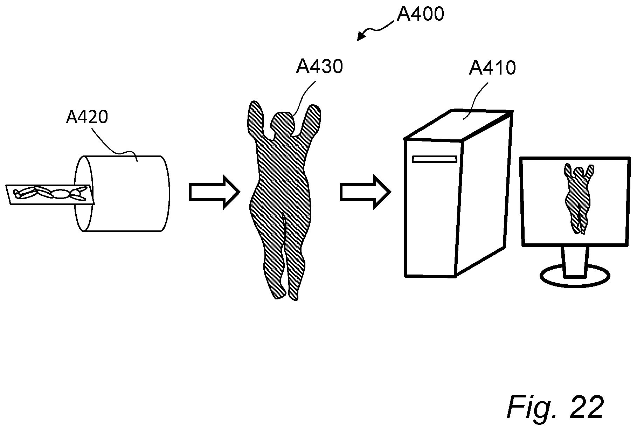

With reference to Figure 22 a system A400 for processing image information will be discussed. The system A400 may comprise a processing unit A410, wherein the processing unit A410 is configured to perform the method A100 according to any one of the preceding implementations.

The system may also comprise an x-ray measuring apparatus, the x-ray measuring apparatus A420 may comprise a CT scanner (computed tomography scanner). The measuring apparatus A420 may further comprise a PET scanner (Positron emission tomography scanner). The measuring apparatus may be a combined PET-CT scanner. The system may further be configured to transmit image data A430 from the measuring apparatus A420, to the processing unit A410 wherein the image data A430 may comprise data significant for x-ray attenuation from at least one medical imaging study. Further, the data A430 may comprise data significant for a response from detected radiotracers within the object when the measuring apparatus comprises a PET scanner and/or a combined PET-CT scanner.

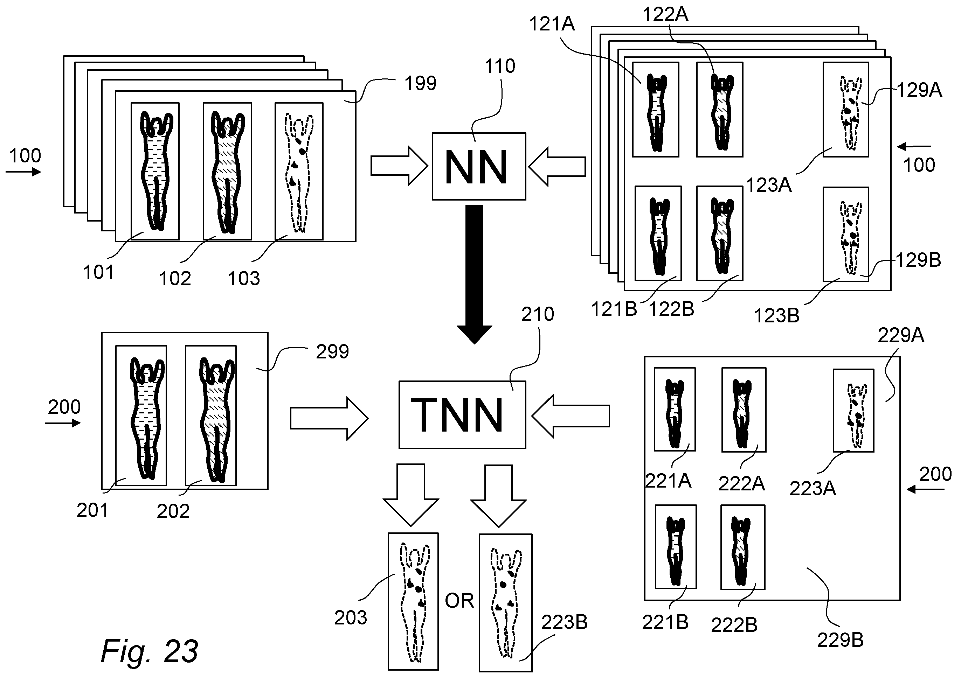

The different embodiments presented above may be combined in any combination. One particular combination embodiment is illustrated in Figure 23, which is a combination of the examples of Figs. 5 and 12.

## Claims

1. A computer-implemented method for preparing a tool (11) for automated image inference, comprising the steps of:
- providing (S25) a neural network (110) to be trained;
- obtaining (S26, S30) multiple training subject data sets (109, 129A, 129B), each comprising at least one respective whole-body medical image (101, 102, 121A, 121B, 122A, 122B) of an associated subject (100) and an assigned image inference (103, 123A, 123B) of said associated subject (100); wherein said method further comprises at least one of:
ii) said associated subject being a training subject (100) in a respective set common image space of a common image, wherein each of said multiple training subject data sets (109) further comprises at least one whole-body image (104) of voxel-wise state of health, associated with said associated training subject (100), registered to said set common image space;
wherein said at least one whole-body image (104) of voxel-wise state of health comprises a whole-body divergence image being based on a comparison between said whole-body medical image (101, 102) of said respective associated training subject (100) and collective image information of a group of subjects; wherein said step of obtaining (S30) multiple training subject data sets (109) comprises obtaining (S32) at least one whole-body image (104) of voxel-wise state of health registered to said set common image space, in turn comprising:
- obtaining (S34) whole-body medical images (101, 102, 101B, 102B) for said group of subjects;
- registering (S36) whole-body medical images of said whole-body medical images (101, 102, 101B, 102B) for said group of subjects to said set common image space by a common image registering routine; and
- creating (S38) said whole-body divergence image by comparing said whole-body medical image (101, 102) of said respective associated training subject (100) with registered said whole-body medical images for said group of subjects; and
ii) said at least one respective whole-body medical image being whole-body medical images (121A, 121B, 122A, 122B) of at least two instances;
wherein said assigned image inference is an assigned image inference for at least one of said at least two instances;
and the further step of:
- registering (S27) whole-body medical images (121A, 12B, 122A, 122B) of said at least two instances and said assigned image inference (123A, 123B) for each subject (100) to a set common image space of a set common image by use of a common image registering routine;
wherein said common image registering routine comprises at least two part registering steps, in at least one of which:
images of different respective tissues in said whole-body medical images are obtained,
a part registering to said set common image space is performed by optimizing a weighted cost function comprising a correlation of said images of respective tissues of said whole-body medical images to images of respective tissues of said set common image as well as a correlation of said whole-body medical image to a whole-body medical image of said set common image, thereby obtaining deformation parameters defining said part registration for said whole-body medical image;
wherein said deformation parameters of one part registration step, except for a last part registration step, is used in a subsequent part registration step and wherein said deformation parameters of said last part registration step is used for creating final registered whole-body medical images; and
- training (S40) said neural network (110) with said training subject data sets (109, 129A, 129B) into a trained neural network (210).

2. The method according to claim 1, **characterized in that**
said associated subject being a training subject (100) in a respective set common image space of a common image, wherein each of said multiple training subject data sets (109) further comprises at least one whole-body image (104) of voxel-wise state of health, associated with said associated training subject (100), registered to said set common image space;
wherein said at least one whole-body image (104) of voxel-wise state of health comprises a whole-body divergence image being based on a comparison between said whole-body medical image (101, 102) of said respective associated training subject (100) and collective image information of a group of subjects;
wherein said step of obtaining (S30) multiple training subject data sets (109) comprises obtaining (S32) at least one whole-body image (104) of voxel-wise state of health registered to said set common image space, in turn comprising:
- obtaining (S34) whole-body medical images (101, 102, 101B, 102B) for said group of subjects;
- registering (S36) whole-body medical images of said whole-body medical images (101, 102, 101B, 102B) for said group of subjects to said set common image space by a common image registering routine; and
- creating (S38) said whole-body divergence image by comparing said whole-body medical image (101, 102) of said respective associated training subject (100) with registered said whole-body medical images for said group of subjects.

3. The method according to claim 1 or 2, **characterized in that** said set common image space is equal to a respective training subject image space.

4. The method according to claim 1 or 2, **characterized in that** said step of obtaining (S30) multiple training subject data sets comprises the steps of:
- obtaining at least one respective whole-body medical image (101, 102) of an associated training subject (100) in a respective subject image space;
- registering whole-body medical images (101, 102) of said at least one whole-body medical image (101, 102) of said training subject data sets (109), being in an image space different from said set common image space, to said set common image space by use of said common image registering routine.

5. The method according to claim 1, **characterized in that**
said at least one respective whole-body medical image being whole-body medical images (121A, 121B, 122A, 122B) of at least two instances;
wherein said assigned image inference is an assigned image inference for at least one of said at least two instances;
and the further step of:
- registering (S27) whole-body medical images (121A, 12B, 122A, 122B) of said at least two instances and said assigned image inference (123A, 123B) for each subject (100) to a set common image space of a set common image by use of a common image registering routine.

6. The method according to claim 1 or 5, **characterized in that** the method comprises at least one of:
said assigned image inference (123A, 123B) is obtained by human intervention or in statistical ways based on said whole-body medical image (121A, 121B, 122A, 122B) of said at least one of said at least two instances; and
each of said multiple training subject data sets (129A, 129B) comprises an assigned image inference (123A, 123B) of said associated subject for at least another one of said at least two instances being based on an assigned automatic image inference deduced from whole-body medical images of said respective subject (100).

7. A computer- implemented method for automated image inference, comprising the steps of:
- providing (S50, S55) a trained neural network (18, 210);
wherein said trained neural network (18, 210) being trained with training subject data sets (109, 129A, 129B) of at least one respective whole-body medical image (101, 102, 121A, 121B 122A, 122B), and an assigned image inference (103, 123A, 123B) of an associated subject;
- obtaining (S56, S60) a subject data set (209, 229A, 229B) of at least one whole-body medical image (201, 202, 201A, 201B, 202A, 202B) of an associated subject (200); and
- operating (S70) said trained neural network (18, 210) with said subject data set (209) as input data, resulting in an image inference (203); wherein said method further comprises at least one of:
i) said training subject data sets further comprises at least one training whole-body image (104) of voxel-wise state of health, all registered to a set common image space of a set common image and wherein said at least one training whole-body image (104) of voxel-wise state of health comprises a whole-body divergence image based on a comparison between said whole-body medical image (101, 102) of said respective associated training subject (100) and collective image information of a group of subjects;
wherein said subject data set (209) is a subject data set of at least one whole-body medical image (201, 202) of an associated subject (200) in a common image space of a common image, and at least one whole-body image (204) of voxel-wise state of health registered to said common image space;
wherein said at least one whole-body image (204) of voxel-wise state of health comprises a whole-body divergence image being based on a comparison between said whole-body medical image (201, 202) of said associated subject and collective image information of a group of subjects;
wherein said step of obtaining (S60) said subject data set (209) comprises obtaining (S62) at least one whole-body image (204) of voxel-wise state of health registered to said common image space, in turn comprising:
- obtaining (S34) whole-body medical images (101, 102, 101B, 102B) for said group of subjects;
- registering (S66) whole-body medical images of said whole-body medical images (101, 102, 101B, 102B) for said group of subjects to said common image space by a common image registering routine; and
- creating (S68) said whole-body divergence image by comparing said whole-body medical image (201, 202) of said associated subject (200) with registered said whole-body medical images (101, 102, 101B, 102B) for said group of subjects;
ii) said training subject data sets are training subject data sets (129A, 129B) of at least one respective whole-body medical image (121A, 121B, 122A, 122B) of at least two, non-simultaneous instances;
wherein said assigned image inference is an assigned image inference (123A, 123B) of an associated subject (100) for at least one of said at least two instances for each training data set, registered to a respective set common image space;
wherein said subject data set is a subject data set (229A, 229B) of at least one whole-body medical image (201A, 201B, 202A, 202B) of at least two, non-simultaneous, instances of an associated subject (200); and by the further step of:
- registering (S57) whole-body medical images (201A, 201B, 202A, 202B) of said at least two instances to a common image space of a common image by use of a common image registering routine;
wherein said common image registering routine comprises at least two part registering steps, in at least one of which:
images of different respective tissues in said whole-body medical images are obtained,
a part registering to said common space is performed by optimizing a weighted cost function comprising a correlation of said images of respective tissues of said whole-body medical image to images of respective tissues of said common image as well as a correlation of said whole-body medical images to a whole-body medical image of said common image, thereby obtaining deformation parameters defining said part registration for said whole-body medical image;
wherein said deformation parameters of one part registration step, except for a last part registration step, is used in a subsequent part registration step and wherein said deformation parameters of said last part registration step is used for creating final registered whole-body medical images.

8. The method according to claim 7, **characterized in that**
said training subject data sets further comprises at least one training whole-body image (104) of voxel-wise state of health, all registered to a set common image space of a set common image and wherein said at least one training whole-body image (104) of voxel-wise state of health comprises a whole-body divergence image based on a comparison between said whole-body medical image (101, 102) of said respective associated training subject (100) and collective image information of a group of subjects;
wherein said subject data set (209) is a subject data set of at least one whole-body medical image (201, 202) of an associated subject (200) in a common image space of a common image, and at least one whole-body image (204) of voxel-wise state of health registered to said common image space;
wherein said at least one whole-body image (204) of voxel-wise state of health comprises a whole-body divergence image being based on a comparison between said whole-body medical image (201, 202) of said associated subject and collective image information of a group of subjects;
wherein said step of obtaining (S60) said subject data set (209) comprises obtaining (S62) at least one whole-body image (204) of voxel-wise state of health registered to said common image space, in turn comprising:
- obtaining (S34) whole-body medical images (101, 102, 101B, 102B) for said group of subjects;
- registering (S66) whole-body medical images of said whole-body medical images (101, 102, 101B, 102B) for said group of subjects to said common image space by a common image registering routine; and
- creating (S68) said whole-body divergence image by comparing said whole-body medical image (201, 202) of said associated subject (200) with registered said whole-body medical images (101, 102, 101B, 102B) for said group of subjects.

9. The method according to claim 7 or 8, **characterized in that** said common image space is equal to said subject image space.

10. The method according to claim 7 or 8, **characterized in that** step of obtaining (S60) a subject data set (209) comprises the steps of:
- obtaining at least one respective whole-body medical image (201, 202) of said associated subject (200) in a subject image space;
- registering whole-body medical images (101, 102) of said at least one whole-body medical image (201, 202) of said subject data set (209), being in an image space different from said common image space, to said common image space by use of said common image registering routine.

11. The method according to claim 7, **characterized in that**
said training subject data sets are training subject data sets (129A, 129B) of at least one respective whole-body medical image (121A, 121B, 122A, 122B) of at least two, non-simultaneous instances;
wherein said assigned image inference is an assigned image inference (123A, 123B) of an associated subject (100) for at least one of said at least two instances for each training data set, registered to a respective set common image space;
wherein said subject data set is a subject data set (229A, 229B) of at least one whole-body medical image (201A, 201B, 202A, 202B) of at least two, non-simultaneous, instances of an associated subject (200); and by the further step of:
- registering (S57) whole-body medical images (201A, 201B, 202A, 202B) of said at least two instances to a common image space of a common image by use of a common image registering routine.

12. The method according to any of the claims 1-4, 7-10, **characterized by** comprising the further step of creating said whole-body divergence image.

13. The method according to any of the claims 1 to 12, **characterized in that** said image inference comprises at least one of:
segmentation;
classification;
regression; and
image registration in combination with image segmentation.

14. A tool (11) for automated image inference, comprising:
- a processor (12);
- an input (13) for subject data sets (209);
- an output (14) for subject image inference (203); and
- computer program instructions (16);
whereby said computer program instructions (16), when being executed by said processor (12) cause said processor (12) to form a registered subject data set (209) from a subject data set of at least one whole-body medical image (201, 202);
whereby said computer program instructions (16), when being executed by said processor (12) further cause said processor (12) to operate a trained neural network (18, 210) with said registered subject data set (209) as input data, resulting in an image inference (203) being provided to said output (14);
wherein said trained neural network (18, 210) being trained with registered training subject data sets (109) of at least one respective whole-body medical image (101, 102), an associated assigned image inference (103) of an associated subject (100);
whereby said computer program instructions (16), when being executed by said processor (12) further cause said processor (12) to operate a trained neural network (18, 210) with said registered subject data set (209) as input data, resulting in an image inference (203) being provided to said output (14);
wherein said computer program instructions (16), when being executed by said processor (12) further cause at least one of:
iv) said subject data set (209) is a subject data set in a common space of a common image;
said subject data set comprising at least one whole-body image (204) of voxel-wise state of health obtained by said input (13), in a common space of a common image;
said training subject data sets further comprises at least one training whole-body image (104) of voxel-wise state of health, all registered to a set common image space of a set common image, where said at least one training whole-body image (104) of voxel-wise state of health comprises a whole-body divergence image based on a comparison between said whole-body medical image (101, 102) of said respective associated training subject (100) and collective image information of a group of subjects;
wherein said at least one whole-body image (204) of voxel-wise state of health comprises a whole-body divergence image being based on a comparison between said whole-body medical image (201, 202) of said associated subject (200) and collective image information of a group of subjects;
whereby said computer program instructions (16), when being executed by said processor (12) cause said processor (12) to:
- obtain whole-body medical images (101, 102, 101B, 102B) for said group of subjects;
- register whole-body medical images of said whole-body medical images (101, 102, 101B, 102B) for said group of subjects to said common image space by a common image registering routine; and
- create said whole-body divergence image by comparing said whole-body medical image (201, 202) of said associated subject (200) with registered said whole-body medical images (101, 102, 101B, 102B) for said group of subjects;
v) said subject data set (209) is a subject data set in a common space of a common image;
whereby said computer program instructions (16), when being executed by said processor (12) cause said processor (12) to form a registered subject data set from at least one whole-body medical image (221A, 221B, 222A, 222B), obtained by said input (13), of at least two, non-simultaneous, instances of an associated subject (200);
whereby said computer program instructions (16), when being executed by said processor (12) cause said processor (12) to perform a registering of whole-body medical images (221A, 221B, 222A, 222B) of said at least two instances to a common image space of a common image by use of a common image registering routine;
wherein said trained neural network (18, 210) being trained with training subject data sets (129A, 129B) of at least one respective whole-body medical image (121A, 121B, 122A, 122B) of at least two, non-simultaneous, instances, and an assigned image inference (123A, 123B) of an associated subject (100) for at least one of said at least two instances for each subject data set (129A, 129B), registered to a respective set common image space;
wherein said common image registering routine comprises at least two part registering steps, in at least one of which:
images of different respective tissues in said whole-body medical images are obtained,
a part registering to said common space is performed by optimizing a weighted cost function comprising a correlation of said images of respective tissues of said whole-body medical image to images of respective tissues of said common image as well as a correlation of said whole-body medical images to a whole-body medical image of said common image, thereby obtaining deformation parameters defining said part registration for said whole-body medical image;
wherein said deformation parameters of one part registration step, except for a last part registration step, is used in a subsequent part registration step and wherein said deformation parameters of said last part registration step is used for creating final registered whole-body medical images; and
whereby said computer program instructions (16), when being executed by said processor (12) further cause said processor (12) to operate a trained neural network (18, 210) with said registered subject data set (209) as input data, resulting in an image inference (203) being provided to said output (14);
wherein said trained neural network (18, 210) being trained with registered training subject data sets (109) of at least one respective whole-body medical image (101, 102), an associated assigned image inference (103) of an associated subject (100) and at least one training whole-body image (104) of voxel-wise state of health, all registered to a set common image space of a set common image, where said at least one training whole-body image (104) of voxel-wise state of health comprises a whole-body divergence image based on a comparison between said whole-body medical image (101, 102) of said respective associated training subject (100) and collective image information of a group of subjects.

15. Computer program instructions (16), which computer program instruction (16), when being executed by a processor (12) cause said processor (12) to form a registered subject data set (209) from an obtained subject data set of at least one whole-body medical image (201, 202);
whereby said computer program instructions (16), when being executed by said processor (12) further cause said processor (12) to operate a trained neural network (18, 210) with said registered subject data set (209) as input data, resulting in an image inference (203) being provided to said output (14);
wherein said trained neural network (18, 210) being trained with registered training subject data sets (109) of at least one respective whole-body medical image (101, 102), an associated assigned image inference (103) of an associated subject (100);
whereby said computer program instructions (16), when being executed by said processor (12) further cause said processor (12) to operate a trained neural network (18, 210) with said registered subject data set (209) as input data, resulting in an image inference (203) being provided to said output (14);
wherein said computer program instructions (16), when being executed by said processor (12) further cause at least one of:
ii) said subject data set (209) is a subject data set in a common space of a common image;
said subject data set comprising at least one whole-body image (204) of voxel-wise state of health, in a common space of a common image;
said training subject data sets further comprises at least one training whole-body image (104) of voxel-wise state of health, all registered to a set common image space of a set common image, where said at least one training whole-body image (104) of voxel-wise state of health comprises a whole-body divergence image based on a comparison between said whole-body medical image (101, 102) of said respective associated training subject (100) and collective image information of a group of subjects;
wherein said at least one whole-body image (204) of voxel-wise state of health comprises a whole-body divergence image being based on a comparison between said whole-body medical image (101, 102, 101B, 102B) of said respective associated training subject (100) and collective image information of a group of subjects;
whereby said computer program instructions (16) further cause said processor (12) to:
- obtain whole-body medical images (101, 102, 101B, 102B) for said group of subjects;
- register whole-body medical images of said whole-body medical images (101, 102, 101B, 102B) for said group of subjects to said common image space by a common image registering routine; and
- create said whole-body divergence image by comparing said whole-body medical image (201, 202) of said associated subject (200) with registered said whole-body medical images (101, 102, 101B, 102B) for said group of subjects;
vi) said subject data set (209) is a subject data set in a common space of a common image;
whereby said computer program instructions (16), when being executed by said processor (12) cause said processor (12) to form a registered subject data set from at least one whole-body medical image (221A, 221B, 222A, 222B), obtained by said input (13), of at least two, non-simultaneous, instances of an associated subject (200);
whereby said computer program instructions (16), when being executed by said processor (12) cause said processor (12) to perform a registering of whole-body medical images (221A, 221B, 222A, 222B) of said at least two instances to a common image space of a common image by use of a common image registering routine;
wherein said trained neural network (18, 210) being trained with training subject data sets (129A, 129B) of at least one respective whole-body medical image (121A, 121B, 122A, 122B) of at least two, non-simultaneous, instances, and an assigned image inference (123A, 123B) of an associated subject (100) for at least one of said at least two instances for each subject data set (129A, 129B), registered to a respective set common image space;
wherein said common image registering routine comprises at least two part registering steps, in at least one of which:
images of different respective tissues in said whole-body medical images are obtained,
a part registering to said common space is performed by optimizing a weighted cost function comprising a correlation of said images of respective tissues of said whole-body medical image to images of respective tissues of said common image as well as a correlation of said whole-body medical images to a whole-body medical image of said common image, thereby obtaining deformation parameters defining said part registration for said whole-body medical image;
wherein said deformation parameters of one part registration step, except for a last part registration step, is used in a subsequent part registration step and wherein said deformation parameters of said last part registration step is used for creating final registered whole-body medical images; and
whereby said computer program instructions (16) further cause said processor (12) to operate a trained neural network (18, 210) with said registered subject data set (209) as input data, resulting in an image inference (203) being provided;
wherein said trained neural network (18, 210) being trained with registered training subject data sets (109) of at least one respective whole-body medical image (101, 102), an associated assigned image inference (103) of an associated subject (100) and at least one training whole-body image (104) of voxel-wise state of health, all registered to a set common image space of a set common image, where said at least one training whole-body image (104) of voxel-wise state of health comprises a whole-body divergence image based on a comparison between said whole-body medical image (101, 120) of said respective associated training subject (100) and collective image information of a group of subjects.

## Patentansprüche

1. Computerimplementiertes Verfahren zur Vorbereitung eines Werkzeugs (11) für die automatisierte Bildableitung, welches folgende Schritte umfasst:
- Bereitstellen (S25) eines neuronalen Netzwerks (110), das trainiert werden soll;
- Erhalten (S26, S30) mehrerer Trainingssubjekt-Datensätze (109, 129A, 129B), welche jeweils mindestens ein entsprechendes medizinisches Ganzkörperbild (101, 102, 121A, 121B, 122A, 122B) eines zugehörigen Subjekts (100) und eine zugeordnete Bildableitung (103, 123A, 123B) des zugehörigen Subjekts (100) umfassen;
wobei das Verfahren ferner mindestens eines der Folgenden umfasst:
ii) bei dem zugehörigen Subjekt handelt es sich um ein Trainingssubjekt (100) in einem entsprechenden festgelegten gemeinsamen Bildraum eines gemeinsamen Bildes, wobei jeder der mehreren Trainingssubjekt-Datensätze (109) ferner mindestens ein Ganzkörperbild (104) eines Voxel-basierten Gesundheitszustands, der mit dem zugehörigen Trainingssubjekt (100) assoziiert ist, das auf den festgelegten gemeinsamen Bildraum registriert ist, umfasst;
wobei das mindestens eine Ganzkörperbild (104) eines Voxel-basierten Gesundheitszustands ein Ganzkörper-Abweichungsbild umfasst, das auf einem Vergleich zwischen dem medizinischen Ganzkörperbild (101, 102) des entsprechenden zugehörigen Trainingssubjekts (100) und gesammelten Bildinformationen einer Gruppe von Subjekten basiert;
wobei der Schritt des Erhaltens (S30) mehrerer Trainingssubjekt-Datensätze (109) das Erhalten (S32) mindestens eines Ganzkörperbildes (104) eines Voxel-basierten Gesundheitszustands, das auf den festgelegten gemeinsamen Bildraum registriert ist, umfasst, welcher wiederum Folgendes umfasst:
- Erhalten (S34) medizinischer Ganzkörperbilder (101, 102, 101B, 102B) für die Gruppe von Subjekten;
- Registrieren (S36) medizinischer Ganzkörperbilder der medizinischen Ganzkörperbilder (101, 102, 101B, 102B) für die Gruppe von Subjekten auf den festgelegten gemeinsamen Bildraum durch eine gemeinsame Bildregistrierungsroutine; und
- Erstellen (S38) des Ganzkörper-Abweichungsbildes durch das Vergleichen des medizinischen Ganzkörperbildes (101, 102) des entsprechenden zugehörigen Trainingssubjekts (100) mit den registrierten medizinischen Ganzkörperbildern für die Gruppe von Subjekten; und
ii) bei dem mindestens einen entsprechenden medizinischen Ganzkörperbild handelt es sich um medizinische Ganzkörperbilder (121A, 121B, 122A, 122B) von mindestens zwei Instanzen;
wobei die zugeordnete Bildableitung eine zugeordnete Bildableitung für mindestens eine der mindestens zwei Instanzen ist;
sowie den weiteren Schritt:
- Registrieren (S27) medizinischer Ganzkörperbilder (121A, 121B, 122A, 122B) der mindestens zwei Instanzen und der zugeordneten Bildableitung (123A, 123B) für jedes Subjekt (100) auf einen festgelegten gemeinsamen Bildraum eines festgelegten gemeinsamen Bildes durch Verwendung einer gemeinsamen Bildregistrierungsroutine;
wobei die gemeinsame Bildregistrierungsroutine mindestens zwei Teilregistrierungsschritte umfasst, wobei bei mindestens einem davon:
Bilder von unterschiedlichen entsprechenden Geweben in den medizinischen Ganzkörperbildern erhalten werden,
eine Teilregistrierung auf den festgelegten gemeinsamen Bildraum durchgeführt wird, indem eine gewichtete Kostenfunktion optimiert wird, die eine Korrelation der Bilder entsprechender Gewebe der medizinischen Ganzkörperbilder mit Bildern entsprechender Gewebe des festgelegten gemeinsamen Bildes sowie eine Korrelation des medizinischen Ganzkörperbildes mit einem medizinischen Ganzkörperbild des festgelegten gemeinsamen Bildes umfasst, wodurch Verformungsparameter erhalten werden, welche die Teilregistrierung für das medizinische Ganzkörperbild definieren;
wobei die Verformungsparameter von einem Teilregistrierungsschritt, außer einem letzten Teilregistrierungsschritt, bei einem nachfolgenden Teilregistrierungsschritt verwendet werden und wobei die Verformungsparameter des letzten Teilregistrierungsschrittes zum Erstellen abschließender registrierter medizinischer Ganzkörperbilder verwendet werden; und
- Trainieren (S40) des neuronalen Netzwerks (110) mit den Trainingssubjekt-Datensätzen (109, 129A, 129B) zu einem trainierten neuronalen Netzwerk (210).

2. Verfahren nach Anspruch 1, **dadurch gekennzeichnet, dass**
es sich bei dem zugehörigen Subjekt um ein Trainingssubjekt (100) in einem entsprechenden festgelegten gemeinsamen Bildraum eines gemeinsamen Bildes handelt, wobei jeder der mehreren Trainingssubjekt-Datensätze (109) ferner mindestens ein Ganzkörperbild (104) eines Voxel-basierten Gesundheitszustands, der mit dem zugehörigen Trainingssubjekt (100) assoziiert ist, das auf den festgelegten gemeinsamen Bildraum registriert ist, umfasst;
wobei das mindestens eine Ganzkörperbild (104) eines Voxel-basierten Gesundheitszustands ein Ganzkörper-Abweichungsbild umfasst, welches auf einem Vergleich zwischen dem medizinischen Ganzkörperbild (101, 102) des entsprechenden zugehörigen Trainingssubjekts (100) und gesammelten Bildinformationen einer Gruppe von Subjekten basiert;
wobei der Schritt des Erhaltens (S30) mehrerer Trainingssubjekt-Datensätze (109) das Erhalten (S32) mindestens eines Ganzkörperbildes (104) eines Voxel-basierten Gesundheitszustands, das auf den festgelegten gemeinsamen Bildraum registriert ist, umfasst, welcher wiederum Folgendes umfasst:
- Erhalten (S34) medizinischer Ganzkörperbilder (101, 102, 101B, 102B) für die Gruppe von Subjekten;
- Registrieren (S36) medizinischer Ganzkörperbilder der medizinischen Ganzkörperbilder (101, 102, 101B, 102B) für die Gruppe von Subjekten auf den festgelegten gemeinsamen Bildraum durch eine gemeinsame Bildregistrierungsroutine; und
- Erstellen (S38) des Ganzkörper-Abweichungsbildes durch das Vergleichen des medizinischen Ganzkörperbildes (101, 102) des entsprechenden zugehörigen Trainingssubjekts (100) mit den registrierten medizinischen Ganzkörperbildern für die Gruppe von Subjekten.

3. Verfahren nach Anspruch 1 oder 2, **dadurch gekennzeichnet, dass** der festgelegte gemeinsame Bildraum gleich einem entsprechenden Trainingssubjekt-Bildraum ist.

4. Verfahren nach Anspruch 1 oder 2, **dadurch gekennzeichnet, dass** der Schritt des Erhaltens (S30) mehrerer Trainingssubjekt-Datensätze folgende Schritte umfasst:
- Erhalten mindestens eines entsprechenden medizinischen Ganzkörperbildes (101, 102) eines zugehörigen Trainingssubjekts (100) in einem entsprechenden Subjekt-Bildraum;
- Registrieren medizinischer Ganzkörperbilder (101, 102) des mindestens einen medizinischen Ganzkörperbildes (101, 102) der Trainingssubjekt-Datensätze (109), die sich in einem Bildraum befinden, der sich von dem festgelegten gemeinsamen Bildraum unterscheidet, auf den festgelegten gemeinsamen Bildraum durch Verwendung der gemeinsamen Bildregistrierungsroutine.

5. Verfahren nach Anspruch 1, **dadurch gekennzeichnet, dass** es sich bei dem mindestens einen entsprechenden medizinischen Ganzkörperbild um medizinische Ganzkörperbilder (121A, 121B, 122A, 122B) von mindestens zwei Instanzen handelt;
wobei die zugeordnete Bildableitung eine zugeordnete Bildableitung für mindestens eine der mindestens zwei Instanzen ist;
sowie durch den weiteren Schritt:
- Registrieren (S27) medizinischer Ganzkörperbilder (121A, 121B, 122A, 122B) der mindestens zwei Instanzen und der zugeordneten Bildableitung (123A, 123B) für jedes Subjekt (100) auf einen festgelegten gemeinsamen Bildraum eines festgelegten gemeinsamen Bildes durch Verwendung einer gemeinsamen Bildregistrierungsroutine.

6. Verfahren nach Anspruch 1 oder 5, **dadurch gekennzeichnet, dass** das Verfahren mindestens eines der Folgenden umfasst:
die zugeordnete Bildableitung (123A, 123B) wird durch menschliches Eingreifen oder auf statistische Weise basierend auf dem medizinischen Ganzkörperbild (121A, 121B, 122A, 122B) der mindestens einen der mindestens zwei Instanzen erhalten; und
jeder der mehreren Trainingssubjekt-Datensätze (129A, 129B) umfasst eine zugeordnete Bildableitung (123A, 123B) des zugehörigen Subjekts für mindestens eine weitere der mindestens zwei Instanzen, die auf einer zugeordneten automatischen Bildableitung basiert, die von medizinischen Ganzkörperbildern des entsprechenden Subjekts (100) abgeleitet wird.

7. Computerimplementiertes Verfahren zur automatisierten Bildableitung, welches folgende Schritte umfasst:
- Bereitstellen (S50, S55) eines trainierten neuronalen Netzwerks (18, 210);
wobei das trainierte neuronale Netzwerk (18, 210) mit Trainingssubjekt-Datensätzen (109, 129A, 129B) von mindestens einem entsprechenden medizinischen Ganzkörperbild (101, 102, 121A, 121B 122A, 122B) und einer zugeordneten Bildableitung (103, 123A, 123B) eines zugehörigen Subjekts trainiert wird;
- Erhalten (S56, S60) eines Subjekt-Datensatzes (209, 229A, 229B) von mindestens einem medizinischen Ganzkörperbild (201, 202, 201A, 201B, 202A, 202B) eines zugehörigen Subjekts (200); und
- Betreiben (S70) des trainierten neuronalen Netzwerks (18, 210) mit dem Subjekt-Datensatz (209) als Eingabedaten, was in einer Bildableitung (203) resultiert;
wobei das Verfahren ferner mindestens eines der Folgenden umfasst:
i) die Trainingssubjekt-Datensätze umfassen ferner mindestens ein Trainings-Ganzkörperbild (104) eines Voxel-basierten Gesundheitszustands, die alle auf einen festgelegten gemeinsamen Bildraum eines festgelegten gemeinsamen Bildes registriert sind, wobei das mindestens eine Trainings-Ganzkörperbild (104) eines Voxel-basierten Gesundheitszustands ein Ganzkörper-Abweichungsbild umfasst, das auf einem Vergleich zwischen dem medizinischen Ganzkörperbild (101, 102) des entsprechenden zugehörigen Trainingssubjekts (100) und gesammelten Bildinformationen einer Gruppe von Subjekten basiert;
wobei der Subjekt-Datensatz (209) ein Subjekt-Datensatz von mindestens einem medizinischen Ganzkörperbild (201, 202) eines zugehörigen Subjekts (200) in einem gemeinsamen Bildraum eines gemeinsamen Bildes und mindestens einem Ganzkörperbild (204) eines Voxel-basierten Gesundheitszustands registriert auf den gemeinsamen Bildraum ist;
wobei das mindestens eine Ganzkörperbild (204) eines Voxel-basierten Gesundheitszustands ein Ganzkörper-Abweichungsbild umfasst, das auf einem Vergleich zwischen dem medizinischen Ganzkörperbild (201, 202) des zugehörigen Subjekts und gesammelten Bildinformationen einer Gruppe von Subjekten basiert;
wobei der Schritt des Erhaltens (S60) des Subjekt-Datensatzes (209) das Erhalten (S62) von mindestens einem Ganzkörperbild (204) eines Voxel-basierten Gesundheitszustands, das auf den gemeinsamen Bildraum registriert ist, umfasst, welches wiederum Folgendes umfasst:
- Erhalten (S34) medizinischer Ganzkörperbilder (101, 102, 101B, 102B) für die Gruppe von Subjekten;
- Registrieren (S66) medizinischer Ganzkörperbilder der medizinischen Ganzkörperbilder (101, 102, 101B, 102B) für die Gruppe von Subjekten auf den gemeinsamen Bildraum durch eine gemeinsame Bildregistrierungsroutine; und
- Erstellen (S68) des Ganzkörper-Abweichungsbildes durch das Vergleichen des medizinischen Ganzkörperbildes (201, 202) des zugehörigen Subjekts (200) mit den registrierten medizinischen Ganzkörperbildern (101, 102, 101B, 102B) für die Gruppe von Subjekten;
ii) die Trainingssubjekt-Datensätze sind Trainingssubjekt-Datensätze (129A, 129B) von mindestens einem entsprechenden medizinischen Ganzkörperbild (121A, 121B, 122A, 122B) von mindestens zwei nicht gleichzeitigen Instanzen;
wobei die zugeordnete Bildableitung eine zugeordnete Bildableitung (123A, 123B) eines zugehörigen Subjekts (100) für mindestens eine der mindestens zwei Instanzen für jeden Trainingsdatensatz ist, der auf einen entsprechenden festgelegten gemeinsamen Bildraum registriert ist;
wobei der Subjekt-Datensatz ein Subjekt-Datensatz (229A, 229B) von mindestens einem medizinischen Ganzkörperbild (201A, 201B, 202A, 202B) von mindestens zwei nicht gleichzeitigen Instanzen eines zugehörigen Subjekts (200) ist; sowie den weiteren Schritt:
- Registrieren (S57) medizinischer Ganzkörperbilder (201A, 201B, 202A, 202B) der mindestens zwei Instanzen auf einen gemeinsamen Bildraum eines gemeinsamen Bildes durch Verwendung einer gemeinsamen Bildregistrierungsroutine;
wobei die gemeinsame Bildregistrierungsroutine mindestens zwei Teilregistrierungsschritte umfasst, wobei bei mindestens einem davon:
Bilder von unterschiedlichen entsprechenden Geweben in den medizinischen Ganzkörperbildern erhalten werden,
eine Teilregistrierung auf den gemeinsamen Raum durchgeführt wird, indem eine gewichtete Kostenfunktion optimiert wird, die eine Korrelation der Bilder entsprechender Gewebe des medizinischen Ganzkörperbildes mit Bildern entsprechender Gewebe des gemeinsamen Bildes sowie eine Korrelation der medizinischen Ganzkörperbilder mit einem medizinischen Ganzkörperbild des gemeinsamen Bildes umfasst, wodurch Verformungsparameter erhalten werden, welche die Teilregistrierung für das medizinische Ganzkörperbild definieren;
wobei die Verformungsparameter von einem Teilregistrierungsschritt, außer einem letzten Teilregistrierungsschritt, bei einem nachfolgenden Teilregistrierungsschritt verwendet werden und wobei die Verformungsparameter des letzten Teilregistrierungsschrittes zum Erstellen abschließender registrierter medizinischer Ganzkörperbilder verwendet werden.

8. Verfahren nach Anspruch 7, **dadurch gekennzeichnet, dass** die Trainingssubjekt-Datensätze ferner mindestens ein Trainings-Ganzkörperbild (104) eines Voxel-basierten Gesundheitszustands umfassen, die alle auf einen festgelegten gemeinsamen Bildraum eines festgelegten gemeinsamen Bildes registriert sind, wobei das mindestens eine Trainings-Ganzkörperbild (104) eines Voxel-basierten Gesundheitszustands ein Ganzkörper-Abweichungsbild umfasst, welches auf einem Vergleich zwischen dem medizinischen Ganzkörperbild (101, 102) des entsprechenden zugehörigen Trainingssubjekts (100) und gesammelten Bildinformationen einer Gruppe von Subjekten basiert;
wobei der Subjekt-Datensatz (209) ein Subjekt-Datensatz von mindestens einem medizinischen Ganzkörperbild (201, 202) eines zugehörigen Subjekts (200) in einem gemeinsamen Bildraum eines gemeinsamen Bild ist und mindestens ein Ganzkörperbild (204) eines Voxel-basierten Gesundheitszustands auf den gemeinsamen Bildraum registriert ist;
wobei das mindestens eine Ganzkörperbild (204) eines Voxel-basierten Gesundheitszustands ein Ganzkörper-Abweichungsbild umfasst, welches auf einem Vergleich zwischen dem medizinischen Ganzkörperbild (201, 202) des zugehörigen Subjekts und gesammelten Bildinformationen einer Gruppe von Subjekten basiert;
wobei der Schritt des Erhaltens (S60) des Subjekt-Datensatzes (209) das Erhalten (S62) mindestens eines Ganzkörperbildes (204) eines Voxel-basierten Gesundheitszustands, das auf den gemeinsamen Bildraum registriert ist, umfasst, welcher wiederum Folgendes umfasst:
- Erhalten (S34) medizinischer Ganzkörperbilder (101, 102, 101B, 102B) für die Gruppe von Subjekten;
- Registrieren (S66) medizinischer Ganzkörperbilder der medizinischen Ganzkörperbilder (101, 102, 101B, 102B) für die Gruppe von Subjekten auf den gemeinsamen Bildraum durch eine gemeinsame Bildregistrierungsroutine; und
- Erstellen (S68) des Ganzkörper-Abweichungsbildes durch das Vergleichen des medizinischen Ganzkörperbildes (201, 202) des zugehörigen Subjekts (200) mit den registrierten medizinischen Ganzkörperbildern (101, 102, 101B, 102B) für die Gruppe von Subjekten.

9. Verfahren nach Anspruch 7 oder 8, **dadurch gekennzeichnet, dass** der gemeinsame Bildraum gleich dem Subjekt-Bildraum ist.

10. Verfahren nach Anspruch 7 oder 8, **dadurch gekennzeichnet, dass** der Schritt des Erhaltens (S60) eines Subjekt-Datensatzes (209) folgende Schritte umfasst:
- Erhalten mindestens eines entsprechenden medizinischen Ganzkörperbildes (201, 202) des zugehörigen Subjekts (200) in einem Subjekt-Bildraum;
- Registrieren medizinischer Ganzkörperbilder (101, 102) des mindestens einen medizinischen Ganzkörperbildes (201, 202) des Subjekt-Datensatzes (209), das sich in einem Bildraum befindet, der sich vom gemeinsamen Bildraum unterscheidet, auf den gemeinsamen Bildraum durch Verwendung der gemeinsamen Bildregistrierungsroutine.

11. Verfahren nach Anspruch 7, **dadurch gekennzeichnet, dass** es sich bei den Trainingssubjekt-Datensätzen um Trainingssubjekt-Datensätze (129A, 129B) von mindestens einem entsprechenden medizinischen Ganzkörperbild (121A, 121B, 122A, 122B) von mindestens zwei nicht gleichzeitigen Instanzen handelt;
wobei die zugeordnete Bildableitung eine zugeordnete Bildableitung (123A, 123B) eines zugehörigen Subjekts (100) für mindestens eine der mindestens zwei Instanzen für jeden Trainingsdatensatz, der auf einen entsprechenden festgelegten gemeinsamen Bildraum registriert ist, ist;
wobei der Subjekt-Datensatz ein Subjekt-Datensatz (229A, 229B) von mindestens einem medizinischen Ganzkörperbild (201A, 201B, 202A, 202B) von mindestens zwei nicht gleichzeitigen Instanzen eines zugehörigen Subjekts (200) ist; sowie durch den weiteren Schritt:
- Registrieren (S57) medizinischer Ganzkörperbilder (201A, 201B, 202A, 202B) der mindestens zwei Instanzen auf einen gemeinsamen Bildraum eines gemeinsamen Bildes durch Verwendung einer gemeinsamen Bildregistrierungsroutine.

12. Verfahren nach einem der Ansprüche 1-4, 7-10, **dadurch gekennzeichnet, dass** es den weiteren Schritt des Erstellens des Ganzkörper-Abweichungsbildes umfasst.

13. Verfahren nach einem der Ansprüche 1 bis 12, **dadurch gekennzeichnet, dass** die Bildableitung mindestens eines der Folgenden umfasst:
Segmentierung;
Klassifizierung;
Regression; und
Bildregistrierung in Kombination mit Bildsegmentierung.

14. Werkzeug (11) zur automatisierten Bildableitung, welches Folgendes umfasst:
- einen Prozessor (12);
- eine Eingabe (13) für Subjekt-Datensätze (209);
- eine Ausgabe (14) für Subjekt-Bildableitungen (203); und
- Computerprogrammanweisungen (16);
wobei die Computerprogrammanweisungen (16), wenn sie durch den Prozessor (12) ausgeführt werden, den Prozessor (12) zum Erzeugen eines registrierten Subjekt-Datensatzes (209) aus einem Subjekt-Datensatz von mindestens einem medizinischen Ganzkörperbild (201, 202) veranlassen;
wobei die Computerprogrammanweisungen (16), wenn sie durch den Prozessor (12) ausgeführt werden, den Prozessor (12) ferner zum Betreiben eines trainierten neuronalen Netzwerks (18, 210) mit dem registrierten Subjekt-Datensatz (209) als Eingabedaten veranlassen, was darin resultiert, dass eine Bildableitung (203) an die Ausgabe (14) bereitgestellt wird;
wobei das trainierte neuronale Netzwerk (18, 210) mit registrierten Trainingssubjekt-Datensätzen (109) von mindestens einem entsprechenden medizinischen Ganzkörperbild (101, 102) und einer zugehörigen zugeordneten Bildableitung (103) eines zugehörigen Subjekts (100) trainiert wird;
wobei die Computerprogrammanweisungen (16), wenn sie durch den Prozessor (12) ausgeführt werden, den Prozessor (12) ferner zum Betreiben eines trainierten neuronalen Netzwerks (18, 210) mit dem registrierten Subjekt-Datensatz (209) als Eingabedaten veranlassen, was darin resultiert, dass eine Bildableitung (203) an die Ausgabe (14) bereitgestellt wird;
wobei die Computerprogrammanweisungen (16), wenn sie durch den Prozessor (12) ausgeführt werden, ferner mindestens eines der Folgenden veranlassen:
iv) der Subjekt-Datensatz (209) ist ein Subjekt-Datensatz in einem gemeinsamen Raum eines gemeinsamen Bildes;
wobei der Subjekt-Datensatz mindestens ein Ganzkörperbild (204) eines Voxel-basierten Gesundheitszustands, das durch die Eingabe (13) erhalten wird, in einem gemeinsamen Raum eines gemeinsamen Bildes umfasst;
wobei die Trainingssubjekt-Datensätze ferner mindestens ein Trainings-Ganzkörperbild (104) eines Voxel-basierten Gesundheitszustands umfassen, die alle auf einen festgelegten gemeinsamen Bildraum eines festgelegten gemeinsamen Bildes registriert sind, wobei das mindestens eine Trainings-Ganzkörperbild (104) eines Voxel-basierten Gesundheitszustands ein Ganzkörper-Abweichungsbild umfasst, das auf einem Vergleich zwischen dem medizinischen Ganzkörperbild (101, 102) des entsprechenden zugehörigen Trainingssubjekts (100) und gesammelten Bildinformationen einer Gruppe von Subjekten basiert;
wobei das mindestens eine Ganzkörperbild (204) eines Voxel-basierten Gesundheitszustands ein Ganzkörper-Abweichungsbild umfasst, das auf einem Vergleich zwischen dem medizinischen Ganzkörperbild (201, 202) des zugehörigen Subjekts (200) und gesammelten Bildinformationen einer Gruppe von Subjekten basiert;
wobei die Computerprogrammanweisungen (16), wenn sie durch den Prozessor (12) ausgeführt werden, den Prozessor (12) zu Folgendem veranlassen:
- Erhalten medizinischer Ganzkörperbilder (101, 102, 101B, 102B) für die Gruppe von Subjekten;
- Registrieren medizinischer Ganzkörperbilder der medizinischen Ganzkörperbilder (101, 102, 101B, 102B) für die Gruppe von Subjekten auf den gemeinsamen Bildraum durch eine gemeinsame Bildregistrierungsroutine; und
- Erstellen des Ganzkörper-Abweichungsbildes durch das Vergleichen des medizinischen Ganzkörperbildes (201, 202) des zugehörigen Subjekts (200) mit den registrierten medizinischen Ganzkörperbildern (101, 102, 101B, 102B) für die Gruppe von Subjekten;
v) der Subjekt-Datensatz (209) ist ein Subjekt-Datensatz in einem gemeinsamen Raum eines gemeinsamen Bildes;
wobei die Computerprogrammanweisungen (16), wenn sie durch den Prozessor (12) ausgeführt werden, den Prozessor (12) zum Erzeugen eines registrierten Subjekt-Datensatzes aus mindestens einem medizinischen Ganzkörperbild (221A, 221B, 222A, 222B), das durch die Eingabe (13) erhalten wird, von mindestens zwei nicht gleichzeitigen Instanzen eines zugehörigen Subjekts (200) veranlassen;
wobei die Computerprogrammanweisungen (16), wenn sie durch den Prozessor (12) ausgeführt werden, den Prozessor (12) zum Durchführen einer Registrierung medizinischer Ganzkörperbilder (221A, 221B, 222A, 222B) der mindestens zwei Instanzen auf einen gemeinsamen Bildraum eines gemeinsamen Bildes durch Verwendung einer gemeinsamen Bildregistrierungsroutine veranlassen;
wobei das trainierte neuronale Netzwerk (18, 210) mit Trainingssubjekt-Datensätzen (129A, 129B) von mindestens einem entsprechenden medizinischen Ganzkörperbild (121A, 121B, 122A, 122B) von mindestens zwei nicht gleichzeitigen Instanzen und einer zugeordneten Bildableitung (123A, 123B) eines zugehörigen Subjekts (100) für mindestens eine der mindestens zwei Instanzen für jeden Subjekt-Datensatz (129A, 129B), die auf einen entsprechenden festgelegten gemeinsamen Bildraum registriert sind, trainiert wird;
wobei die gemeinsame Bildregistrierungsroutine mindestens zwei Teilregistrierungsschritte umfasst, wobei bei mindestens einem davon:
Bilder von unterschiedlichen entsprechenden Geweben in den medizinischen Ganzkörperbildern erhalten werden,
eine Teilregistrierung auf den gemeinsamen Bildraum durchgeführt wird, indem eine gewichtete Kostenfunktion optimiert wird, die eine Korrelation der Bilder entsprechender Gewebe der medizinischen Ganzkörperbilder mit Bildern entsprechender Gewebe des gemeinsamen Bildes sowie eine Korrelation der medizinischen Ganzkörperbilder mit einem medizinischen Ganzkörperbild des gemeinsamen Bildes umfasst, wodurch Verformungsparameter erhalten werden, welche die Teilregistrierung für das medizinische Ganzkörperbild definieren;
wobei die Verformungsparameter von einem Teilregistrierungsschritt, außer einem letzten Teilregistrierungsschritt, bei einem nachfolgenden Teilregistrierungsschritt verwendet werden und wobei die Verformungsparameter des letzten Teilregistrierungsschrittes zum Erstellen abschließender registrierter medizinischer Ganzkörperbilder verwendet werden; und
wobei die Computerprogrammanweisungen (16), wenn sie durch den Prozessor (12) ausgeführt werden, den Prozessor (12) zum Betreiben eines trainierten neuronalen Netzwerks (18, 210) mit dem registrierten Subjekt-Datensatz (209) als Eingabedaten veranlassen, was darin resultiert, dass eine Bildableitung (203) an die Ausgabe (14) bereitgestellt wird;
wobei das trainierte neuronale Netzwerk (18, 210) mit registrierten Trainingssubjekt-Datensätzen (109) von mindestens einem entsprechenden medizinischen Ganzkörperbild (101, 102), einer zugehörigen zugeordneten Bildableitung (103) eines zugehörigen Subjekts (100) und mindestens einem Trainings-Ganzkörperbild (104) eines Voxel-basierten Gesundheitszustands, die alle auf einen festgelegten gemeinsamen Bildraum eines festgelegten gemeinsamen Bildes registriert sind, trainiert wird, wobei das mindestens eine Trainings-Ganzkörperbild (104) eines Voxel-basierten Gesundheitszustands ein Ganzkörper-Abweichungsbild umfasst, das auf einem Vergleich zwischen dem medizinischen Ganzkörperbild (101, 102) des entsprechenden zugehörigen Trainingssubjekts (100) und gesammelten Bildinformationen einer Gruppe von Subjekten basiert.

15. Computerprogrammanweisungen (16), wobei die Computerprogrammanweisungen (16), wenn sie durch einen Prozessor (12) ausgeführt werden, den Prozessor (12) zum Erzeugen eines registrierten Subjekt-Datensatzes (209) aus einem erhaltenen Subjekt-Datensatz von mindestens einem medizinischen Ganzkörperbild (201, 202) veranlassen;
wobei die Computerprogrammanweisungen (16), wenn sie durch den Prozessor (12) ausgeführt werden, den Prozessor (12) ferner zum Betreiben eines trainierten neuronalen Netzwerks (18, 210) mit dem registrierten Subjekt-Datensatz (209) als Eingabedaten veranlassen, was darin resultiert, dass eine Bildableitung (203) an die Ausgabe (14) bereitgestellt wird;
wobei das trainierte neuronale Netzwerk (18, 210) mit registrierten Trainingssubjekt-Datensätzen (109) von mindestens einem entsprechenden medizinischen Ganzkörperbild (101, 102) und einer zugehörigen zugeordneten Bildableitung (103) eines zugehörigen Subjekts (100) trainiert wird;
wobei die Computerprogrammanweisungen (16), wenn sie durch den Prozessor (12) ausgeführt werden, den Prozessor (12) ferner zum Betreiben eines trainierten neuronalen Netzwerks (18, 210) mit dem registrierten Subjekt-Datensatz (209) als Eingabedaten veranlassen, was darin resultiert, dass eine Bildableitung (203) an die Ausgabe (14) bereitgestellt wird;
wobei die Computerprogrammanweisungen (16), wenn sie durch den Prozessor (12) ausgeführt werden, ferner mindestens eines der Folgenden veranlassen:
ii) der Subjekt-Datensatz (209) ist ein Subjekt-Datensatz in einem gemeinsamen Raum eines gemeinsamen Bildes;
wobei der Subjekt-Datensatz mindestens ein Ganzkörperbild (204) eines Voxel-basierten Gesundheitszustands in einem gemeinsamen Raum eines gemeinsamen Bildes umfasst;
wobei die Trainingssubjekt-Datensätze ferner mindestens ein Trainings-Ganzkörperbild (104) eines Voxel-basierten Gesundheitszustands umfassen, die alle auf einen festgelegten gemeinsamen Bildraum eines festgelegten gemeinsamen Bildes registriert sind, wobei das mindestens eine Trainings-Ganzkörperbild (104) eines Voxel-basierten Gesundheitszustands ein Ganzkörper-Abweichungsbild umfasst, das auf einem Vergleich zwischen dem medizinischen Ganzkörperbild (101, 102) des entsprechenden zugehörigen Trainingssubjekts (100) und gesammelten Bildinformationen einer Gruppe von Subjekten basiert;
wobei das mindestens eine Ganzkörperbild (204) eines Voxel-basierten Gesundheitszustands ein Ganzkörper-Abweichungsbild umfasst, das auf einem Vergleich zwischen dem medizinischen Ganzkörperbild (101, 102, 101B, 102B) des entsprechenden zugehörigen Trainingssubjekts (100) und gesammelten Bildinformationen eine Gruppe von Subjekten basiert;
wobei die Computerprogrammanweisungen (16) den Prozessor (12) ferner zu Folgendem veranlassen:
- Erhalten medizinischer Ganzkörperbilder (101, 102, 101B, 102B) für die Gruppe von Subjekten;
- Registrieren medizinischer Ganzkörperbilder der medizinischen Ganzkörperbilder (101, 102, 101B, 102B) für die Gruppe von Subjekten auf den gemeinsamen Bildraum durch eine gemeinsame Bildregistrierungsroutine; und
- Erstellen des Ganzkörper-Abweichungsbildes durch das Vergleichen des medizinischen Ganzkörperbildes (201, 202) des zugehörigen Subjekts (200) mit den registrierten medizinischen Ganzkörperbildern (101, 102, 101B, 102B) für die Gruppe von Subjekten;
vi) der Subjekt-Datensatz (209) ist ein Subjekt-Datensatz in einem gemeinsamen Raum eines gemeinsamen Bildes;
wobei die Computerprogrammanweisungen (16), wenn sie durch den Prozessor (12) ausgeführt werden, den Prozessor (12) zum Erzeugen eines registrierten Subjekt-Datensatzes aus mindestens einem medizinischen Ganzkörperbild (221A, 221B, 222A, 222B), das durch die Eingabe (13) erhalten wird, von mindestens zwei nicht gleichzeitigen Instanzen eines zugehörigen Subjekts (200) veranlassen;
wobei die Computerprogrammanweisungen (16), wenn sie durch den Prozessor (12) ausgeführt werde, den Prozessor (12) zum Durchführen einer Registrierung medizinischer Ganzkörperbilder (221A, 221B, 222A, 222B) der mindestens zwei Instanzen auf einen gemeinsamen Bildraum eines gemeinsamen Bildes durch Verwendung einer gemeinsamen Bildregistrierungsroutine veranlassen;
wobei das trainierte neuronale Netzwerk (18, 210) mit Trainingssubjekt-Datensätzen (129A, 129B) von mindestens einem entsprechenden medizinischen Ganzkörperbild (121A, 121B, 122A, 122B) von mindestens zwei nicht gleichzeitigen Instanzen und einer zugeordneten Bildableitung (123A, 123B) eines zugehörigen Subjekts (100) für mindestens eine der mindestens zwei Instanzen für jeden Subjekt-Datensatz (129A, 129B), die auf einen entsprechenden festgelegten gemeinsamen Bildraum registriert sind, trainiert wird;
wobei die gemeinsame Bildregistrierungsroutine mindestens zwei Teilregistrierungsschritte umfasst, wobei bei mindestens einem davon:
Bilder von unterschiedlichen entsprechenden Geweben in den medizinischen Ganzkörperbildern erhalten werden,
eine Teilregistrierung auf den gemeinsamen Raum durchgeführt wird, indem eine gewichtete Kostenfunktion optimiert wird, die eine Korrelation der Bilder entsprechender Gewebe des medizinischen Ganzkörperbildes mit Bildern entsprechender Gewebe des gemeinsamen Bildes sowie eine Korrelation der medizinischen Ganzkörperbilder mit einem medizinischen Ganzkörperbild des gemeinsamen Bildes umfasst, wodurch Verformungsparameter erhalten werden, welche die Teilregistrierung für das medizinische Ganzkörperbild definieren;
wobei die Verformungsparameter von einem Teilregistrierungsschritt, außer einem letzten Teilregistrierungsschritt, bei einem nachfolgenden Teilregistrierungsschritt verwendet werden und wobei die Verformungsparameter des letzten Teilregistrierungsschrittes zum Erstellen abschließender registrierter medizinischer Ganzkörperbilder verwendet werden; und
wobei die Computerprogrammanweisungen (16) den Prozessor (12) ferner zum Betreiben eines trainierten neuronalen Netzwerks (18, 210) mit dem registrierten Subjekt-Datensatz (209) als Eingabedaten veranlassen, was darin resultiert, dass eine Bildableitung (203) bereitgestellt wird;
wobei das trainierte neuronale Netzwerk (18, 210) mit registrierten Trainingssubjekt-Datensätzen (109) von mindestens einem entsprechenden medizinischen Ganzkörperbild (101, 102), einer zugehörigen zugeordneten Bildableitung (103) eines zugehörigen Subjekts (100) und mindestens einem Trainings-Ganzkörperbild (104) eines Voxel-basierten Gesundheitszustands, die alle auf einen festgelegten gemeinsamen Bildraum eines festgelegten gemeinsamen Bildes registriert sind, trainiert wird, wobei das mindestens eine Trainings-Ganzkörperbild (104) eines Voxel-basierten Gesundheitszustands ein Ganzkörper-Abweichungsbild umfasst, das auf einem Vergleich zwischen dem medizinischen Ganzkörperbild (101, 102) des entsprechenden zugehörigen Trainingssubjekts (100) und gesammelten Bildinformationen einer Gruppe von Subjekten basiert.

## Revendications

1. Procédé mis en œuvre par ordinateur pour la préparation d'un outil (11) d'inférence d'images automatisée, comprenant les étapes consistant à :
- fournir (S25) un réseau neuronal (110) à entraîner ;
- obtenir (S26, S30) plusieurs ensembles de données de sujets d'entraînement (109, 129A, 129B), comprenant chacun au moins une image médicale de corps entier (101, 102, 121A, 12B, 122A, 122B) d'un sujet associé (100) et une inférence d'image attribuée (103, 123A, 123B) dudit sujet associé (100) ;
dans lequel ledit procédé comprend en outre au moins un des éléments suivants :
ii) ledit sujet associé étant un sujet d'entraînement (100) dans un espace d'image d'ensemble commun respectif d'une image commune, dans lequel chacun desdits ensembles de données de sujets d'entraînement multiples (109) comprend en outre au moins une image de corps entier (104) de l'état de santé voxel par voxel, associée audit sujet d'entraînement associé (100), enregistrée dans ledit espace d'image d'ensemble commun ;
dans lequel ladite au moins une image de corps entier (104) de l'état de santé voxel par voxel comprend une image de divergence de corps entier basée sur une comparaison entre ladite image médicale de corps entier (101, 102) dudit sujet d'entraînement associé respectif (100) et les informations d'images collectives d'un groupe de sujets ;
dans lequel ladite étape d'obtention (S30) de plusieurs ensembles de données de sujets d'entraînement (109) comprend l'obtention (S32) d'au moins une image de corps entier (104) de l'état de santé voxel par voxel, enregistrée dans ledit espace d'image d'ensemble commun, comprenant à son tour :
- l'obtention (S34) d'images médicales de corps entier (101, 102, 101B, 102B) pour ledit groupe de sujets ;
- l'enregistrement (S36) des images médicales de corps entier desdites images médicales de corps entier (101, 102, 101B, 102B) pour ledit groupe de sujets dans ledit espace d'image d'ensemble commun par une routine d'enregistrement d'images commune ; et
- la création (S38) de ladite image de divergence de corps entier par comparaison de ladite image médicale de corps entier (101, 102) de sujet d'entraînement associé respectif (100) avec lesdites images médicales de corps entier enregistrées pour ledit groupe de sujets ; et
ii) ladites au moins une image médicale de corps entier respectives étant des images médicales de corps entier (121A, 12B, 122A, 122B) d'au moins deux instances ;
dans lequel ladite inférence d'image attribuée est une inférence d'image attribuée pour au moins une desdites au moins deux instances ;
et l'étape suivante :
- l'enregistrement (S27) des images médicales de corps entier (121A, 121B, 122A, 122B) desdites au moins deux instances et de ladite inférence d'image attribuée (123A, 123B) pour chaque sujet (100) dans un espace d'image d'ensemble commun d'une image d'ensemble commune à l'aide d'une routine d'enregistrement d'images commune ;
dans lequel ladite routine d'enregistrement d'images commune comprend au moins deux étapes d'enregistrement partiel, dans au moins une desquelles ;
des images de différents tissus respectifs dans lesdites images médicales de corps entier sont obtenues,
un enregistrement partiel dans ledit espace d'image d'ensemble commun est effectué en optimisant une fonction de coût pondérée comprenant une corrélation desdites images de tissus respectifs desdites images médicales de corps entier avec les images de tissus respectifs de ladite image d'ensemble commune ainsi qu'une corrélation de ladite image médicale de corps entier avec une image médicale de corps entier dudit ensemble d'images communes, en obtenant ainsi des paramètres de déformation définissant ledit enregistrement partiel pour ladite image médicale de corps entier ;
dans lequel lesdits paramètres de déformation d'une étape d'enregistrement partiel, à l'exception d'une dernière étape d'enregistrement partiel, sont utilisés dans une étape d'enregistrement partiel ultérieure et dans lequel lesdits paramètres de déformation de ladite dernière étape d'enregistrement partiel sont utilisés pour créer des images médicales complètes finales enregistrées de corps entier ; et
- l'entraînement (S40) dudit réseau neuronal (110) avec lesdits ensembles de données de sujets d'entraînement (109, 129A, 129B) en un réseau neuronal entraîné (210).

2. Procédé selon la revendication 1, **caractérisé en ce que**
ledit sujet associé étant un sujet d'entraînement (100) dans un espace d'image d'ensemble commun respectif d'une image communes, dans lequel chacun desdits ensembles de données de sujets d'entraînement multiples (109) comprend en outre au moins une image de corps entier (104) de l'état de santé voxel par voxel, associée audit sujet d'entraînement associé (100), enregistrée dans ledit espace d'image d'ensemble commun ;
dans lequel au moins une image de corps entier (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets ;
dans lequel ladite étape d'obtention (S30) de plusieurs ensembles de données de sujets d'entraînement (109) comprend l'obtention (S32) d'au moins une image de corps entier (104) de l'état de santé voxel par voxel enregistrée dans ledit espace d'image d'ensemble commun, comprenant à son tour :
- l'obtention (S34) d'images médicales de corps entier (101, 102, 101B, 102B) pour ledit groupe de sujets ;
- l'enregistrement (S36) des images médicales de corps entier desdites images médicales de corps entier (101, 102, 101B, 102B) pour ledit groupe de sujets dans ledit espace d'image d'ensemble commun par une routine d'enregistrement d'image commune ; et
- la création (S38) de ladite image de divergence de corps entier par comparaison de ladite image médicale de corps entier (101, 102) dudit sujet d'entraînement associé (100) avec lesdites images médicales de corps entier enregistrées pour ledit groupe de sujets.

3. Procédé selon les revendications 1 ou 2, **caractérisé en ce que** ledit espace d'image d'ensemble commun est égal à un espace d'image d'un sujet d'entraînement respectif.

4. Procédé selon les revendications 1 ou 2, **caractérisé en ce que** ladite étape d'obtention (S30) de plusieurs ensembles de données de sujets d'entraînement comprend les étapes suivantes :
- l'obtention d'au moins une image médicale de corps entier respective (101, 102) d'un sujet d'entraînement associé (100) dans un espace d'image de sujet respectif ;
- l'enregistrement d'images médicales de corps entier (101, 102) d'au moins une image médicale de corps entier (101, 102) desdits ensembles de données de sujets d'entraînement (109), se trouvant dans un espace d'image différent de ledit espace d'image d'ensemble commun, dans ledit espace d'image d'ensemble commun au moyen de ladite routine d'enregistrement d'images commune.

5. Procédé selon la revendication 1, **caractérisé en ce que** :
ladites au moins une image médicale de corps entier respectives étant des images médicales de corps entier (121A, 121B, 122A, 122B) d'au moins deux instances ;
dans lequel ladite inférence d'image attribuée est une inférence d'image attribuée pour au moins une desdites au moins deux instances ;
et l'étape suivante :
- l'enregistrement (S27) des images médicales de corps entier (121A, 121B, 122A, 122B) desdites au moins deux instances et de ladite inférence d'image attribuée (123A, 123B) pour chaque sujet (100) dans un espace d'image d'ensemble commun d'une image d'ensemble commune, au moyen d'une routine d'enregistrement d'images commune.

6. Procédé selon les revendications1 ou 5, **caractérisé en ce qu'**il comprend au moins une des étapes suivantes :
ladite inférence d'image attribuée (123A, 123B) est obtenue par intervention humaine ou par des procédés statistiques sur la base de ladite image médicale de corps entier (121A, 121B, 122A, 122B) de l'au moins une des au moins deux instances ; et
chacun desdits ensembles de données de sujets d'entraînement multiples (129A, 129B) comprend une inférence d'image attribuée (123A, 123B) dudit sujet associé pour au moins une autre desdites au moins deux instances étant basées sur une inférence d'image automatique attribuée, déduite d'images médicales de corps entier dudit sujet respectif (100).

7. Procédé implémenté par ordinateur d'inférence d'image automatisée, comprenant les étapes suivantes consistant à :
- fournir (S50, S55) un réseau neuronal entraîné (18, 210) ;
dans lequel ledit réseau neuronal entraîné (18, 210) est entraîné avec des ensembles de données de sujets d'entraînement (109, 129A, 129B) d'au moins une image médicale de corps entier respective (101, 102, 121A, 121B, 122A, 122B), et une inférence d'image attribuée (103, 123A, 123B) d'un sujet associé ;
- l'obtention (S56, S60) d'un ensemble de données de sujet (209, 229A, 229B) d'au moins une image médicale de corps entier (201, 202, 201A, 201B, 202A, 202B) d'un sujet associé (200) ; et
- le fonctionnement (S70) dudit réseau neuronal entraîné (18, 210) avec ledit ensemble de données de sujet (209) comme données d'entrée, ce qui donne lieu à une inférence d'image (203) ;
dans lequel ledit procédé comprend en outre au moins un des éléments suivants :
i) lesdits ensembles de données de sujet d'entraînement comprennent en outre au moins une image de corps entier d'entraînement (104) de l'état de santé voxel par voxel, toutes enregistrées dans un espace d'image d'ensemble commun d'une image d'ensemble commune et dans lequel ladite au moins une image de corps entier d'entraînement (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets ;
dans lequel ledit ensemble de données de sujet (209) est un ensemble de données de sujet comprenant au moins une image médicale de corps entier (201, 202) d'un sujet associé (200) dans un espace d'image commun d'une image commune et au moins une image de corps entier (204) de l'état de santé voxel par voxel, enregistrée dans ledit espace d'image commun ;
dans lequel ladite au moins une image de corps entier (204) de l'état de santé voxel par voxel comprend une image de divergence de corps entier basée sur une comparaison entre ladite image médicale de corps entier (201, 202) dudit sujet associé et les informations d'image collectives d'un groupe de sujets ;
dans lequel ladite étape d'obtention (S60) dudit ensemble de données de sujet (209) comprend l'obtention (S62) d'au moins une image de corps entier (204) de l'état de santé voxel par voxel, enregistrée dans ledit espace d'image commun, comprenant à son tour :
- l'obtention (S34) d'images médicales de corps entier (101, 102, 101B, 102B) pour ledit groupe de sujets ;
- l'enregistrement (S66) des images médicales de corps entier desdites images médicales de corps entier (101, 102, 101B, 102B) pour dudit groupe de sujets dans ledit espace d'image commun au moyen d'une routine d'enregistrement d'images commune ; et
- la création (S68) de ladite image de divergence de corps entier par comparaison de ladite image médicale de corps entier (201, 202) dudit sujet associé (200) avec lesdites images médicales de corps entier enregistrées (101, 102, 101B, 102B) pour ledit groupe de sujets ;
ii) lesdits ensembles de données de sujets d'entraînement sont des ensembles de données de sujets d'entraînement (129A, 129B) d'au moins une image médicale de corps entier respective (121A, 121B, 122A, 122B) d'au moins deux instances non simultanées ;
dans lequel ladite inférence d'image attribuée est une inférence d'image attribuée (123A, 123B) d'un sujet associé (100) pour au moins une desdites instances d'au moins deux pour chaque ensemble de données d'entraînement, enregistrée dans un espace d'image commun respectif ;
dans lequel ledit ensemble de données de sujet est un ensemble de données de sujet (229A, 229B) d'au moins une image médicale de corps entier (201A, 201B, 202A, 202B) d'au moins deux instances non simultanées d'un sujet associé (200) ; et par l'étape supplémentaire suivante :
- l'enregistrement (S57) d'images médicales de corps entier (201A, 201B, 202A, 202B) desdites au moins deux instances dans un espace d'image commun d'une image commune, au moyen d'une routine d'enregistrement d'images commune ;
dans lequel ladite routine d'enregistrement d'images commune comprend au moins deux étapes d'enregistrement partiel, dans au moins une desquelles :
des images de différents tissus respectifs dans lesdites images médicales de corps entier sont obtenues,
un enregistrement partiel dans ledit espace d'image commun est effectué en optimisant une fonction de coût pondérée comprenant une corrélation desdites images de tissus respectifs desdites images médicales de corps entier avec les images de tissus respectifs de ladite image commune ainsi qu'une corrélation de ladite image médicale de corps entier avec une image médicale de corps entier de ladite image commune, en obtenant ainsi des paramètres de déformation définissant ledit enregistrement partiel pour ladite image médicale de corps entier ;
dans lequel lesdits paramètres de déformation d'une étape d'enregistrement partiel, à l'exception d'une dernière étape d'enregistrement partiel, sont utilisés dans une étape d'enregistrement partiel ultérieure et dans lequel lesdits paramètres de déformation de ladite dernière étape d'enregistrement partiel sont utilisés pour créer des images médicales complètes finales enregistrées de corps entier.

8. Procédé selon la revendication 7, **caractérisé en ce que**
lesdits ensembles de données de sujets d'entraînement comprennent en outre au moins une image c de corps entier d'entraînement (104) de l'état de santé voxel par voxel, toutes enregistrées dans un espace d'image d'ensemble commun d'une image d'ensemble commune et dans lequel ladite au moins une image de corps entier d'entraînement (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets ;
dans lequel ledit ensemble de données de sujet (209) est un ensemble de données de sujets comprenant au moins une image médicale de corps entier (201, 202) d'un sujet associé (200) dans un espace d'image commun d'une image commune et au moins une image de corps entier (204) de l'état de santé voxel par voxel enregistrée dans ledit espace d'image commun ;
dans lequel ladite au moins une image de corps entier (204) de l'état de santé voxel par voxel comprend une image de divergence de corps entier basée sur une comparaison entre ladite image médicale de corps entier (201, 202) dudit sujet associé et les informations d'image collectives d'un groupe de sujets ;
dans lequel ladite étape d'obtention (S60) dudit ensemble de données de sujets (209) comprend l'obtention (S62) d'au moins une image de corps entier (204) de l'état de santé voxel par voxel enregistrée dans ledit espace d'image commun, comprenant à son tour :
- l'obtention (S64) d'images médicales de corps entier (101, 102, 101B, 102B) pour ledit groupe de sujets ;
- l'enregistrement (S66) des images médicales de corps entier desdites images médicales de corps entier (101, 102, 101B, 102B) pour ledit groupe de sujets dans ledit espace d'image commun au moyen d'une routine d'enregistrement d'image commune ; et
- la création (S68) de ladite image de divergence de corps entier par comparaison de ladite image médicale de corps entier (201, 202) dudit sujet associé (200) avec lesdites images médicales de corps entier (101, 102, 101B, 102B) enregistrées pour ledit groupe de sujets.

9. Procédé selon les revendications7 ou 8, **caractérisé en ce que** ledit espace d'image commun est égal audit espace d'image de sujet.

10. Procédé selon les revendications 7 ou 8, **caractérisé en ce que** l'étape d'obtention (S60) d'un ensemble de données de sujet (209) comprend les étapes suivantes :
- l'obtention d'au moins une image médicale de corps entier respective (201, 202) dudit sujet associé (200) dans un espace d'image de sujet ;
- l'enregistrement d'images médicales de corps entier (101, 102) d'au moins une image médicale de corps entier (201, 202) dudit ensemble de données de sujet (209), se trouvant dans un espace d'image différent dudit espace d'image commun, dans ledit espace d'image commun au moyen de ladite routine d'enregistrement d'images commune.

11. Procédé selon la revendication 7, **caractérisé en ce que** :
lesdits ensembles de données de sujets d'entraînement sont des ensembles de données de sujets d'entraînement (129A, 129B) d'au moins une image médicale de corps entier respective (121A, 121B, 122A, 122B) d'au moins deux instances non simultanées ;
dans lequel ladite inférence d'image attribuée est une inférence d'image attribuée (123A, 123B) d'un sujet associé (100) pour au moins une desdites instances d'au moins deux pour chaque ensemble de données d'entraînement, enregistrée dans un espace d'image commun respectif;
dans lequel ledit ensemble de données de sujet est un ensemble de données de sujet (229A, 229B) d'au moins une image médicale de corps entier (201A, 201B, 202A, 202B) d'au moins deux instances non simultanées d'un sujet associé (200) ; et par l'étape supplémentaire de :
- l'enregistrement (S57) des images médicales de corps entier (201A, 201B, 202A, 202B) desdites au moins deux instances dans un espace d'image commun d'une image commune à l'aide d'une routine d'enregistrement d'images commune.

12. Procédé selon un quelconque des revendications 1 à 4, 7 à 10, **caractérisé en ce qu'**il comprend l'étape supplémentaire de création de ladite image de divergence de corps entier.

13. Procédé selon un quelconque des revendications 1 à 12, **caractérisé en ce que** ladite inférence d'image comprend au moins une des opérations suivantes :
segmentation ;
classification ;
régression ; et
enregistrement d'images combiné à une segmentation d'images.

14. Outil (11) d'inférence d'images automatisée, comprenant :
- un processeur (12) ;
- une entrée (13) pour les ensembles de données de sujets (209) ;
- une sortie (14) pour l'inférence d'images de sujets (203) ; et
- des instructions de programme informatique (16) ;
moyennant quoi lesdites instructions de programme informatique (16), lorsqu'elles sont exécutées par ledit processeur (12), amènent ledit processeur (12) à former un ensemble de données de sujet enregistré (209) sur la base d'un ensemble de données de sujet d'au moins une image médicale de corps entier (201, 202) ;
moyennant quoi lesdites instructions de programme informatique (16), lorsqu'elles sont exécutées par ledit processeur (12), amènent en outre ledit processeur (12) à faire fonctionner un réseau neuronal entraîné (18, 210) avec ledit ensemble de données de sujet enregistré (209) comme données d'entrée, ce qui a pour résultat la fourniture d'une inférence d'image (203) à ladite sortie (14) ;
dans lequel ledit réseau neuronal entraîné (18, 210) est entraîné avec des ensembles de données de sujet d'entraînement enregistrés (109) d'au moins une image médicale de corps entier respective (101, 102), une inférence d'image attribuée associée (103) d'un sujet associé (100) ;
moyennant quoi lesdites instructions de programme informatique (16), lorsqu'elles sont exécutées par ledit processeur (12), amènent en outre ledit processeur (12) à faire fonctionner un réseau neuronal entraîné (18, 210) avec ledit ensemble de données de sujet enregistré (209) comme données d'entrée, ce qui a pour résultat la fourniture d'une inférence d'image (203) à ladite sortie (14) ;
dans lequel lesdites instructions de programme informatique (16), lorsqu'elles sont exécutées par ledit processeur (12), entraînent en outre au moins une des actions suivantes :
iv) ledit ensemble de données de sujet (209) est un ensemble de données de sujet dans un espace commun d'une image commune ;
ledit ensemble de données de sujet comprend au moins une image de corps entier (204) de l'état de santé voxel par voxel obtenue par ladite entrée (13), dans un espace commun d'une image commune ;
lesdits ensembles de données de sujet d'entraînement comprennent en outre au moins une image de corps entier d'entraînement (104) de l'état de santé voxel par voxel, toutes enregistrées dans un espace d'image d'ensemble commun d'une image d'ensemble commune, où ladite au moins une image de corps entier d'entraînement (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets ;
dans lequel ladite au moins une image de corps entier (204) de l'état de santé voxel par voxel comprend une image de divergence de corps entier basée sur une comparaison entre ladite image médicale de corps entier (201, 202) dudit sujet associé (200) et les informations d'image collectives d'un groupe de sujets ;
moyennant quoi lesdites instructions de programme informatique (16), lorsqu'elles sont exécutées par ledit processeur (12), amènent ledit processeur (12) à :
- obtenir des images médicales de corps entier (101, 102, 101B, 102B) pour ledit groupe de sujets ;
- enregistrer les images médicales de corps entier desdites images médicales de corps entier (101, 102, 101B, 102B) pour ledit groupe de sujets dans ledit espace d'image commun par une routine d'enregistrement d'images commune ; et
- créer ladite image de divergence de corps entier en comparant ladite image médicale de corps entier (201, 202) dudit sujet associé (200) avec lesdites images médicales de corps entier enregistrées (101, 102, 101B, 102B) pour ledit groupe de sujets ;
v) ledit ensemble de données de sujet (209) est un ensemble de données de sujet dans un espace commun d'une image commune ;
moyennant quoi lesdites instructions de programme informatique (16), lorsqu'elles sont exécutées par ledit processeur (12), amènent ledit processeur (12) à former un ensemble de données de sujet enregistré sur la base d'au moins une image médicale de corps entier (221A, 221B, 222A, 222B), obtenue par ladite entrée (13), d'au moins deux instances non simultanées d'un sujet associé (200) ;
moyennant quoi lesdites instructions de programme informatique (16), lorsqu'elles sont exécutées par ledit processeur (12), amènent ledit processeur (12) à effectuer un enregistrement des images médicales de corps entier (221A, 221B, 222A, 222B) desdites au moins deux instances dans un espace d'image commun d'une image commune au moyen d'une routine d'enregistrement d'image commune ;
dans lequel ledit réseau neuronal entraîné (18, 210) est entraîné avec des ensembles de données de sujets d'entraînement (129A, 129B) d'au moins une image médicale de corps entier respective (121A, 121B, 122A, 122B) d'au moins deux instances non simultanées et une inférence d'image attribuée (123A, 123B) d'un sujet associé (100) pour au moins une desdites au moins deux instances pour chaque ensemble de données de sujet (129A, 129B), enregistrées dans un espace d'image commun respectif ;
dans lequel ladite routine d'enregistrement d'image commune comprend au moins deux étapes d'enregistrement partiel, dans au moins une desquelles :
des images de différents tissus respectifs dans lesdites images médicales de corps entier sont obtenues,
un enregistrement partiel dans ledit espace d'image commun est effectué en optimisant une fonction de coût pondérée comprenant une corrélation desdites images de tissus respectifs desdites images médicales de corps entier avec les images de tissus respectifs de ladite image commune ainsi qu'une corrélation de ladite image médicale de corps entier avec une image médicale de corps entier de ladite image commune, en obtenant ainsi des paramètres de déformation définissant ledit enregistrement partiel pour ladite image médicale de corps entier ;
dans lequel lesdits paramètres de déformation d'une étape d'enregistrement partiel, à l'exception d'une dernière étape d'enregistrement partiel, sont utilisés dans une étape d'enregistrement partiel ultérieure et dans lequel lesdits paramètres de déformation de ladite dernière étape d'enregistrement partiel sont utilisés pour créer des images médicales complètes finales enregistrées de corps entier ; et
moyennant quoi lesdites instructions de programme informatique (16), lorsqu'elles sont exécutées par ledit processeur (12), amènent en outre ledit processeur (12) à faire fonctionner un réseau neuronal entraîné (18, 210) avec ledit ensemble de données de sujet enregistré (209) comme données d'entrée, ce qui a pour résultat de fournir une inférence d'image (203) à ladite sortie (14) ;
dans lequel ledit réseau neuronal entraîné (18, 210) est entraîné avec des ensembles de données de sujets d'entraînement enregistrés (109) d'au moins une image médicale de corps entier respective (101, 102), une inférence d'image attribuée associée (103) d'un sujet associé (100) et au moins une image de corps entier d'entraînement (104) de l'état de santé voxel par voxel, le tout enregistré dans un espace d'image d'ensemble commun d'une image d'ensemble commune, où ladite au moins une image de corps entier d'entraînement (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets.

15. Instructions de programme informatique (16) qui, lorsqu'elles sont exécutées par un processeur (12), amènent ledit processeur (12) à former un ensemble de données de sujet enregistré (209) d'un ensemble de données de sujet obtenu, constitué d'au moins une image médicale de corps entier (201, 202) ;
moyennant quoi lesdites instructions de programme informatique (16), lorsqu'elles sont exécutées par ledit processeur (12), amènent également ledit processeur (12) à faire fonctionner un réseau neuronal entraîné (18, 210) avec ledit ensemble de données de sujet enregistré (209) comme données d'entrée, ce qui permet de fournir une inférence d'image (203) à ladite sortie (14) ;
dans lequel ledit réseau neuronal entraîné (18, 210) est entraîné avec des ensembles de données de sujets d'entraînement enregistrés (109) d'au moins une image médicale de corps entier respective (101, 102), une inférence d'image attribuée associée (103) d'un sujet associé (100) ;
moyennant quoi lesdites instructions de programme informatique (16), lorsqu'elles sont exécutées par ledit processeur (12), amènent en outre ledit processeur (12) à faire fonctionner un réseau neuronal entraîné (18, 210) avec ledit ensemble de données de sujets enregistré (209) comme données d'entrée, ce qui a pour résultat de fournir une inférence d'image (203) à ladite sortie (14) ;
dans lequel lesdites instructions de programme informatique (16), lorsqu'elles sont exécutées par ledit processeur (12), amènent en outre au moins une des étapes suivantes :
ii) ledit ensemble de données de sujet (209) est un ensemble de données de sujet dans un espace commun d'une image commune ;
ledit ensemble de données de sujet comprenant au moins une image de corps entier (204) de l'état de santé voxel par voxel, dans un espace d'image commun ;
lesdits ensembles de données de sujet d'entraînement comprennent en outre au moins une images de corps entier d'entraînement (104) de l'état de santé voxel par voxel, toutes enregistrées dans un espace d'image d'ensemble commun d'une image d'ensemble commune, où ladite au moins une image de corps entier d'entraînement (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets ;
dans lequel ladite au moins une image de corps entier (204) de l'état de santé voxel par voxel comprend une image de divergence de corps entier basée sur une comparaison entre ladite image médicale de corps entier (101, 102, 101B, 102B) dudit sujet d'entraînement associé (100) et les informations d'images collective d'un groupe de sujets ;
dans lequel lesdits instructions de programme informatique (16) amènent en outre ledit processeur (12) à :
- obtenir des images médicales de corps entier (101, 102, 101B, 102B) pour ledit groupe de sujets ;
- enregistrer les images médicales de corps entier desdites images médicales de corps entier (101, 102, 101B, 102B) pour ledit groupe de sujets dans ledit espace d'image commun par une routine d'enregistrement d'images commune ; et
- créer ladite image de divergence de corps entier en comparant ladite image médicale de corps entier (201, 202) dudit sujet associé (200) avec lesdites images médicales de corps entier enregistrées (101, 102, 101B, 102B) pour ledit groupe de sujets ;
vi) ledit ensemble de données de sujet (209) est un ensemble de données de sujet dans un espace commun d'une image commune ;
moyennant quoi lesdites instructions de programme informatique (16), lorsqu'elles sont exécutées par ledit processeur (12), amènent ledit processeur (12) à former un ensemble de données de sujet enregistré sur la base d'au moins une image médicale de corps entier (221A, 221B, 222A, 222B), obtenue par ladite entrée (13), d'au moins deux instances non simultanées d'un sujet associé (200) ;
moyennant quoi lesdites instructions de programme informatique (16), lorsqu'elles sont exécutées par ledit processeur (12), amènent ledit processeur (12) à effectuer un enregistrement des images médicales de corps entier (221A, 221B, 222A, 222B) desdites au moins deux instances dans un espace d'image commun d'une image commune au moyen d'une routine d'enregistrement d'image commune ;
dans lequel ledit réseau neuronal entraîné (18, 210) est entraîné avec des ensembles de données de sujets d'entraînement (129A, 129B) d'au moins une image médicale de corps entier respective (121A, 121B, 122A, 122B) d'au moins deux, instances non simultanées et une inférence d'image attribuée (123A, 123B) d'un sujet associé (100) pour au moins une desdites au moins deux instances pour chaque ensemble de données de sujet (129A, 129B), enregistrées dans un espace d'image commun respectif ;
dans lequel ladite routine d'enregistrement d'image commune comprend au moins deux étapes d'enregistrement partiel, dans au moins une desquelles :
des images de différents tissus respectifs dans lesdites images médicales de corps entier sont obtenues,
un enregistrement partiel dans ledit espace d'image commun est effectué en optimisant une fonction de coût pondérée comprenant une corrélation desdites images de tissus respectifs desdites images médicales de corps entier avec les images de tissus respectifs de ladite image commune ainsi qu'une corrélation de ladite image médicale de corps entier avec une image médicale de corps entier de ladite image commune, en obtenant ainsi des paramètres de déformation définissant ledit enregistrement partiel pour ladite image médicale de corps entier ;
dans lequel lesdits paramètres de déformation d'une étape d'enregistrement partiel, à l'exception d'une dernière étape d'enregistrement partiel, sont utilisés dans une étape d'enregistrement partiel ultérieure et dans lequel lesdits paramètres de déformation de ladite dernière étape d'enregistrement partiel sont utilisés pour créer des images médicales complètes finales enregistrées de corps entier et
moyennant quoi lesdites instructions de programme informatique (16), lorsqu'elles sont exécutées par ledit processeur (12), amènent en outre ledit processeur (12) à faire fonctionner un réseau neuronal entraîné (18, 210) avec ledit ensemble de données de sujet enregistré (209) comme données d'entrée, ce qui a pour résultat de fournir une inférence d'image (203) ;
dans lequel ledit réseau neuronal entraîné (18, 210) est entraîné avec des ensembles de données de sujets d'entraînement enregistrés (109) d'au moins une image médicale de corps entier respective (101, 102), une inférence d'image attribuée associée (103) d'un sujet associé (100) et au moins une image de corps entier d'entraînement (104) de l'état de santé voxel par voxel, le tout enregistré dans un espace d'image d'ensemble commun d'une image d'ensemble commune, où ladite au moins une image de corps entier d'entraînement (104) de l'état de santé voxel par voxel comprend une image de divergence de corps entier basée sur une comparaison entre ladite image médicale de corps entier (101, 102) dudit sujet d'entraînement associé respectif (100) et les informations d'image collectives d'un groupe de sujets.
